# EUROPÄISCHE PATENTANMELDUNG

(11) **EP 4 685 043 A1**
(43) Veröffentlichungstag der Anmeldung: **28.01.2026**
(21) Anmeldenummer: 25183232.5
(22) Anmeldetag: 29.06.2022
(51) Int. Cl.: B62M 9/125, B62M 9/122

(54) **MODULARES FAHRRAD-SCHALTWERK**

(30) Priorität: 29.06.2021 DE 102021003319; 22.06.2022 DE 102022115599
(62) Teilanmeldung aus: 22020304.6
(71) Anmelder: SRAM Deutschland GmbH, 97424 Schweinfurt (DE)
(72) Erfinder: Weiss, Martin, 97424 Schweinfurt (DE)

(57) **Zusammenfassung**

Die Erfindung betrifft zwei Aspekte einer Motor-Getriebeeinheit (AG) für ein elektrisches Fahrrad-Schaltwerk (RD) mit einem Basiselement (KB). Die Aspekte sind funktional komplementär und wirken zusammen im Hinblick auf eine toleranzarme und spielfreie Befestigung der Motor-Getriebeeinheit und deren Batterieeinheit (UB).

Der erste Aspekt betrifft eine Motor-Getriebeeinheit mit einem Gehäuse (SH1, SH2). Das Gehäuse ist bezüglich seiner 6 räumlichen Bewegungsfreiheitsgrade über genau eine rotatorische Achsverbindung (CR) und zwei translatorische Anschlagsverbindungen (CT1, CT2) mit dem Basiselement verbindbar. Hierdurch wird die Position der Motor-Getriebeeinheit im Basiselement festgelegt, ohne geometrische bzw. toleranzbezogene Unter- oder Überbestimmungen zu verursachen.

Der zweite Aspekt betrifft eine Motor-Getriebeeinheit mit einer Verrastungsanordnung zur Befestigung einer Batterieeinheit. Ein Rasthebel (LL) der Verrastungsanordnung ist unter longitudinalem Spiel (AL, HO) schwenkbar an dem Basiselement anordenbar. Eine von dem Rasthebel erzeugte elastische Spannkraft (FE) wirkt entlang eines geschlossenen Kraftpfads über die Batterieeinheit und das Gehäuse. Das Basiselement ist ausdrücklich nicht Teil des Kraftpfads, um eine minimierte Toleranzkette zu erreichen.

## Beschreibung

### Gebiet der Erfindung

Die vorliegende Offenbarung betrifft ein Fahrrad-Schaltwerk sowie eine Motor-Getriebeeinheit für ein Fahrrad-Schaltwerk.

Sofern nicht ausdrücklich anders angegeben, entsprechen in der vorliegenden Offenbarung verwendete Orts- bzw. Richtungsangaben wie "links", "rechts", "vorne", "hinten", "oben", "unten" usw. der Perspektive des Fahrers eines Fahrrads. Entsprechendes gilt für branchenübliche Richtungsangaben wie "inboard" (links bzw. nach links bzw. in Richtung zu einem größeren Ritzel einer Ritzelkassette) und "outboard" (rechts bzw. nach rechts bzw. in Richtung zu einem kleineren Ritzel einer Ritzelkassette), welche sich auf Schaltvorgänge bzw. Richtungen oder Ritzelpositionen an einer Ritzelkassette eines Fahrrad-Hinterrads beziehen.

### Technischer Hintergrund

Ein Fahrrad ist üblicherweise mit einer Antriebsanordnung ausgestattet, beispielsweise mit einem Kettenantrieb. Derartige Fahrrad-Antriebsanordnungen werden eingesetzt, um ein Antriebsdrehmoment von einem Fahrer auf ein hinteres Laufrad zu übertragen und um das Fahrrad auf diese Weise anzutreiben. Eine derartige Antriebsanordnung kann zum Beispiel das Drehmoment von einer vorderen Kettenradanordnung über eine Kette auf ein hinteres Ritzel übertragen, etwa ein Ritzel einer Mehrgang-Ritzelkassette, also eines sog. Ritzelpakets, um das hintere Laufrad anzutreiben. Eine solche Antriebsanordnung wird üblicherweise als Fahrrad-Antriebsstrang bezeichnet.

Vordere Kettenradanordnungen für Fahrräder können eines oder mehrere Kettenräder aufweisen, die in der Branche auch als Kettenblätter bezeichnet werden. Kettenblätter können mit Hilfe verschiedenartiger Befestigungsvorrichtungen am Fahrrad befestigt werden. Ein Kettenblatt kann z.B. mit Kettenblattschrauben befestigt oder direkt mit der rechten Kurbel eines Fahrrads verbunden sein. Die hinteren Kettenräder am Fahrrad werden üblicherweise als Ritzel bezeichnet. Eine Mehrzahl von hinteren Kettenrädern oder Ritzeln kann als Kassette, Ritzelkassette oder Ritzelpaket bezeichnet werden. Eine solche Ritzelkassette ist typischerweise so konfiguriert, dass sie an einem Freilaufteil eines hinteren Laufrades befestigt werden kann. Eine Ritzelkassette kann hierzu an einem Freilaufkörper eines Hinterrades beispielsweise mit Hilfe einer Nutverbindung und/oder Gewindeverbindung befestigt werden.

Die horizontale Ausrichtung eines vorderen Kettenblattes mit einer hinteren Ritzelkassette beeinflusst die Leistung des Antriebsstrangs. Zum Beispiel kann eine vordere Kettenradanordnung ein einziges Kettenblatt aufweisen, welches auf ein bestimmtes Ritzel der hinteren Ritzelkassette ausgerichtet ist. Wenn die Kette das einzelne Kettenblatt mit diesem im Wesentlichen ausgerichteten hinteren Ritzel verbindet, steht die Kette unter geringer oder keiner seitlichen Belastung. Wenn die Kette jedoch seitlich zu einem anderen Ritzel der Kassette bewegt wird, z.B. durch einen hinteren Umwerfer oder ein hinteres Schaltwerk einer Kettenschaltung des Antriebsstrangs, erfährt die Kette eine gewisse seitliche Belastung. Entsprechende seitliche Belastungen der Kette treten auf, wenn die vordere Kettenradanordnung mehrere Kettenblätter aufweist, zwischen denen die Kette durch einen vorderen Umwerfer oder ein vorderes Schaltwerk der Kettenschaltung seitwärts bewegt werden kann.

Für eine gute Leistung einer derartigen Kettenschaltung ist u.a. auch eine richtige Positionierung und Ausrichtung speziell des hinteren Schaltwerks am Rahmen des Fahrrads von großer Bedeutung.

Diesbezüglich wurde erkannt, dass bei einem hinteren Fahrrad-Schaltwerk koaxiale Merkmale der Ausrichtung des Schaltwerks bezüglich des Hinterrads angewendet werden können. Insbesondere können dabei Komponenten des Hinterrads, insbesondere der Hinterradnabe, als direkte Referenz für die Montage und Ausrichtung des Schaltwerks dienen.

Insbesondere können hierbei sowohl Schaltwerk als auch Ritzelkassette radial und axial zueinander sowie gleichzeitig zu einer Hinterachse des Fahrrads ausgerichtet sein. Auf diese Weise können Ungenauigkeiten, die aufgrund von Toleranzvariationen und Toleranzketten unter anderem des Hinterbaurahmens, des bei konventionellen hinteren Fahrradschaltwerken erforderlichen sog. Schaltwerks-Hangers und des Schaltwerks auftreten, maßgeblich reduziert werden.

### Stand der Technik

Herkömmlich werden hintere Fahrrad-Schaltwerke am rechten Ausfallende des Rahmens bzw. am Endbereich der rechten Kettenstrebe mit Hilfe eines gegenüber dem Rahmen gesonderten oder zum Rahmen zugehörigen Schaltauges oder sog. Schaltwerks-Hangers montiert, und zwar, mittels des Schaltauges bzw. Schaltwerks-Hangers, in radialer Richtung versetzt gegenüber der Hinterradachse des Fahrrads, und damit nicht-koaxial in Bezug auf die Hinterradachse.

Hierbei haben sich separat bereitgestellte und als Zusatzteil montierte Schaltwerkshanger sich vor allem bei Fahrradrahmen aus Carbon oder Aluminium durchgesetzt, da diese Anordnung den Austausch des Hangers im Fall von Beschädigungen ermöglicht. Bei Fahrradrahmen aus Stahl wird das Schaltauge häufig auch einteilig bzw. einstückig als Teil des Hinterbaurahmens bzw. des Ausfallendes ausgeführt.

Neben den konstruktiven Vorteilen bei Leichtbaurahmen haben sich austauschbare Schaltwerkshanger vor allem deshalb durchgesetzt, da es bei herkömmlichen Fahrrad-Schaltwerken im Fall von Stürzen, Verklemmungen der Kette oder Kollisionen des Schaltwerks mit Hindernissen oft zu Schäden kommt. In vielen Fällen reduziert sich dabei der Schaden in Form von Verbiegungen auf den Schaltwerkshanger, ohne dass Rahmen oder Schaltwerk beschädigt werden und somit repariert oder getauscht werden müssten. Diesem gewissen Vorteil steht jedoch eine Reihe von Nachteilen entgegen.

So muss bei abgerissenem bzw. stark verbogenem Hanger dieser vollständig ausgetauscht werden. Die Weiterfahrt ist daher in einem solchen Fall zumeist nicht möglich. Bei diesem Schadensfall kann sich der Hanger auch derart verformen, dass das Schaltwerk von den Speichen des Laufrades erfasst wird. Dies kann zu erheblichen Folgeschäden im Antriebsstrang, am Laufrad oder am Rahmen führen, und ist auch für den Fahrer nicht ungefährlich, beispielsweise im Fall eines dadurch ausgelösten Blockierens des Hinterrades.

Derartige Schaltwerkshanger werden zur Montage am Fahrrad an einem Ende des Schaltwerkshangers im Bereich der Hinterachse am Ausfallende des Hinterbaurahmens festgelegt, und am anderen Ende des Schaltwerkshangers mit einem Basiselement (in der Branche auch als B-Knuckle bezeichnet) des Fahrradschaltwerks verbunden. Das Basiselement des Schaltwerks ist dabei üblicherweise relativ zum Schaltauge bzw. Schaltwerkshanger um die sog. B-Achse des Basiselements drehbar, welche parallel zur Hinterradachse, jedoch zu dieser radial verschoben angeordnet ist.

Diese bekannten Schaltwerkshanger unterscheiden sich je nach Hersteller und Anbringungsart stark voneinander. Sie können einteilig mit dem Rahmen ausgebildet sein oder als separates Bauteil vorliegen. Separate Schaltaugen werden entweder über Schnellspannachsen oder über Steckachsen am Rahmen geklemmt, oder eigens mit dem Ausfallende verschraubt oder vernietet. Ferner können derartige Schaltaugen oder Schaltwerkshanger entweder auf der Rahmenaußenseite oder auf der Rahmeninnenseite mit dem Rahmen verbunden werden.

In Fachkreisen ist es bekannt, dass der Fahrradmarkt hunderte verschiedene und miteinander nicht kompatible Schaltwerkshanger allein für die jeweils aktuellen Fahrradmodelle umfasst.

Dies führt dazu, dass das Fahrradschaltwerk je nach verwendetem Rahmen und Schaltauge eine andere Position in Radialrichtung relativ zur Hinterradachse und ebenso in axialer Richtung relativ zum Ritzelpaket einnimmt. Derartige Positionsunterschiede sowohl in axialer als auch in radialer Richtung verkomplizieren die Schaltwerksauslegung ebenso wie die Montage und Einstellung des Schaltwerks. Das Schaltwerk muss je nach Rahmen und Schaltauge anders eingestellt werden.

Mit derartigen bekannten Schaltaugen bzw. Schaltwerkshangern ergeben sich erhebliche zusätzliche Toleranzen in der Maßkette zwischen Ritzelpaket und Schaltwerksposition, die sich negativ auf die Positionierungsgenauigkeit des Schaltwerks auswirken. Zudem ist sowohl die radiale als auch die axiale Position des Schaltwerks von der Fertigungsqualität und vom aktuellen Zustand des Schaltwerkshangers ebenso wie des Hinterbaurahmens abhängig.

Mit anderen Worten überträgt sich jede Ungenauigkeit sowohl des Hinterbaurahmens als auch des Schaltwerkshangers bzw. des Rahmen-Schaltauges in erheblichem Maße auf die Positionierung und Ausrichtung des Schaltwerks relativ zur Ritzelkassette.

Außerdem sind Schaltaugen bzw. Schaltwerkshanger, gerade als separate Bauteile, schadensanfällig und oftmals instabil. Bei großen Ritzelpaketen und entsprechend großen Schaltwerksdimensionen treten erhöhte Hebelkräfte auf, die von einem austauschbaren Schaltauge nur ungenügend aufgenommen werden können.

Weiterhin ist die strukturelle Stabilität der meisten Schaltwerkshanger oder Schaltaugen den heute auftretenden Anforderungen im Fahrbetrieb nicht mehr gewachsen. Schon der im Normalbetrieb auftretende Kettenzug kann zu einer elastischen Verformung eines Schaltwerkshangers in einer Größenordnung führen, welche die Positionierungsgenauigkeit des Schaltwerks gegenüber den Ritzeln beeinträchtigt. Schon bei kleinen Stürzen oder einfachem Umkippen des Fahrrads kommt es häufig zu plastischer Verformung des Schaltwerkshangers oder des am Rahmen angeformten Schaltauges.

Auch ist der Schaltwerkshanger ein zusätzliches Bauteil, das vom Rahmenhersteller individuell entwickelt wird. Oft werden vom gleichen Hersteller verschiedene Hanger sogar für denselben Fahrradrahmen eingesetzt, um diesen für den jeweiligen Anwendungsfall optimieren zu können. Dies bedeutet zusätzlichen Kosten- und Entwicklungsaufwand und erzeugt Unklarheit im Markt sowie beim Endverbraucher.

Diese angesprochenen Nachteile der herkömmlichen Schaltwerksmontage sind im Wesentlichen seit der Einführung austauschbarer Schaltwerkshanger bekannt. Die beschriebene Problematik wird aktuell jedoch durch den Trend hin zu größeren Kassetten mit immer mehr Gängen weiter verstärkt. Hierdurch entstehen einerseits aufgrund entsprechend größerer Schaltwerksdimensionen auch höhere Hebelkräfte am Schaltwerkshanger. Als zusätzlicher Einflussfaktor sind die durch die Käfigdämpfer moderner Schaltwerke erhöhten Spannungsspitzen im Antriebsstrang zu nennen. Die insgesamt längeren Hebelverhältnisse wirken sich damit zusätzlich negativ auf die Positionierungsgenauigkeit der Schaltung gegenüber der Ritzelkassette aus. Die Erhöhung der Gangzahl dagegen erfordert umgekehrt sogar eine steigende Positionierungsgenauigkeit.

Im Hinblick auf diese und andere Nachteile der herkömmlichen Montage des hinteren Schaltwerks am Rahmen hat die Anmelderin bereits einen neuen Typ eines hinteren Fahrradschaltwerks entwickelt, welches direkt in Bezug auf die Hinterradachse und ohne Schaltwerkshanger unmittelbar koaxial zu Hinterachse an einem entsprechend ausgestalteten Fahrradrahmen befestigt wird.

Zur Verbindung mit diesem neuartigen Fahrradschaltwerk weist der Fahrradrahmen eine spezielle Schnittstelle auf, die zugleich, unter Mitwirkung einer Adapter-Bolzeneinrichtung des hinteren Schaltwerks, als Schnittstelle zur Verbindung zwischen Rahmen und Hinterachsanordnung dient. Hierbei wird das auch als B-Knuckle bekannte Basiselement des Schaltwerks relativ zum Ritzelpaket nicht mehr über die oben beschriebene, bezüglich der Toleranzen höchst problematische Maßkette vom Ritzelpaket über die Hinterachse auf den Rahmen und von dort über den Schaltwerkshanger auf die Schaltwerksposition referenziert. Vielmehr erfolgt die maßliche Referenzierung zwischen Schaltwerk und Ritzelpaket, sowohl axial als auch radial bezogen auf die Hinterachse bzw. auf das Ritzelpaket, mittels direkten Kontakts zwischen dem B-Knuckle des Schaltwerks und der Nabenendkappe der Hinterradnabe.

Hierdurch wird nächst einmal eine sehr hohe Positionierungsgenauigkeit zwischen Schaltwerk und Nabenendkappe und damit auch zur Ritzelkassette erreicht. Im Vergleich zur Schaltwerksmontage an einem Schaltwerkshanger bzw. Schaltauge können damit erheblich kleinere Positionierungstoleranzen des Schaltwerks relativ zur Ritzelkassette mit hoher Wiederholgenauigkeit erzielt werden.

Des Weiteren ergibt sich hierdurch eine vereinfachte und herstellerübergreifend vereinheitlichte Schnittstelle zwischen Schaltwerk und Fahrradrahmen. Die Notwendigkeit für einen Schaltwerkshanger und die damit verbunden Toleranzen und Unwägbarkeiten, sowie sämtliche sonstigen vorstehend beschriebenen Nachteile entfallen.

Es wird diesbezüglich auf die als DE102018001253A1 veröffentlichte Deutsche Patentanmeldung, die als EP3388324A2 veröffentlichte Europäische Patentanmeldung, die als TW201834921A veröffentlichte Taiwanesische Patentanmeldung, das als CN108622302B erteilte chinesische Patent und das als US10870464B2 erteilte US-Patent verwiesen, die auf die Anmelderin zurückgehen. Die Offenbarung dieser Anmeldungen bzw. Patentschriften wird durch Bezugnahme in die Offenbarung der vorliegenden Patentanmeldung eingeschlossen.

Aus diesen Druckschriften ist ein hinteres Schaltwerk zur in Bezug auf eine Hinterradachse koaxialen Montage an einem Fahrradrahmen eines Fahrrads bekannt.

### Kurzfassung

Das Schaltwerk gemäß der vorliegenden Offenbarung weist gattungsgemäß ein B-Knuckle bzw. Basiselement, ein Schaltparallelogramm bzw. eine Schwenkanordnung, ein bewegliches P-Knuckle bzw. Schaltungselement sowie einen Kettenkäfig bzw. eine Kettenführungseinrichtung auf.

Die Schwenkanordnung verbindet das Schaltungselement translatorisch schwenkbar mit dem Basiselement. Die Kettenführungsanordnung ist um eine Drehachse rotatorisch schwenkbar mit dem Schaltungselement verbunden. Das Basiselement umfasst ein erstes Anschlussende zur in Bezug auf die Hinterradachse koaxialen Montage an dem Fahrradrahmen und ein zweites Anschlussende zur Kopplung mit der Schwenkanordnung.

Das erste Anschlussende des Basiselements weist einen ersten Arm und einen zweiten Arm auf, die in axialer Richtung, bezogen auf die Hinterradachse, voneinander beabstandet angeordnet und zur Montage des Schaltwerks an einem zugeordneten Halterungsabschnitt (Ausfallende oder Rahmenauge) eines Hinterbaus eines Fahrradrahmens eingerichtet sind.

Ein derartiges Fahrradschaltwerk, welches mit dem Oberbegriff von Patentanspruch 1 der vorliegenden Offenbarung übereinstimmt, ist ferner auch aus den auf die Anmelderin zurückgehenden Druckschriften DE102018206104A1, EP3556643A1, CN110386220A und US2019/ 0322333A1 bekannt, deren Offenbarung ebenfalls durch Bezugnahme in die Offenbarung der vorliegenden Patentanmeldung eingeschlossen wird.

Die nachfolgende Beschreibung der Erfindung greift auf die in der Druckschrift EP3388324A2 geprägten Definitionen, Zusammenhänge und Begrifflichkeiten zurück, und der Inhalt dieser Druckschrift ist auch diesbezüglich ausdrücklich Bestandteil der vorliegenden Erfindungsbeschreibung.

Eine Entwicklung, die auch im Fahrradmarkt eine zunehmende Rolle spielt, ist die angestrebte Reduktion des Ressourcenverbrauchs im Konsumbereich sowie bei der Produktion und im Einsatz technischer Produkte. Diese Reduktion des Ressourcenverbrauchs wird sowohl vom Verbraucher als auch von Gesellschaft und Gesetzgeber zunehmend gefordert. Die gesellschaftliche und gesetzgeberische Entwicklung weist dabei weg von einer in der Vergangenheit oft gesehenen Wegwerfmentalität, und stellt steigende Anforderungen an die Lebensdauer und insbesondere an die Reparierbarkeit technischer Produkte.

### Aufgabe der Erfindung

Ausgehend von dem vorstehend beschriebenen Stand der Technik ist es die Aufgabe der vorliegenden Erfindung, ein Fahrrad-Schaltwerk sowie eine Motor-Getriebeeinheit für ein elektrisches Fahrradschaltwerk bereitzustellen, mit denen sich die vorstehend beschriebenen Nachteile überwinden lassen.

Hiermit sollen - neben den mit der eingangs beschriebenen, koaxialen Montage erreichten Vorteilen gegenüber konventionell montierten Schaltwerken - sowohl dem Handel als auch dem Endverbraucher erheblich verbesserte Möglichkeiten zur Reparatur bzw. zum Austausch defekter oder abgenutzter Einzelteile ermöglicht werden, und es soll ein maßgeblicher Beitrag zur Reduktion des Verbrauchs an natürlichen Ressourcen erbracht werden.

### Erfindungsbeschreibung

Diese Aufgabe wird durch ein Fahrradschaltwerk zur hinterachs-koaxialen Direktmontage an einem Rahmenauge eines Fahrrad-Hinterbaurahmens bzw. durch eine Motor-Getriebeeinheit für ein Fahrradschaltwerk gemäß der vorliegenden Offenbarung gelöst.

Gattungsgemäß umfasst das Fahrradschaltwerk zunächst ein in sich starres Basiselement (starr in dem Sinne, dass das Basiselement nicht mehrere gegeneinander gelenkig bewegliche Baugruppen enthält) mit einem eine innere Schwenkverbindung aufweisenden inneren Befestigungsarm zur inboardseitigen Anordnung im Bereich des Rahmenauges und mit einem äußeren Befestigungsarm mit einer zur inneren Schwenkverbindung koaxialen äußeren Schwenkverbindung zur outboardseitigen Anordnung im Bereich des Rahmenauges.

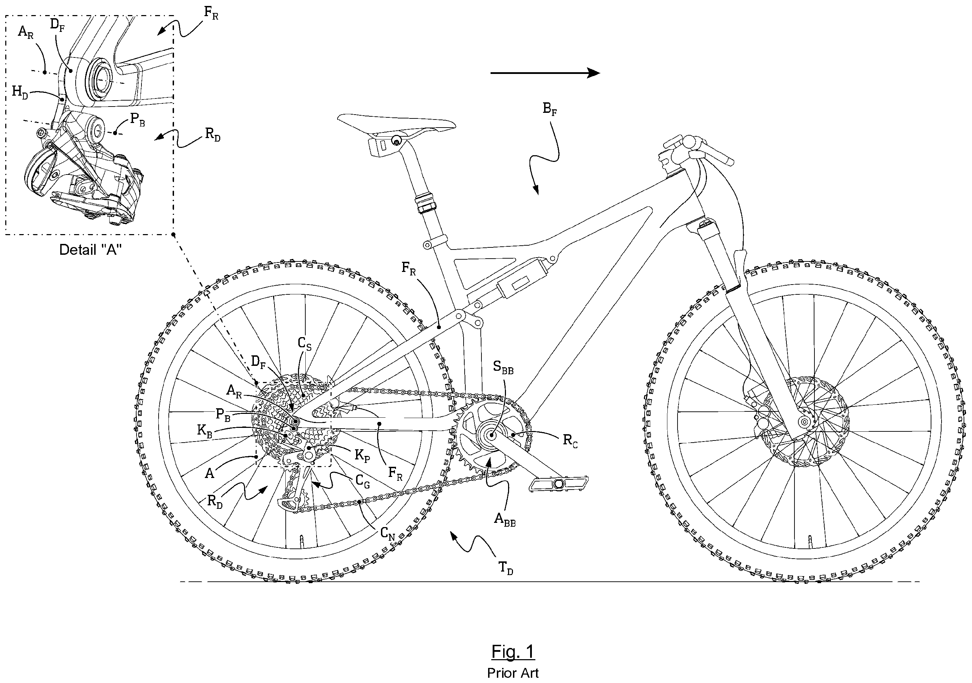

Mit dem "in sich starren Basiselement" unterscheidet sich das Schaltwerk nach der vorliegenden Offenbarung von den eingangs beschriebenen herkömmlichen Schaltwerken insbesondere für den Fall, dass das Rahmenauge bzw. der Schaltwerkshanger dem Basiselement eines konventionellen Schaltwerks zugerechnet werden sollte. In diesem Fall kann das Basiselement des konventionellen Schaltwerks nicht mehr als in sich starr angesehen werden, sondern zerfällt in zwei mittels der B-Achse des Basiselements gelenkig miteinander verbundene Teile (vgl. Stand der Technik gemäß Fig. 1 mit der dort erkennbaren B-Achse P_{B}).

Dabei ist das Basiselement mittels der Schwenkverbindungen der Befestigungsarme koaxial um die Hinterradachse schwenkbar mit dem Hinterbaurahmen verbindbar. Das gattungsgemäße Fahrradschaltwerk umfasst ferner ein Schaltungselement, welches zum Zweck des Gangwechsels mittels einer das Basiselement und das Schaltungselement translatorisch schwenkbar verbindenden Schwenkanordnung gegenüber dem Basiselement schwenkbeweglich ist, sowie ferner eine mit dem Schaltungselement rotatorisch schwenkbar verbundene Kettenführungseinrichtung mit einer oberen Kettenführungsrolle und einer unteren Kettenspannrolle.

Das Schaltwerk zeichnet sich dadurch aus, dass es in Form eines zumindest zweistufig hierarchisch strukturierten, modularen Baukastensystems aufgebaut ist, und hierzu zumindest mehrere, also zumindest zwei der Module "Basiselement-Modul", "Schwenkanordnungs-Modul", "Schaltungselement-Modul" und "Kettenführungseinrichtungs-Modul" umfasst. Dabei ist zumindest eines der Module als einstückig handhabbare Einheit austauschbar. Weiterhin enthält zumindest eines der Module zumindest eine einstückig austauschbare Baugruppe.

Einstückig austauschbar bzw. handhabbar bedeutet im Sinne der vorliegenden Offenbarung, dass ein Modul bzw. eine Baugruppe im wesentlichen in einem zusammenhängenden Stück ausgebaut und im ausgebauten Zustand gehandhabt werden kann. Nicht einstückig austauschbar bzw. handhabbar wäre ein Modul bzw. eine Baugruppe, die beim Ausbau in mehrere Einzelteile zerfällt, welche somit nicht mehr in einem Stück gehandhabt werden können. Als einstückig austauschbar bzw. handhabbar im Sinne der vorliegenden Offenbarung sollen auch Module bzw. Baugruppen gelten, welche mittels zusätzlicher Befestigungselemente wie z.B. Schrauben, Stifte, Niete usw. mit benachbarten Modulen bzw. Baugruppen verbindbar sind, wobei solche zusätzlichen Befestigungselemente nicht als Bestandteile der jeweiligen einstückig austauschbaren bzw. handhabbaren Module oder Baugruppe gelten sollen.

Vorzugsweise ist dabei zumindest eine einstückig austauschbare Baugruppe aus einer Mehrzahl von zumindest drei miteinander verbundenen Einzelteilen aufgebaut. Im Sinn der vorliegenden Offenbarung werden hierbei Verbindungselemente wie z.B. Schrauben, Stifte, Niete usw., mit denen die Einzelteile einer Baugruppe untereinander verbunden sind, nicht zu den Einzelteilen der Baugruppe gezählt.

Der hierarchisch zumindest zweistufig modulare Aufbau des Schaltwerks aus hierarchisch übergeordneten Modulen und hierarchisch untergeordneten Baugruppen innerhalb der Module ermöglicht aufgrund des zumindest einen Moduls, bevorzugt mehrerer Module sowie darin enthaltener Baugruppen, wobei sowohl Module als auch Baugruppen einstückig handhabbar und austauschbar sind, eine sehr einfache Zerlegung, Umrüstung und Reparatur des Schaltwerks. Insbesondere ist es, beispielsweise bei Beschädigungen oder zur Umrüstung des Schaltwerks, nicht erforderlich, das gesamte Schaltwerk auszutauschen. Ebensowenig ist es notwendig, das gesamte Schaltwerk oder Bereiche des Schaltwerks komplett zerlegen zu müssen, um Module oder Baugruppen austauschen zu können. Vielmehr sind lediglich die jeweils einstückig handhabbaren Module bzw. Baugruppen von den jeweils benachbarten Modulen bzw. Baugruppen zu lösen, bzw. mit diesen wieder zu verbinden.

Vorzugsweise ist das Baukastensystem zur Verwendung von Baugruppen aus zumindest einer zumindest zwei Familienmitglieder umfassenden Baugruppenfamilie innerhalb zumindest eines der vorgenannten Module eingerichtet. Hierzu sind für die zumindest eine Baugruppenfamilie (bei mehreren Baugruppenfamilien für ein bestimmtes Modul für jede der Baugruppenfamilien) lösbare Verbindungs-Schnittstellen der Baugruppen-Familienmitglieder zu benachbarten Baugruppen des zumindest einen Moduls (sowie zusätzlich oder alternativ, soweit an der jeweiligen Baugruppe vorhanden, Verbindungs-Schnittstellen zu benachbarten Modulen) innerhalb der zumindest einen Baugruppenfamilie familienmitglieder-übergreifend einheitlich definiert bzw. ausgebildet.

Auf diese Weise kann ein Familienmitglied der zumindest einen Baugruppenfamilie des zumindest einen Moduls, unter Beibehaltung der übrigen Baugruppen des zumindest einen Moduls, gegen ein anderes Familienmitglied derselben Baugruppenfamilie, jedoch aus beispielsweise anderem Material, von anderer Formgebung, von anderer Funktionalität oder von anderer Oberflächenqualität ausgetauscht werden.

Diese Austauschbarkeit eines Familienmitglieds gegen ein anderes Familienmitglied der Baugruppe kann seitens des Herstellers bereits bei der Fertigungsplanung vorgesehen und genutzt werden, wodurch sich auf einfache Weise eine Vielzahl an unterschiedlichen Ausführungsformen oder Qualitätsstufen des Schaltwerks planen, bereitstellen und produzieren lässt.

Aufgrund der familienmitglieder-übergreifenden Bereitstellung einheitlich ausgebildeter lösbarer Verbindungs-Schnittstellen kann dieser Austausch ebenfalls auch seitens des Fahrradhandels, seitens von Fachwerkstätten oder sogar durch den Endverbraucher jederzeit mit geringem Aufwand erfolgen. Auf diese Weise lassen sich mit dem vorliegenden Fahrradschaltwerk auch die steigenden Anforderungen von Gesellschaft und Gesetzgeber nach Verbesserung der Reparierbarkeit technischer Güter und Verringerung des Ressourcenverbrauchs maßgeblich besser erfüllen als mit Schaltwerken nach dem Stand der Technik.

Beispielsweise kann das Basiselement-Modul zumindest eine Basiselement-Baugruppe umfassen, die als Mitglied einer Basiselement-Baugruppenfamilie ausgebildet ist. Dies bedeutet, dass die Verbindungsschnittstellen der Basiselement-Baugruppe einem für diejenige Basiselement-Baugruppenfamilie, welcher die Basiselement-Baugruppe zugeordnet ist, einheitlich definierten bzw. ausgebildeten Standard folgen. Hierdurch wird es möglich, dass die Basiselement-Baugruppe einfach von dem Schaltwerk bzw. von dem Basiselement getrennt werden kann, um beispielsweise durch eine Basiselement-Baugruppe aus derselben Baugruppenfamilie ersetzt zu werden, oder um die Basiselement-Baugruppe im Fall von Beschädigungen instandsetzen und wieder montieren zu können.

Gemäß einer bevorzugten Ausführungsform sind die Module bzw. Baugruppen des Schaltwerks werkzeuglos oder mit haushaltsüblichem Werkzeug, und damit beispielsweise auch durch einen Endverbraucher austauschbar. So wird es auch dem Kunden bzw. Endverbraucher möglich, sein Fahrradschaltwerk mit geringem Aufwand zu reparieren oder abgenutzte Teile zu erneuern, um so die Nutzungsdauer des Schaltwerks zu erhöhen. Weiterhin wird es damit möglich, Baugruppen oder Module des Schaltwerks gegen entsprechende Baugruppen oder Module beispielsweise von höherer Qualität oder mit zusätzlichen Features zu tauschen, um so mit überschaubaren Kosten zu einem höherwertigen Produkt zu kommen, ohne ein komplettes neues Schaltwerk erwerben, und das alte Schaltwerk entsorgen zu müssen.

Am Beispiel des Basiselement-Moduls kann zumindest eine Baugruppe des Basiselement-Moduls als austauschbarer innerer oder äußerer Befestigungsarm vorliegen. Dieser kann als Mitglied einer Basiselement-Baugruppenfamilie ausgebildet sein, beispielsweise als Mitglied einer Basiselement-Baugruppenfamilie namens "innere Befestigungsarm-Baugruppenfamilie" oder als Mitglied einer Basiselement-Baugruppenfamilie namens "äußerer Befestigungsarm-Baugruppenfamilie". Mit dieser Zugehörigkeit zu einer Baugruppenfamie weist der Befestigungsarm lösbare Verbindungschnittstellen zu benachbarten Baugruppen des Basiselement-Moduls auf (sowie ggf. zu benachbarten Modulen), die innerhalb der jeweiligen Baugruppenfamilie identisch ausgebildet sind. Auf diese Weise wird somit ein modulares Basiselement bzw. B-Knuckle erhalten, dessen Baugruppen leicht entfernbar, austauschbar, reparierbar oder aufrüstbar sind.

Nach einer bevorzugten Ausführungsform ist der zumindest eine Befestigungsarm, vorzugsweise beide Befestigungsarme des Basiselement-Moduls, als aus einem im Wesentlichen ebenen Rohling geformtes Press- oder Stanzteil ausgebildet. Auf diese Weise lässt sich der zumindest eine Befestigungsarm, vorzugsweise beide Befestigungsarme, kostengünstig herstellen, insbesondere im Vergleich zum Stand der Technik, bei dem das B-Knuckle bzw. Basiselement häufig aus einem einstückigen, geometrisch komplexen und in der Produktion aufwändigen, beispielsweise aus einem Stück gegossenen und/oder gefrästen Bauteil besteht.

Eine weitere bevorzugte Ausführungsform sieht vor, dass der zumindest eine Befestigungsarm des Basiselement-Moduls im Wesentlichen aus einem Faserverbundstoff gebildet ist. Durch die Ausbildung eines oder beider Befestigungsarme des Basiselements bzw. B-Knuckles aus einem Faserverbundstoff, beispielsweise aus glasfaserverstärktem oder kohlefaserverstärktem Kunstharz bzw. Thermoplastwerkstoff lässt sich ein hochfestes und gleichzeitig leichtes Basiselement darstellen, wobei sich dank der Modularität zudem Kosten im Vergleich zu im Wesentlichen einstückigen Basiselementen einsparen lassen. Ebenso lassen sich dank der Modularität des Basiselements auf einfache Weise Baureihen mit unterschiedlicher Wertigkeit für unterschiedliche Zielgruppen oder Ziel-Märkte darstellen, indem für die einzelnen Baugruppen des Basiselement-Moduls entsprechend Werkstoffe unterschiedlicher Dichte und Festigkeit bzw. von unterschiedlicher Herstellungsweise oder Oberflächenqualität gewählt werden.

Eine weitere bevorzugte Ausführungsform sieht vor, dass zumindest eine Baugruppe des Basiselement-Moduls als austauschbares, zumindest Bereiche des Basiselement-Moduls schützendes Verkleidungselement, vorzugsweise Kunststoff-Verkleidungselement, sowie bevorzugt als Mitglied einer Basiselement-Baugruppenfamilie, mit entsprechend einheitlich definierten bzw. identisch geformten, lösbaren Verbindungschnittstellen zu benachbarten Baugruppen des Basiselement-Moduls ausgebildet ist.

Ein solches modulares Verkleidungselement hat insbesondere den Vorteil der leichten Austauschbarkeit auch durch den Endnutzer, beispielsweise im Fall von Kratzern, die im Betrieb eines Fahrradschaltwerks aufgrunddessen exponierter Position häufig auftreten. Der Nutzer hat somit die Möglichkeit, auf einfache Weise sowie mit geringem Aufwand wieder zu einem Schaltwerk mit nahezu neuwertigem Erscheinungsbild zu kommen, ohne ein im Hinblick auf Kosten und Ressourcenverbrauch unerwünschten Austausch des gesamten Schaltwerks vornehmen zu müssen.

Eine weitere Ausführungsform des Schaltwerks gemäß der vorliegenden Offenbarung sieht vor, dass das Schwenkanordnungs-Modul zwei Schwenkarme nach Art eines Schwenkparallelogramms zur translatorisch schwenkbaren Verbindung des Basiselement-Moduls und des Schaltungselement-Moduls umfasst. Hierbei weist zumindest einer der Schwenkarme zumindest eine austauschbare Schwenkarm-Baugruppe auf, welche vorzugsweise als Mitglied einer Schwenkanordnungs-Baugruppenfamilie ausgebildet ist.

Besonders bevorzugt ist dabei zumindest eine austauschbare Schwenkarm-Baugruppe ein zumindest Bereiche des Schwenkanordnungs-Moduls schützendes Verkleidungselement, vorzugsweise Kunststoff-Verkleidungselement. Ähnlich wie vorstehend hinsichtlich des modular austauschbaren Verkleidungselements am Basiselement gilt auch hier, dass durch ein austauschbares, das Schaltparallelogramm schützendes Verkleidungselement nicht nur ein besserer Schutz des Schaltparallelogramms, sondern auch eine einfache Reparierbarkeit mit geringen Kosten und geringem Ressourcenverbrauch möglich wird.

Hinsichtlich einer weiteren bevorzugten Ausführungsform des Fahrradschaltwerks ist vorgesehen, dass zumindest ein Schwenkarm des das Basiselement-Modul und das Schaltungselement-Modul translatorisch schwenkbar verbindenden Schwenkanordnungs-Moduls mittels zweier Gelenkbolzen mit dem Basiselement-Modul und mit dem Schaltungselement-Modul schwenkbar verbindbar oder verbunden ist. Dabei bildet das Verkleidungselement gleichzeitig ein Verschlusselement für die beiden Gelenkbolzen des Schwenkarms des Schwenkanordnungs-Moduls dergestalt, dass die beiden Gelenkbolzen bei abgenommenem Verkleidungselement vorzugsweise werkzeuglos aus dem Schwenkarm entnehmbar sind.

Dies bedeutet mit anderen Worten, dass beispielsweise der äußere Parallelogrammarm, welcher im Betrieb eines Schaltwerks häufig beschädigt oder zumindest zerkratzt wird, aus dem Schaltparallelogramm entnommen bzw. ersetzt werden kann, ohne den äußeren Parallelogrammarm zerlegen oder die Gelenkbolzen aufwändig demontieren zu müssen, wie dies bei Schaltwerken aus dem Stand der Technik üblicherweise der Fall ist.

Vielmehr fallen die Parallelogrammstifte nach einfachem, insbesondere werkzeuglosem Entfernen des Abdeckelements im Wesentlichen durch die Schwerkraft aus dem Parallelogramm-Modul heraus, und die Parallelogrammarm-Baugruppe kann sodann leicht in einem Stück entnommen werden.

Auch dies trägt zum modularen Aufbau und zur leichten Reparierbarkeit des Schaltwerks gemäß der vorliegenden Offenbarung bei, und ermöglicht damit, die vom Verbraucher zunehmend gewünschte bzw. vom Gesetzgeber zunehmend geforderte Reduktion des Ressourcenverbrauchs umzusetzen.

Eine weitere bevorzugte Ausführungsform des Fahrradschaltwerks sieht vor, dass zumindest einer der beiden Parallelogrammarme bzw. Schwenkarme des Schwenkanordnungs-Moduls zumindest zwei Schwenkanordnungs-Baugruppen umfasst, von denen zumindest eine Schwenkanordnungs-Baugruppe austauschbar und vorzugsweise als Mitglied einer Schwenkanordnungs-Baugruppenfamilie ausgebildet ist. Diese Ausführungsform ermöglicht es dem Hersteller, neben den vorstehend bereits genannten generellen Vorteilen der modularen Bauweise, eine oder beide Baugruppen, aus denen sich der zumindest eine Parallelogrammarm gemäß dieser Ausführungsform zusammensetzt, beispielsweise dem Verbraucher in mehreren Varianten anzubieten, um sein Schaltwerk aufwerten oder umgestalten zu können.

Nach einer weiteren bevorzugten Ausführungsform des Fahrradschaltwerks umfasst das Schaltungselement-Modul oder das Kettenführungseinrichtungs-Modul eine Feder/Dämpfer-Einrichtung zur Federung und/oder Dämpfung der Schwenkbewegung des Kettenführungseinrichtungs-Moduls gegenüber dem Schaltungselement-Modul. Dabei ist die Feder/Dämpfer-Einrichtung als Feder/Dämpfer-Einheit einstückig, im Sinne von einteilig, handhabbar bzw. austauschbar ausgebildet, und liegt vorzugsweise als Mitglied einer Schaltungselement- oder Kettenführungseinrichtungs-Baugruppenfamilie vor, beispielsweise einer verschiedene Feder/Dämpfer-Baugruppen enthaltenden Schaltungselement- oder Kettenführungseinrichtungs-Baugruppenfamilie.

Auf diese Weise lässt sich die Feder/Dämpfer-Baugruppe des Schaltwerks vergleichsweise einfach als einteilige Einheit ausbauen, ggf. reparieren, oder gegen eine Feder/Dämpfer-Baugruppe mit anderen Leistungseigenschaften austauschen, wodurch das Schaltwerk auch entsprechend aufgewertet werden kann, ohne dass ein Ersatz des gesamten Schaltwerks notwendig ist.

Vorzugsweise sind dabei Feder/Dämpfer-Einrichtung und ein zur Aufnahme der Feder/Dämpfer-Einrichtung dienendes Aufnahmegehäuse des Schaltungselement-Moduls mittels einer an der Feder/Dämpfer-Einrichtung sowie an dem Aufnahmegehäuse angeordneten, zumindest zweigängigen Gewindepaarung lösbar miteinander verbindbar. Dabei sind Gewindegänge der Gewindepaarung axial und/oder in Umfangsrichtung, bezogen auf die Schwenkachse der Kettenführungseinrichtung, ungleichmäßig voneinander beabstandet dergestalt, dass die Gewindepaarung in nur einer rotatorischen Relativposition ineinander einschraubbar ist.

Dies ist vorteilhaft, da somit die Feder/Dämpfer-Einrichtung nur in einer, nämlich in der korrekten rotatorischen Relativposition in das Aufnahmegehäuse des Schaltungselement-Moduls eingeschraubt werden kann, obwohl ein mehrgängiges Gewinde üblicherweise eine mit der Zahl der Gewindegänge übereinstimmende Zahl unterschiedlicher rotatorischer Einschraubpositionen besitzt.

Eine weitere Ausführungsform sieht vor, dass das Kettenführungseinrichtungs-Modul des Schaltwerks gemäß der vorliegenden Offenbarung zumindest eine austauschbare Kettenführungseinrichtungs-Baugruppe umfasst, welche vorzugsweise als Mitglied einer Kettenführungseinrichtungs-Baugruppenfamilie ausgebildet ist, also insbesondere mit innerhalb der Baugruppenfamilie einheitlich geformten Verbindungsschnittstellen zur lösbaren Verbindung mit benachbarten Baugruppen versehen ist.

Besonders bevorzugt ist die zumindest eine austauschbare Baugruppe des Kettenführungseinrichtungs-Moduls eine Kettenkäfig-Leitblecheinrichtung Pc, eine Kettenführungsrolle oder eine Kettenspannrolle.

Auch diese Ausführungsform steht im Dienst der einfachen Reparierbarkeit und der Reduzierung des Ressourcenverbrauchs. Zudem können auch hier wieder unterschiedliche Varianten des Fahrradschaltwerks für unterschiedliche Preispunkte, Anwendungsbereiche bzw. Zielmärkte mit verhältnismäßig geringem Aufwand bereitgestellt werden. Beispielsweise können eines oder beide Leitbleche P_{C} der Kettenkäfigeinrichtung aus anderen Materialien wie beispielsweise Aluminium oder Carbon, oder Kettenführungsrollen mit unterschiedlichen Leistungseigenschaften bzw. Features bereitgestellt werden.

Nach einer weiteren bevorzugten Ausführungsform des Fahrradschaltwerks ist vorgesehen, dass das Fahrradschaltwerk ein elektrisch betätigtes Fahrradschaltwerk ist, und ein Elektrik-Modul umfasst, wobei das Elektrik-Modul zumindest eine austauschbare Elektrik-Baugruppe aufweist, welche vorzugsweise als Mitglied einer Elektrik-Baugruppenfamilie ausgebildet ist. Bei der zumindest einen austauschbaren Elektrik-Baugruppe handelt es sich bevorzugt um eine elektrische Motor-Getriebeeinheit oder um eine Batterieeinheit.

Die Möglichkeit zum modularen Austausch insbesondere der elektrischen Motor-Getriebeeinheit bei einem Fahrradschaltwerk steht einerseits wieder in Dienst der einfachen Reparierbarkeit bzw. Austauschbarkeit unter geringem Ressourcenverbrauch. Dies ist sinnvoll, da die Motor-Getriebeeinheit eines elektrischen Fahrradschaltwerks eine besonders aufwändige und damit kostenintensive Baugruppe darstellt.

Ebenso können dank dieser Ausführungsform herstellerseitig Motor-Getriebeeinheiten mit unterschiedlichen Leistungseigenschaften bereitgestellt werden, wodurch entweder mit geringem Entwicklungsaufwand Schaltwerke für unterschiedliche Zielgruppen dargestellt werden können, oder wodurch dem Kunden die Möglichkeit geboten werden kann, sein Schaltwerk durch Einbau einer beispielsweise höherwertigen Motor-Getriebeeinheit zu vertretbaren Kosten aufzuwerten.

Die vorliegende Offenbarung betrifft weiterhin eine Motor-Getriebeeinheit für ein modulares elektrisches Fahrradschaltwerk wie vorstehend beschrieben, oder generell für elektrisch betätigte Fahrradschaltwerke.

Die Motor-Getriebeeinheit zeichnet sich dadurch aus, dass ein Gehäuse der Motor-Getriebeeinheit bezüglich seiner sechs räumlichen Bewegungsfreiheitsgrade mittels genau einer rotatorischen Achsverbindung und genau zweier translatorischer Anschlagsverbindungen mit dem Basiselement-Modul bzw. B-Knuckle verbindbar ist. Durch diese Gestaltung lässt sich eine einfache Positionierung und Montage der Motor-Getriebeeinheit im Basiselement des Schaltwerks erreichen. Auch ist die Motor-Getriebeeinheit auf diese Weise im Basiselement festgelegt, ohne dass es zu einer maßlichen bzw. toleranzbezogenen Unter- oder Überbestimmung der Position der Motor-Getriebeeinheit im Basiselement kommen kann, da durch diese Ausführungsform die Motor-Getriebeeinheit über nicht weniger und auch nicht mehr als die zur räumlichen Festlegung stets erforderlichen sechs Freiheitsgrade gegenüber dem Basiselement fixiert wird.

Weiterhin betrifft die vorliegende Offenbarung eine Motor-Getriebeeinheit für ein modulares elektrisches Fahrradschaltwerk wie vorstehend beschrieben, oder generell für elektrisch betätigte Fahrradschaltwerke.

Die Motor-Getriebeeinheit zeichnet sich dadurch aus, dass ein Gehäuse der Motor-Getriebeeinheit zumindest zwei Gehäuseteile, beispielsweise Gehäusehälften umfasst. Bei der Montage bzw. Zusammenfügung der Gehäuseteile bzw. Gehäusehälften wird ein Elektromotor der Motor-Getriebeeinheit mittels eines durch die Zusammenfügung der Gehäuseteile bzw. Gehäusehälften federnd belastbaren, nach der Zusammenfügung der Gehäuseteile bzw. Gehäusehälften federbelasteten Steckadapters bezüglich aller sechs Bewegungsfreiheitsgrade formschlüssig spielfrei in dem Gehäuse fixierbar ist. Die federnde Belastung des Steckadapters, die bei der Zusammenfügung der Gehäuseteile bzw. Gehäusehälften bewirkt wird, kann durch eine separate Feder, beispielsweise durch eine Biegefeder erfolgen. Alternativ kann die federnde Belastung auch durch beispielsweise einstückig mit einer Gehäusehälfte oder mit dem Steckadapter ausgebildete elastisch nachgiebige Bereiche bewirkt werden.

Auf diese Weise kann der Elektromotor zusammen mit dem Steckadapter vormontiert werden, wobei die Endmontage des Elektromotors keine weiteren Schritte außer der Zusammenfügung der Gehäuseteile bzw. Gehäusehälften mit der darin enthaltenen Einheit aus Elektromotor und Steckadapter erfordert. Hierdurch wird nicht nur die Montage vereinfacht und damit kostengünstiger, sondern auch die Reparierbarkeit der Motor-Getriebeeinheit verbessert. Im Vergleich hierzu sind beim Stand der Technik entsprechende Adapter oder Konsolen zur Motorbefestigung häufig unlösbar, beispielsweise durch Umspritzung, in einem Gehäusebauteil der Motor-Getriebeeinheit eingebettet, was sowohl die Montage als auch die Demontage des Elektromotors erschwert.

### Kurze Beschreibung der Zeichnungen

Nachfolgend werden Ausführungsformen der Erfindung anhand der Figuren beispielhaft beschrieben.

Es zeigt:
- Fig. 1:: ein Fahrrad mit einem allgemeinen Fahrradschaltwerk gemäß dem Stand der Technik in einer Seitenansicht;
- Fig. 2:: eine Ausführungsform eines Fahrradschaltwerks in einer schrägen, in Bezug auf Fig. 1 vergrößerten Seitenansicht;
- Fig. 3:: das Fahrradschaltwerk gemäß Fig. 2 in einer rückwärtigen Ansicht im montierten Zustand am Rahmenauge eines Fahrrad-Hinterbaurahmens;
- Fig. 4:: einen schematischen Axialschnitt durch Rahmenauge, Hinterradnabe sowie Basiselement eines Fahrradschaltwerks gemäß Fig. 2 und 3;
- Fig. 5:: Hinterbaurahmen und Hinterradnabe sowie Fahrradschaltwerk-Basiselement des Fahrradschaltwerks gemäß Fig. 2 und 3 in perspektivischer Schrägansicht;
- Fig. 6:: den Korpus des Fahrradschaltwerks gemäß Fig. 2 und 3 in einer schräg perspektivischen Seitenansicht von inboard;
- Fig. 7:: das Fahrradschaltwerk gemäß Fig. 2 und 3 in einer perspektivischen Explosionsdarstellung mit schematischer Darstellung des modularen Schaltwerks-Baukastensystems gemäß der vorliegenden Offenbarung;
- Fig. 8:: Basiselement bzw. B-Knuckle des Schaltwerks gemäß Fig. 2 und 3 in einer mit Fig. 6 übereinstimmenden Ansicht von schräg inboard;
- Fig. 9:: das Basiselement bzw. B-Knuckle gemäß Fig. 8 in einer perspektivischen Ansicht von schräg outboard, ohne Batterie und Motor/ Getriebe;
- Fig. 10:: das Basiselement bzw. B-Knuckle gemäß Fig. 8 und 9 in einer Ansicht gemäß Fig. 9 in perspektivischer Explosionsdarstellung;
- Fig. 11:: einen Schwenkarm bzw. Parallelogrammarm des Schaltwerks gemäß Fig. 2 und 3 mit Blickrichtung von outboard;
- Fig. 12:: den Schwenkarm bzw. Parallelogrammarm gemäß Fig. 11 in zerlegter Explosionsdarstellung;
- Fig. 13:: das Schaltwerk gemäß Fig. 2 und 3 mit entnommenem Schwenkarm bzw. Parallelogrammarm gemäß Fig. 11 und 12 in Fig. 2 entsprechender Darstellung und Ansicht;
- Fig. 14:: eine Motor-Getriebeeinheit des Schaltwerks gemäß Fig. 2 und 3 in einer schräg perspektivischen Untersicht von outboard;
- Fig. 15:: eine Motor-Getriebeeinheit ähnlich Fig. 14 (Abtriebsarm ist anders) zusammen mit einer Batterieeinrichtung in einer schräg perspektivischen Untersicht von outboard;
- Fig. 16:: die Motor-Getriebeeinheit gemäß Fig. 14 oder 15 zusammen mit der Batterieeinrichtung gemäß Fig. 15 im Längsschnitt von inboard;
- Fig. 17:: die Motor-Getriebeeinheit gemäß Fig. 14 oder 15 bzw. 16 in einer schräg perspektivischen Draufsicht von inboard auf die Batteriekontakte;
- Fig. 18:: die Motor-Getriebeeinheit gemäß Fig. 14 oder 15 bis 17 zusammen mit einer von der Motor-Getriebeeinheit teilweise getrennten Batterieeinrichtung gemäß Fig. 15 in einer schräg perspektivischen Draufsicht von outboard;
- Fig. 19:: die Motor-Getriebeeinheit gemäß Fig. 14 oder 15 bis 18 in einer schräg perspektivischen Ansicht von outboard mit Explosionsdarstellung eines Betätigungselements;
- Fig. 20:: die Motor-Getriebeeinheit gemäß Fig. 14 oder 15 bis 19 in perspektivischer Ansicht in einem teilweise zerlegten Zustand;
- Fig. 21:: die Motor-Getriebeeinheit gemäß Fig. 14 oder 15 bis 20 im montierten Zustand in einer perspektivischen Querschnittsdarstellung;
- Fig. 22:: die Motor-Getriebeeinheit gemäß Fig. 14 oder 15 bis 21 im teilweise montierten Zustand in einer perspektivischen Längsschnittdarstellung;
- Fig. 23:: Motor und Getriebe der Motor-Getriebeeinheit gemäß Fig. 14 oder 15 bis 22 in einer perspektivischen Ansicht;
- Fig. 24:: eine spielfreie Zahnradpaarung des Getriebes gemäß Fig. 23 in perspektivischer Ansicht;
- Fig. 25:: die spielfreie Zahnradpaarung gemäß Fig. 24 in einer perspektivischen Explosionsdarstellung;
- Fig. 26:: eine weitere Ausführungsform eines Fahrradschaltwerks in einer schrägen, in Bezug auf Fig. 1 vergrößerten Seitenansicht;
- Fig. 27:: ein Basiselement bzw. B-Knuckle des Fahrradschaltwerks gemäß Fig. 26 in einer perspektivischen Explosionsdarstellung schräg von outboard;
- Fig. 28:: Basiselement bzw. B-Knuckle gemäß Fig. 27 in einer perspektivischen Ansicht schräg von inboard;
- Fig. 29:: einen Schwenkarm bzw. Parallelogrammarm des Schaltwerks gemäß Fig. 26 bis 28 in perspektivischer Darstellung mit Blickrichtung von inboard;
- Fig. 30:: den Schwenkarm bzw. Parallelogrammarm gemäß Fig. 29 in zerlegter Explosionsdarstellung von inboard;
- Fig. 31:: Schaltungselement bzw. P-Knuckle eines Schaltwerks gemäß Fig. 2 oder 26 mit aus dem Aufnahmegehäuse des Schaltungselements herausgeschraubter Feder/Dämpfereinrichtung;
- Fig. 32:: Kettenkäfig-Leitblecheinrichtung und aus dem Aufnahmegehäuse des Basiselements herausgeschraubte Feder/Dämpfereinrichtung ähnlich Fig. 31 in einer Explosionsdarstellung;
- Fig. 33:: Kettenführungseinrichtung und Feder/Dämpfereinrichtung des Schaltwerks gemäß Fig. 26 bis 28 als einstückig handhabbares Modul;
- Fig. 34:: Aufnahmegehäuse des Schaltungselements bzw. P-Knuckles gemäß Fig. 31 in perspektivischer Ansicht auf das Aufnahmegewinde.
- Fig. 35:: Verschiedene Feder/Dämpfereinrichtungen als modular austauschbare, einstückig handhabbare Baugruppen für ein modulares Schaltwerk ähnlich Fig. 2 oder Fig. 26.
- Fig. 36:: eine weitere Ausführungsform eines Fahrradschaltwerks in einer rückwärtigen Perspektivdarstellung von inboard, mit einer Kettenspannrolle ohne Verzahnung und zugehörigem Kettenkäfig;
- Fig. 37:: das Fahrradschaltwerk gemäß Fig. 36 mit Kettenspannrolle und Kettenkäfig gemäß dem Stand der Technik;
- Fig. 38:: das Fahrradschaltwerk gemäß Fig. 36 in einer rückwärtigen Perspektivdarstellung von outboard; und
- Fig. 39:: die nicht verzahnte Kettenspannrolle des Schaltwerks gemäß Fig. 36 und 38 in zwei verschiedenen Darstellungen.

### Beschreibung bevorzugter Ausführungsformen

Fig. 1 zeigt ein Mountainbike mit einem hinteren Fahrradschaltwerk R_{D} nach dem Stand der Technik. Das Mountainbike weist einen Rahmen B_{F} mit einem gefederten Hinterbaurahmen F_{R} auf. Der Antriebsstrang T_{D} des Mountainbikes umfasst eine Tretlagerbaugruppe A_{BB} mit einer Tretlagerwelle S_{BB}, ein Kettenrad Rc, ein hinteres Fahrradschaltwerk R_{D}, eine Mehrfach-Ritzelkassette C_{S} sowie eine Antriebskette C_{N}.

Das Fahrradschaltwerk R_{D} ist im Bereich des rechten Ausfallendes bzw. rechten Rahmenauges D_{F} in konventioneller Weise mit dem Hinterbaurahmen F_{R} verbunden. Dies bedeutet insbesondere, dass die Verbindung des Basiselements des Schaltwerks R_{D} mit dem rechten Rahmenauge D_{F} mittels eines sogenannten Schaltwerkshangers H_{D} (vgl. vergrößerte Detaildarstellung "A" in Fig. 1) erfolgt, was die in der Beschreibungseinleitung dargestellten Nachteile mit sich bringt, darunter besonders die geringe Stabilität der Verbindung zwischen Fahrradschaltwerk R_{D} und Hinterbaurahmen F_{R}, und eine mangelhafte Schaltpräzision des Schaltwerks R_{D} aufgrund dieser geringen Stabilität sowie aufgrund langer und kaum kontrollierbarer, über den Hinterbaurahmen F_{R} sowie über den Schaltwerkshanger H_{D} verlaufender Toleranzketten zwischen Schaltwerk R_{D} und Ritzelkassette Cs.

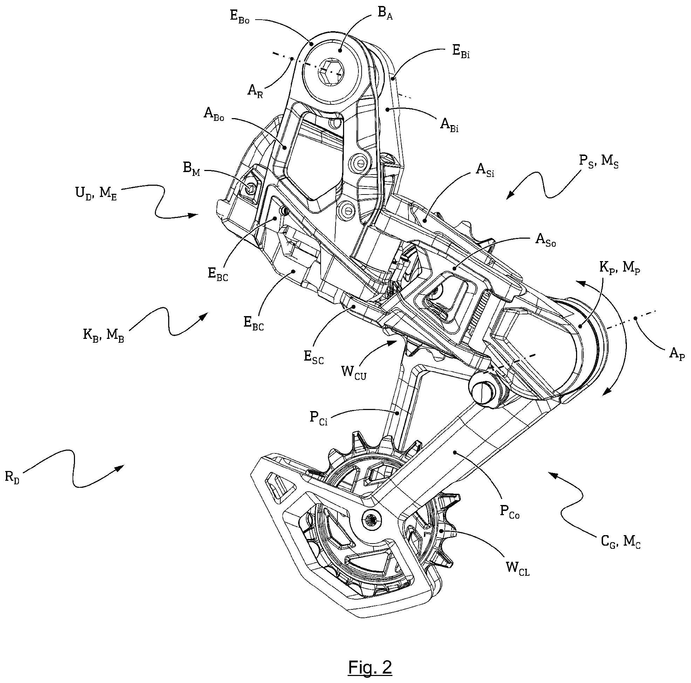

Fig. 2 zeigt eine Ausführungsform eines Fahrradschaltwerks R_{D} gemäß der vorliegenden Offenbarung in einer schrägen, in Bezug auf Fig. 1 vergrößerten Seitenansicht. Man erkennt zunächst die allgemein wesentlichen Bestandteile eines Fahrradschaltwerks R_{D} für eine Kettenschaltung, nämlich ein in der Branche auch als B-Knuckle bekanntes Basiselement K_{B}, welches der Befestigung des Fahrradschaltwerks R_{D} an dem rechten Rahmenauge D_{F} des Hinterbaurahmens F_{R} dient, weiterhin ein in der Branche auch als P-Knuckle bekanntes Schaltungselement K_{P}, welches zum Zweck einer Gangwahl über eine auch als Schaltparallelogramm bekannte Schwenkanordnung P_{S} translatorisch schwenkbar mit dem Basiselement K_{B} verbunden ist, sowie ferner eine auch als Kettenkäfig oder Kettenkäfiganordnung bekannte Kettenführungseinrichtung C_{G} mit einer oberen Kettenführungsrolle W_{CU} und mit einer unteren Kettenspannrolle W_{CL}.

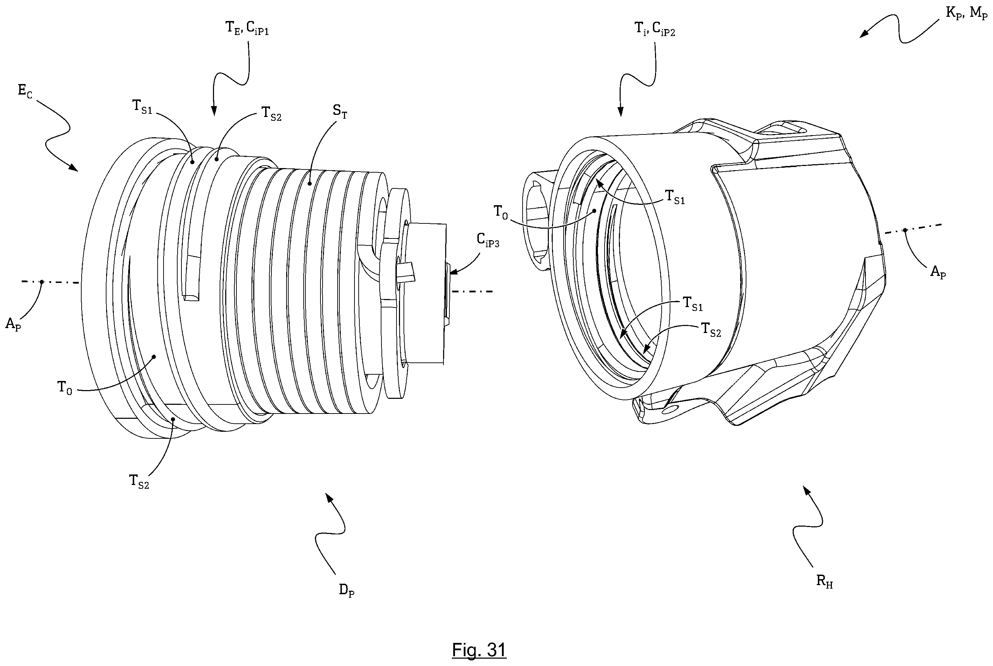

Die Kettenführungseinrichtung C_{G} umfasst innere und äußere Kettenkäfig-Leitblecheinrichtungen P_{Ci}, P_{Co} und ist um eine Kettenkäfig-Schwenkachse A_{P} gegenüber dem Schaltungselement K_{P} schwenkbar, und steht unter einer um diese Schwenkachse A_{P} im Uhrzeigersinn wirkenden Federvorspannung, welche für die Vorspannung des Leertrums der Fahrradkette C_{N} gemäß Fig. 1 sorgt, vgl. Federelement bzw. Käfigfeder S_{T} der Feder-/Dämpfereinrichtung D_{P} gemäß Fig. 31.

Weiterhin erkennt man in Fig. 2 den äußeren Schwenkarm A_{So} sowie den inneren Schwenkarm A_{Si} der Schwenkanordnung P_{S}, wobei der äußere Schwenkarm A_{So} mit einem gegen Beschädigungen wie beispielsweise Kratzer schützenden Verkleidungselement E_{SC} versehen ist, welches beispielsweise aus Kunststoff besteht. Einem ähnlichen Zweck dienen bei dieser Ausführungsform im unteren Bereich des Basiselements K_{B} angeordnete weitere Verkleidungselemente E_{BC}.

Das Schaltwerk R_{D} gemäß Fig. 2 ist ein elektromechanisches, insbesondere drahtlos steuerbares Schaltwerk, und besitzt hierzu eine elektrische Antriebseinheit U_{D}, auf die weiter unten näher eingegangen wird.

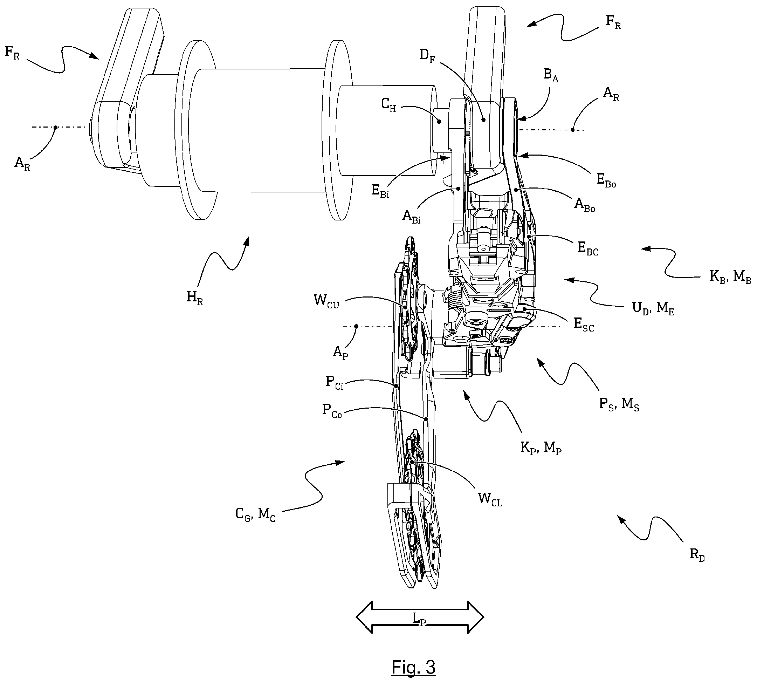

Bei dem in Fig. 2 abgebildeten Fahrradschaltwerk R_{D} handelt es sich um ein Schaltwerk R_{D} zur koaxialen Direktmontage in Bezug auf die Hinterradachse A_{R}, was besonders deutlich Fig. 3 entnommen werden kann. Die entscheidenden Vorteile koaxial direkt in Bezug zur Hinterradachse A_{R} montierbarer Schaltwerke, darunter insbesondere die massiv verbesserte Stabilität der Anbindung am Hinterbaurahmen F_{R} und eine um Größenordnungen verbesserte Präzision der Positionierung des Schaltwerks R_{D} gegenüber der Ritzelkassette Cs, sind ausführlich der Beschreibungseinleitung zu entnehmen.

Wie in Fig. 2 und insbesondere in Fig. 3 ersichtlich, umfasst das Basiselement K_{B} des Fahrradschaltwerks R_{D} zum Zweck der hinterachs-koaxialen Montage einen inneren Befestigungsarm A_{Bi} mit einer hier als Schwenkauge E_{Bi} ausgeführten inneren Schwenkverbindung sowie einen äußeren Befestigungsarm A_{Bo} mit einer hier als Schwenkauge E_{Bo} ausgeführten äußeren Schwenkverbindung. Der innere Befestigungsarm A_{Bi} dient zur inboardseitigen Positionierung im Bereich des rechten Rahmenauges D_{F} des Hinterbaurahmens F_{R} und der äußere Befestigungsarm A_{Bo} zur outboardseitigen Positionierung im Bereich des Rahmenauges D_{F}. Das Schaltwerk R_{D} lässt sich über das innere Schwenkauge E_{Bi} des inneren Befestigungsarms A_{Bi} und über das äußere Schwenkauge E_{Bo} des äußeren Befestigungsarms A_{Bo} koaxial zur Hinterradachse A_{R} mit dem rechten Rahmenauge D_{F} des Hinterbaurahmens F_{R} verbinden, wozu insbesondere eine Adapterbolzeneinrichtung B_{A} zum Einsatz kommt.

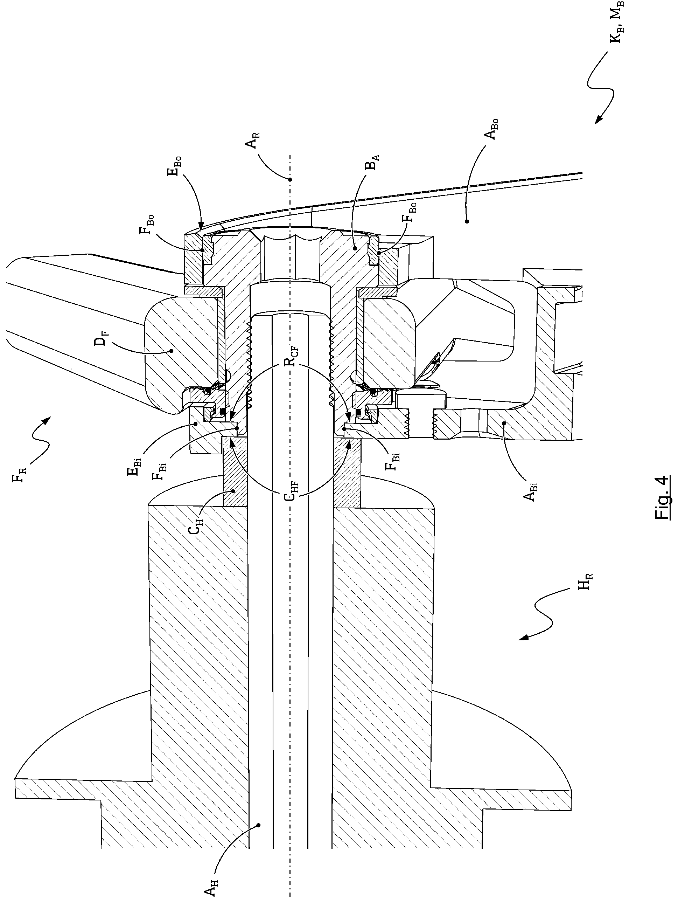

Das Schaltwerk R_{D} wird mittels der Adapterbolzeneinrichtung B_{A} dabei so an dem Rahmenauge D_{F} montiert, dass sich insbesondere nach dem Einsetzen und Verspannen der Nabenachse A_{H} der Hinterradnabe H_{R} eine definierte Fest-/Loslagerung der beiden Befestigungsarme A_{Bi} und A_{Bo} des Basiselements K_{B} ergibt. Ein schematischer Axialschnitt durch Rahmenauge D_{F}, Hinterradnabe H_{R} sowie Basiselement K_{B} eines zweiarmig koaxial montierten Fahrradschaltwerks R_{D} gemäß Fig. 2 und 3 mit einer derartigen Fest-/Loslagerung ist in Fig. 4 dargestellt.

In der Darstellung von Fig. 4 ist die Nabenachse A_{H} in die Adapterbolzeneinrichtung B_{A} eingeschraubt und mit diesem über die Nabenendkappe C_{H} axial verspannt. Man erkennt, dass die beiden Befestigungsarme A_{Bi} und A_{Bo} des Basiselements K_{B} in radialer Richtung praktisch spielfrei sowie koaxial zur Hinterradachse A_{R} festgelegt werden, indem die Schwenkaugen E_{Bi} und E_{Bo} der Befestigungsarme A_{Bi} und A_{Bo} auf entsprechenden, hier im Wesentlichen zylindrischen Lagerflächen F_{Bi}, F_{Bo} der Adapterbolzeneinrichtung B_{A} gleitend gelagert sind.

Insbesondere ist in Fig. 4 erkennbar, wie der inboardseitige bzw. linke Befestigungsarm A_{Bi} beim Festziehen, also beim axialen Verspannen der Nabenachse A_{H} zwischen der zeichnungsbezogene rechtsseitigen Stirnseite C_{HF} der hier nur schematisch dargestellten Nabenendkappe C_{H} und einem umlaufenden Absatz R_{CF} der Adapterbolzeneinrichtung B_{A} in axialer Richtung klemmend festgelegt wird, und somit die Rolle der Festlagerung des Basiselements K_{B} und damit des Schaltwerks in axialer Richtung der Hinterradachse A_{R} übernimmt, während der outboardseitige bzw. rechte Befestigungsarm A_{Bo} bei F_{Bo} in axialer Richtung nicht festgelegt ist und somit die Loslagerung des Basiselements K_{B} und damit des Schaltwerks in Bezug auf die axiale Richtung der Hinterradachse A_{R} bildet.

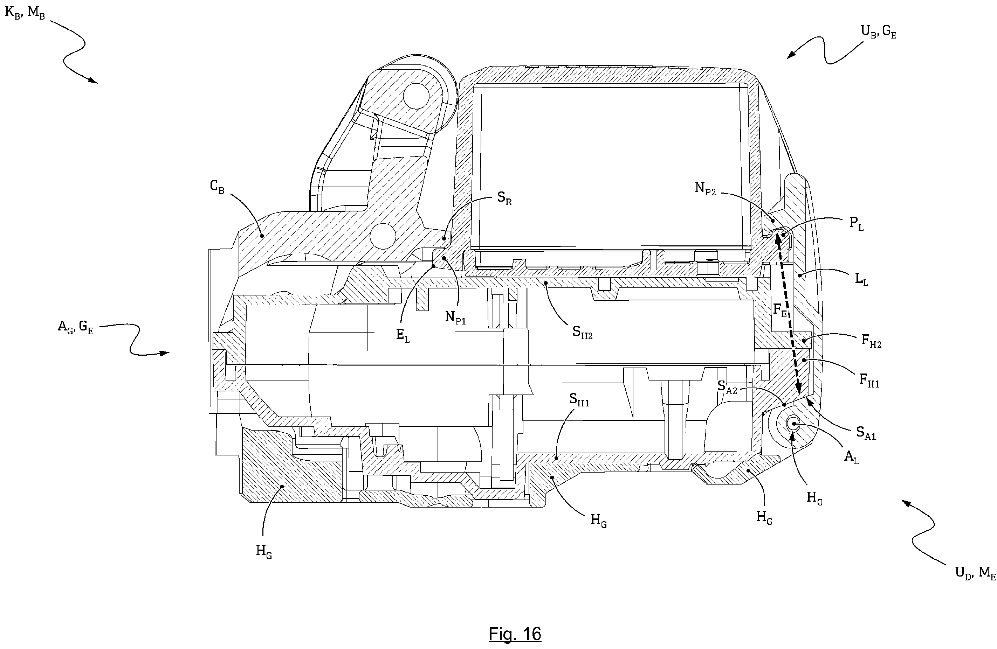

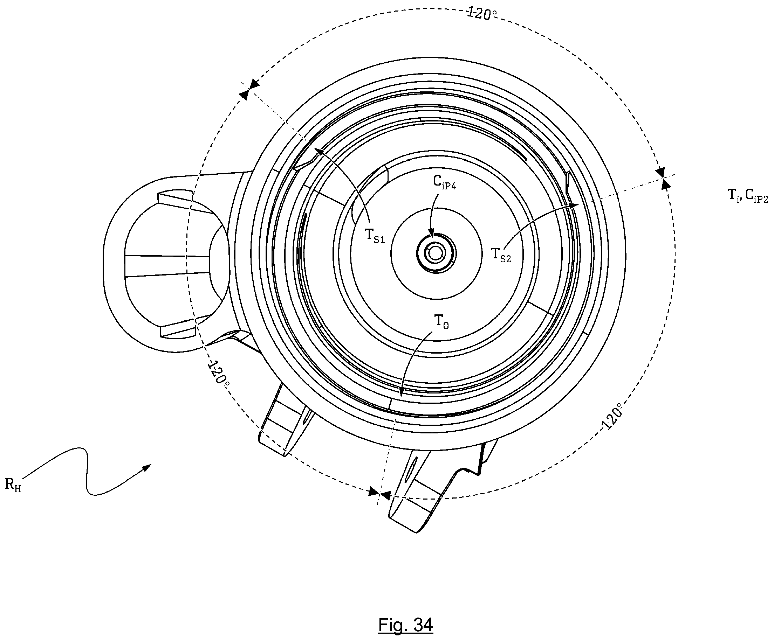

Ausführlicher ist der sich dabei ergebende Kraftfluss bei einem derartigen zweiarmigen, koaxial montierbaren Schaltwerk R_{D} in der deutschen Patentanmeldung DE102020132208.9 in Fig. 34 und der zugehörigen Beschreibung, in der europäischen Patentanmeldung EP3388324A2 in Absatz [0082] und der zugehörigen Fig. 16 sowie im US-Patent US10,870,464B2 in Sp. 19 Abs. 2 sowie ebenfalls in Fig. 16 dargestellt.

Hieraus sowie aus Fig. 2 bis 4 wird somit erkennbar, dass diese zweiarmige und beidseitige Lagerung bzw. Befestigung des Schaltwerks R_{D} um nahezu Größenordnungen stabiler und biegesteifer ist bzw. konstruktiv ausgelegt werden kann als die bisher übliche einseitige Befestigung von Fahrradschaltwerken mittels eines Schaltwerkshangers, vgl. Fig. 1 sowie die ausführliche Darstellung der Nachteile der Schaltwerksbefestigung mit einem Schaltwerkshanger in der Beschreibungseinleitung.

Ferner wird insbesondere anhand Fig. 4 erkennbar, dass die Position des Basiselements K_{B} und damit des Schaltwerks R_{D}, aufgrund der zweiarmigen Fest-/Loslagerung C_{HF}, R_{CF}, F_{Bi}, F_{Bo} sowohl in radialer Richtung, bezogen auf die Hinterradachse A_{R}, und insbesondere auch in axialer Richtung, bezogen auf die Nabenendkappe C_{H}, exakt festgelegt ist.

Da jedoch die Position der Ritzelkassette Cs (in Fig. 4 nicht dargestellt, vgl. Fig. 1) grundsätzlich ebenfalls in radialer Richtung bezogen auf die Hinterradachse A_{R} und in axialer Richtung bezogen auf die Nabenendkappe C_{H} exakt festgelegt ist, ergibt sich dank dieser zweiarmigen Fest-/Loslagerung C_{HF}, R_{CF}, F_{Bi}, F_{Bo} des Fahrradschaltwerks R_{D}, die hier unmittelbar im Bereich des Rahmenauges D_{F}, sowie direkt bezogen auf Hinterradachse A_{R} und Nabenendkappe C_{H} erfolgt, eine besonders kurze Toleranzkette zwischen der Lage und Position des Fahrradschaltwerks R_{D} und der Lage und Position der Ritzelkassette Cs.

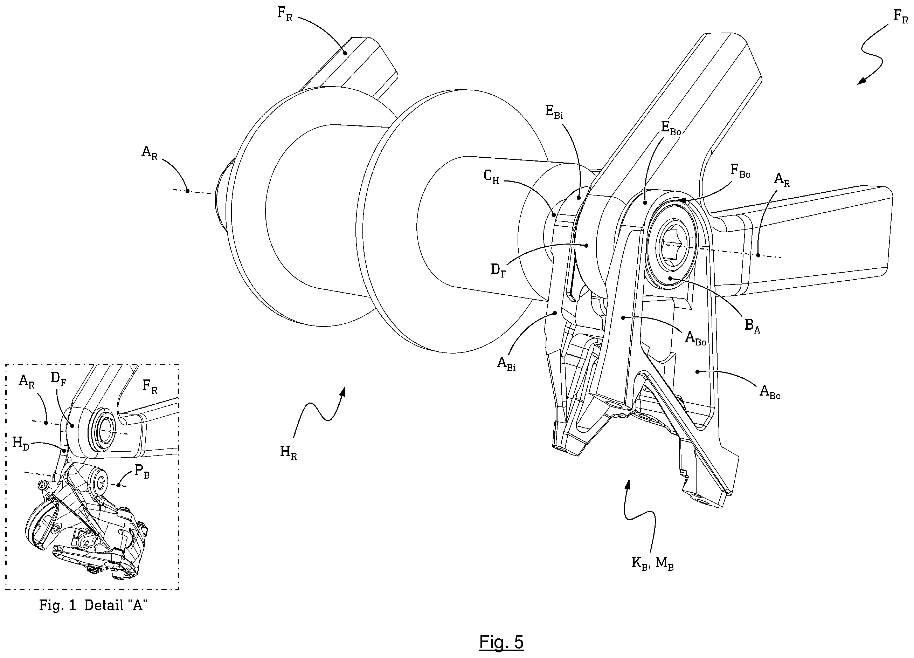

Fig. 5 zeigt den Hinterbaurahmen F_{R} und die Hinterradnabe H_{R} sowie das Fahrradschaltwerk-Basiselement K_{B} gemäß Fig. 2 bis 4 des Fahrradschaltwerks R_{D} gemäß Fig. 2 und 3 nochmals in perspektivischer Schrägansicht von outboard. Im Vergleich zum üblichen Schaltwerkshanger (vgl. Detail "A" aus Fig. 1 mit Schaltwerkshanger H_{D} sowie die ausführliche Darstellung der Nachteile der Schaltwerksbefestigung mittels Schaltwerkshanger H_{D} in der Beschreibungseinleitung) wird erkennbar, auf welche Weise sowohl die zweiarmige, besonders biegesteife Befestigung des Fahrradschaltwerks R_{D} als auch die die vorstehend mit Bezug auf Fig. 4 beschriebene erhebliche Verkürzung der Toleranzketten zwischen Schaltwerk R_{D} und Ritzelkassette Cs zu einer entscheidenden Verbesserung der Schaltperformance und Schaltpräzision des beidseitig koaxial angebundenen Fahrradschaltwerks R_{D} führen. Diese verbesserte Performance und Präzision bleibt auch dauerhaft erhalten, da sich die steife zweiarmige Befestigung A_{Bi}, A_{Bo} des Fahrradschaltwerks R_{D} auch bei hoher Belastung nicht verformt, was bei traditionellen Schaltwerkshangern H_{D} überaus häufig vorkommt.

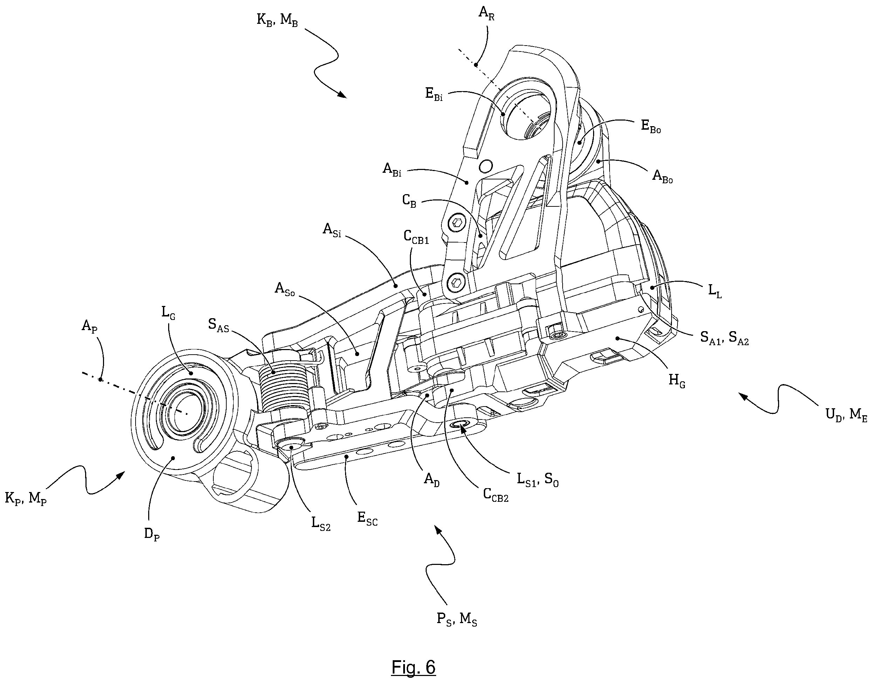

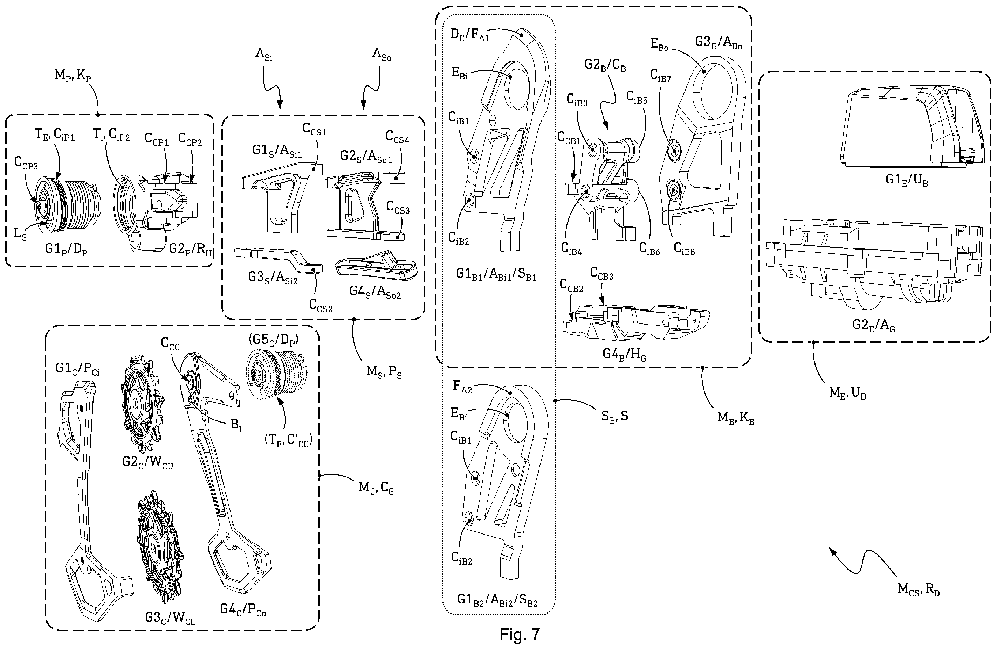

Fig. 6 zeigt den Korpus des Fahrradschaltwerks R_{D} gemäß Fig. 2 und 3 in einer schräg perspektivischen Seitenansicht von inboard, mit Blick auf die Schaltwerksinnen- sowie auf die Schaltwerkunterseite. Man erkennt wieder wesentliche Komponenten des Schaltwerks, darunter das Basiselement K_{B} mit inneren und äußeren Befestigungsarmen A_{Bi}, A_{Bo} sowie mit inneren bzw. äußeren Befestigungsaugen E_{Bi} bzw. E_{Bo}, weiterhin die elektromotorische Antriebseinheit U_{D}, Schaltwerksparallelogramm bzw. Schwenkanordnung P_{S} mit innerem Schwenkarm A_{Si}, Gelenkbolzen L_{S1} und L_{S2}, äußerem Schwenkarm A_{So}und Schwenkarm-Verkleidungselement E_{SC} sowie mit P-Knuckle bzw. Schaltungselement K_{P} und einer darin angeordneten Feder/DämpferEinrichtung D_{P} (vgl. Fig. 7 und 31).

Fig. 7 zeigt das Fahrradschaltwerk R_{D} gemäß Fig. 2, 3 und 6 in einer perspektivischen Explosionsdarstellung, wobei Fig. 7 insbesondere eine Ausführungsform des modularen Schaltwerks-Baukastensystems M_{CS} gemäß der vorliegenden Offenbarung visualisiert. Der besseren Übersicht halber sind in der Darstellung von Fig. 7 diverse Verbindungselemente wie Schrauben, Stifte, Bolzen, Lagerbuchsen, Wellen etc. weggelassen.

In Fig. 7 erkennt man zunächst, dass sich das Fahrradschaltwerk R_{D} gemäß dem Baukastensystem M_{CS} aus einer Anzahl von Modulen M zusammensetzt, die in Fig. 7 jeweils mit dicker strichlierter Linie umrandet sind. Die betrachtete und in Fig. 7 dargestellte Ausführungsform des Schaltwerk-Baukastensystems M_{CS} umfasst hierbei die Module "Basiselement-Modul M_{B}", "Schwenkanordnungs-Modul M_{S}", "Schaltungselement-Modul M_{P}", "Kettenführungseinrichtungs-Modul Mc" und "Elektrik-Modul M_{E}".

Dabei enthält jedes der Module M_{B}, M_{S}, M_{P}, M_{C} und M_{E} zumindest eine Baugruppe G. Bei dem dargestellten Ausführungsbeispiel enthält jedes der hier fünf Module M_{B}, M_{S}, M_{P}, M_{C} und M_{E} jeweils mindestens zwei Baugruppen G.

Zumindest eine Baugruppe G zumindest eines der Module M_{B}, M_{S}, M_{P}, M_{C} und M_{E} ist dabei Familienmitglied S₁ - Sₙ, am Beispiel der Baugruppe A_{Bi} des Basiselement-Moduls M_{B} Familienmitglied S_{B1} - S_{Bn} einer zumindest zwei Familienmitglieder S_{B1}, S_{B2} umfassenden Familie S_{B} aus Baugruppen G_{B}. Am Beispiel des inboardseitigen Befestigungsarms A_{Bi} innerhalb des Basiselement-Moduls M_{B} liegt bei der betrachteten Ausführungsform eine Baugruppenfamilie S_{B} aus zwei inboardseitigen Befestigungsarmen A_{Bi1} und A_{Bi2} vor. Die Baugruppenfamilie S_{B} umfasst hier die beiden Baugruppen G1_{B1} und G1_{B2} (Variante B1 und Variante B2 der ersten Baugruppe G1 des Basiselement-Moduls M_{B}), welche somit Baugruppen-Familienmitglieder S_{B1} und S_{B2} darstellen, bei denen es sich um zwei unterschiedlich ausgebildete inboardseitige Befestigungsarme A_{Bi} handelt.

Beim dargestellten Ausführungsbeispiel bestehen die beiden Baugruppen-Familienmitglieder S_{B1} und S_{B2}, also die beiden gegeneinander austauschbaren inboardseitigen Befestigungsarme A_{Bi1} und A_{Bi2}, die jeweils eine der Baugruppen G_{B} des Basiselement-Moduls M_{B} bilden, beispielsweise aus unterschiedlichem Material, weisen ein unterschiedliches Design auf, oder besitzen unterschiedliche Baugruppenfeatures F_{A1}, F_{A2}, hier beispielsweise eine unterschiedliche Gestaltung im Bereich oberhalb des Schwenkauges E_{Bi} entweder mit zusätzlicher Ketten-Ableiteinrichtung D_{C} (siehe Familienmitglied/Befestigungsarm A_{Bi1}), oder ohne eine solche Ketten-Ableiteinrichtung (siehe Familienmitglied/Befestigungsarm A_{Bi2}).

Dabei sind für die zumindest eine Baugruppenfamilie S_{B} (bei mehreren Baugruppenfamilien S innerhalb des Baukastensystems M_{CS} für jede Baugruppenfamilie S des Baukastensystems M_{CS}) lösbare Verbindungs-Schnittstellen Cᵢ der Baugruppen-Familienmitglieder S_{Xn}, S_{Xm} (beim vorbetrachteten Beispiel einer Baugruppe G_{B} des Basiselement-Moduls M_{B} also beispielsweise die Familienmitglieder S_{B1} und S_{B2}) zu benachbarten Baugruppen G des zumindest einen Moduls M (sowie, soweit an der jeweiligen Baugruppe G vorhanden, Verbindungs-Schnittstellen C_{C} zu benachbarten Modulen M) innerhalb der zumindest einen Baugruppenfamilie S_{B} familienmitglieder-übergreifend einheitlich definiert bzw. geformt dergestalt, dass ein Familienmitglied S_{Xn} der zumindest einen Baugruppenfamilie S_{B} des zumindest einen Moduls M, unter Beibehaltung der übrigen Baugruppen G des zumindest einen Moduls M, gegen ein anderes Familienmitglied S_{Xm} derselben Baugruppenfamilie S_{B}, jedoch aus anderem Material, von anderer Formgebung, von anderer Funktionalität oder von anderer Oberflächeneigenschaft austauschbar ist.

Weiterhin bezogen auf Fig. 7 und wieder am Beispiel einer Baugruppe G_{B} des Basiselement-Moduls M_{B}, konkret am Beispiel der Baugruppe G_{1B} (inboardseitiger Befestigungsarm A_{Bi}) bedeutet dies, dass für die Befestigungsarm-Baugruppenfamilie S_{B} lösbare Verbindungs-Schnittstellen C_{iB1}, C_{iB2} der Baugruppen-Familienmitglieder S_{B1}, S_{B2}, also der beiden gegeneinander austauschbaren inboardseitigen Befestigungsarme A_{Bi1} und A_{Bi2} zu der benachbarten Baugruppe G_{2B} des Basiselement-Moduls M_{B}, hier also zu dem Verbindungsstück C_{B}, die Baugruppen-Familienmitglieder S_{B1} und S_{B2} übergreifend einheitlich definiert bzw. ausgebildet sind dergestalt, dass das Familienmitglied S_{B1} der Baugruppenfamilie S_{B} des Basiselement-Moduls M_{B}, im betrachteten Beispiel also der inboardseitige Befestigungsarm A_{Bi1}, unter Beibehaltung der übrigen Baugruppen G_{B} des Basiselement-Moduls M_{B}, hier also unter Beibehaltung von Verbindungsstück G2_{B}/C_{B}, outboardseitigem Befestigungsarm G3_{B}/A_{Bo} und Getriebehalter G4_{B/}H_{G}, gegen ein anderes Familienmitglied derselben Baugruppenfamilie S_{B}, jedoch aus anderem Material, von anderer Formgebung, von anderer Funktionalität oder von anderer Oberflächeneigenschaft austauschbar ist, hier also beispielsweise gegen das Familienmitglied S_{B2} der Baugruppenfamilie S_{B} des Basiselement-Moduls M_{B}, welches beim vorliegenden Ausführungsbeispiel des Baukastensystems M_{CS} ein anderes Design aufweist und im Bereich oberhalb des Schwenkauges E_{Bi} ein anderes Feature F_{A2} aufweist als das Familienmitglied S_{B1}.

Wird beispielsweise der Fall des Verbindungsstücks C_{B} betrachtet, welches innerhalb des Basiselement-Moduls M_{B} insbesondere den inboardseitigen Befestigungsarm A_{Bi}, den outboardseitigen Befestigungsarm A_{Bo} und den Getriebehalter H_{G} miteinander verbindet (vgl. Fig. 6 bis 9), so ist erkennbar, dass das Verbindungsstück C_{B}, neben den lösbaren Verbindungs-Schnittstellen C_{iB3}, C_{iB4}, C_{iB5}, C_{iB6} zu den jeweils benachbarten Baugruppen G_{B} innerhalb des Basiselement-Moduls M_{B}, weiterhin auch Verbindungs-Schnittstellen C_{C} zu dem benachbarten Schwenkanordnungs-Modul M_{S} aufweist, sichtbar in Fig. 7 insbesondere die Verbindungs-Schnittstelle C_{CB1} zur Verbindung mit einer entsprechenden, formkorrespondierenden Schnittstelle C_{CS4} des Schwenkarms A_{So} im benachbarten Schwenkanordnungs-Modul.

Auch diese Verbindungs-Schnittstellen C_{C} zu benachbarten Schwenkanordnungs-Modulen M sind dabei so ausgebildet, dass ein jeweiliges Familienmitglied, im betrachteten Fall die Baugruppe C_{B}, also das Verbindungsstück C_{B}, innerhalb einer zumindest zwei Familienmitglieder S_{B1}, S_{B2} umfassenden Familie S_{B} aus Verbindungsstück-Baugruppen C_{B}/G_{B} des Basiselement-Moduls M_{B}, unter Beibehaltung der übrigen Baugruppen G_{B} des Basiselement-Moduls M_{B}, hier also unter Beibehaltung von Getriebehalter-Baugruppe G_{B}/H_{G}, inboardseitiger Befestigungsarm-Baugruppe G_{B}/A_{Bi} und outboardseitiger Befestigungsarm-Baugruppe G_{B}/A_{Bo}, gegen ein anderes Familienmitglied derselben Baugruppenfamilie S, jedoch aus anderem Material, von anderer Formgebung, von anderer Funktionalität oder von anderer Oberflächeneigenschaft austauschbar ist.

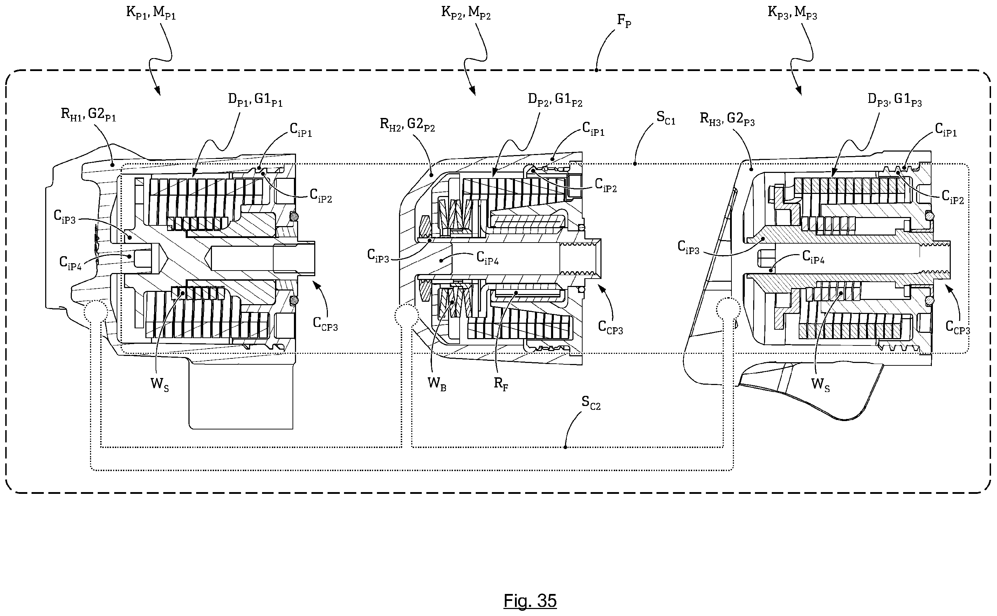

Analog sowie alternativ oder zusätzlich zum Vorliegen von Baugruppenfamilien S_{B} innerhalb von Modulen M kann das Baukastensystem M_{CS} bzw. das Schaltwerk R_{D} auch zur Verwendung zumindest einer zumindest zwei Familienmitglieder M umfassenden Modulfamilie F aus Modulen M innerhalb des Schaltwerks R_{D} eingerichtet sein. Hierzu sind für die zumindest eine Modulfamilie F, bei mehreren Modulfamilien für jede Modulfamilie, lösbare Verbindungs-Schnittstellen C_{C} der Familienmitglieder M zu jeweils benachbarten Modulen M des Schaltwerks R_{D}, innerhalb der zumindest einen Modulfamilie F familienmitglieder-übergreifend einheitlich definiert bzw. ausgebildet dergestalt, dass ein Familienmitglied M der zumindest einen Modulfamilie F, beispielsweise ein Basiselement-Modul M_{B}, ein Schwenkanordnungs-Modul M_{S}, ein Schaltungselement-Modul M_{P} oder ein Kettenführungseinrichtungs-Modul M_{C}, z.B. ein ein erstes Basiselement-Modulfamilienmitglied M_{B1}, unter Beibehaltung der übrigen Module M des Schaltwerks R_{D}, gegen ein anderes Familienmitglied M derselben Modulfamilie F, gegen ein zweites Basiselement-Modulfamilienmitglied M_{B2} beispielsweise aus anderem Material, von anderer Formgebung, von anderer Funktionalität oder von anderer Oberflächeneigenschaft austauschbar ist. Ein Beispiel hierzu ist in Fig. 35 dargestellt, und weiter unten in der zugehörigen Figurenbeschreibung nochmals ausgeführt.

Dieser Austausch eines Familienmitglieds gegen ein anderes Familienmitglied einer Baugruppe G oder eines Moduls M kann beispielsweise seitens des Herstellers bereits bei der Fertigungsplanung vorgesehen werden, wodurch sich durch den Hersteller auf einfache Weise eine Vielzahl an unterschiedlichen Varianten oder Qualitätsstufen des Schaltwerks R_{D} planen und produzieren lässt.

Aufgrund der familienmitglieder-übergreifenden Definition bzw. Ausbildung einheitlicher sowie leicht lösbarer Verbindungs-Schnittstellen bei dem Baukastensystem M_{CS} gemäß der vorliegenden Offenbarung kann dieser Austausch von Baugruppen G oder Modulen M auch seitens des Fahrradhandels, durch Fachwerkstätten oder selbst durch den Endverbraucher mit geringem Aufwand erfolgen.

Auf diese Weise lassen sich somit auch die steigenden Anforderungen aus der Gesellschaft sowie seitens des Gesetzgebers nach Förderung bzw. Verbesserung der Reparierbarkeit technischer Güter erfüllen.

Dabei können Baugruppenfamilien S bzw. Modulfamilien F des Fahrradschaltwerk-Baukastensystems M_{CS} vorzugsweise auch so gestaltet werden, dass diese sogar werkzeuglos oder mit haushaltsüblichem Werkzeug durch den Endverbraucher ausgetauscht werden können. Auf diese Weise wird es dem Kunden bzw. Endverbraucher möglich, sein Fahrradschaltwerk R_{D} mit geringem Aufwand zu reparieren, oder abgenutzte Teile zu erneuern, um so die Nutzungsdauer des Fahrradschaltwerks R_{D} bei verringerten Kosten und verringertem Ressourcenaufwand zu erhöhen.

Auch wird es für den Endverbraucher damit möglich, Familienmitglieder, also Baugruppen G oder Module M des Fahrradschaltwerks, gegen entsprechende Baugruppen G oder Module M insbesondere von höherer Qualität oder mit zusätzlichen Features auszutauschen, um auf diese Weise mit vergleichsweise geringen Kosten zu einem höherwertigen Produkt zu gelangen, ohne ein vollständiges neues Schaltwerk R_{D} erwerben zu müssen.

Bei der in Fig. 7 dargestellten Ausführungsform des Baukastensystems M_{CS} kann das P-Knuckle bzw. Schaltungselement-Modul M_{P} wie abgebildet eine Feder/Dämpfereinrichtung D_{P} zur federnden und schwingungsdämpfenden Vorspannung der Kette mittels der Kettenführungseinrichtung C_{G} umfassen. Die Feder/Dämpfereinrichtung D_{P} stellt dann familienmitglieder-übergreifend eine Verbindungs-Schnittstelle C_{CP3} zur Verbindung mit einer entsprechenden, formkorrespondierenden und ebenfalls familienmitglieder-übergreifenden Schnittstelle C_{CC} der äußeren Kettenkäfig-Leitblecheinrichtung P_{Co} im benachbarten Kettenführungseinrichtungs-Modul M_{C} bereit.

Alternativ kann die Feder/Dämpfereinrichtung D_{P} auch dem Kettenführungseinrichtungs-Modul M_{C} zugeordnet sein, was in Fig. 7 durch eine innerhalb des Kettenführungseinrichtungs-Moduls M_{C} angeordnete, strichliert gezeichnete und mit eingeklammerten Bezugszeichen versehene Feder/Dämpfereinrichtung D_{P} visualisiert ist. In diesem Fall bildet dann das Außengewinde T_{E} des Deckelelements E_{C} der Feder-/Dämpfereinrichtung D_{P} familienmitglieder-übergreifend eine Verbindungs-Schnittstelle C'_{CC} zur Verbindung mit einer entsprechenden, formkorrespondierenden und ebenfalls familienmitglieder-übergreifenden Schnittstelle Tᵢ, C_{iP2} des Aufnahmegehäuses R_{H} im benachbarten Schaltungselement-Modul M_{P}.

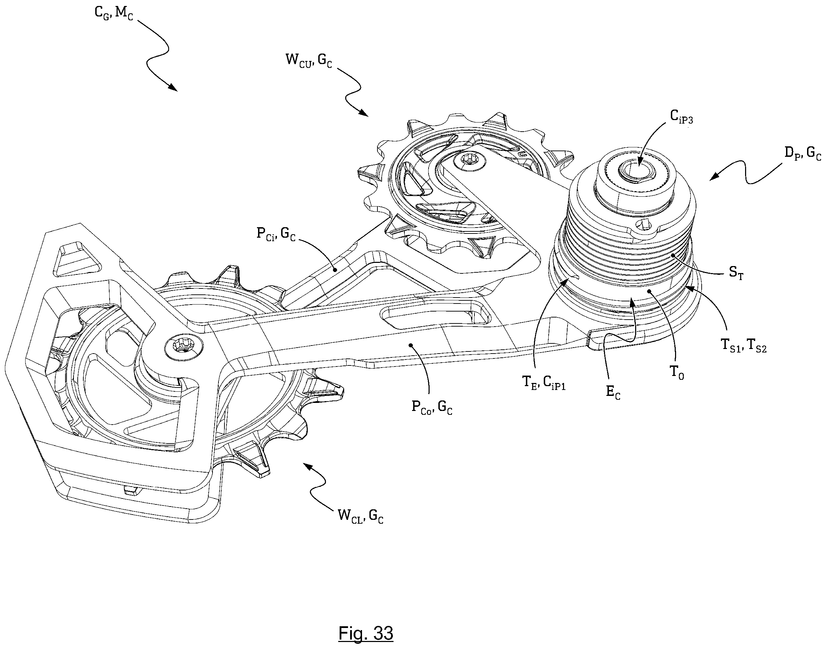

Der Hintergrund einer dem Kettenführungseinrichtungs-Modul M_{C} zugehörigen Feder/Dämpfereinrichtung D_{P} wird weiter unten mit Bezug auf Fig. 33 und 34 näher erläutert.

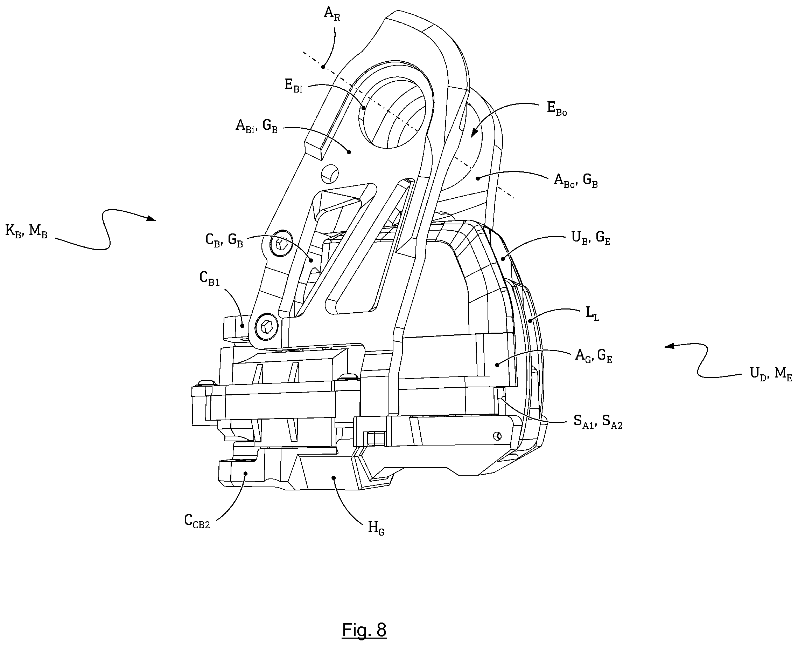

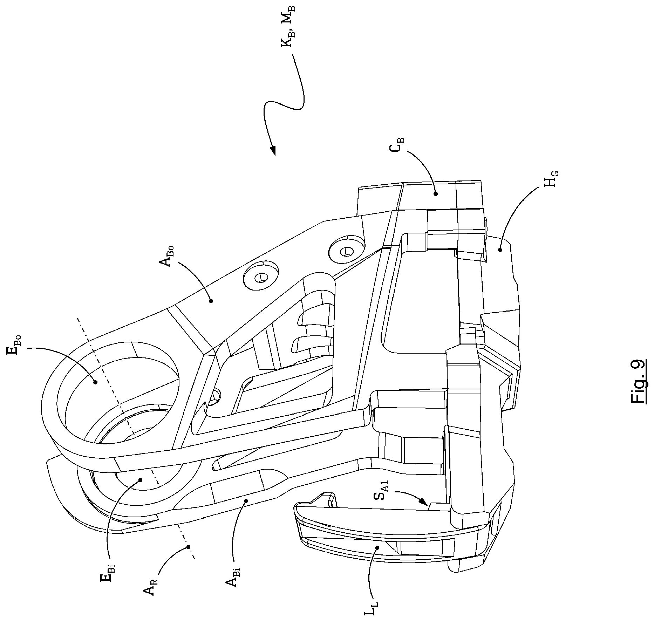

Fig. 8 und Fig. 9 zeigen das Basiselement bzw. B-Knuckle K_{B} des Schaltwerks R_{D} gemäß Fig. 2 und 3 in Ansichten von schräg inboard bzw. von schräg outboard. Man erkennt insbesondere wieder die zweiarmige Befestigung mit den Befestigungsarmen A_{Bi}, A_{Bo} und den Schwenkaugen E_{Bi}, E_{Bo} zur in Bezug auf die Hinterradachse A_{R} koaxialen Befestigung des Schaltwerks. In Fig. 8 ist zusätzlich eine elektrische Antriebseinheit U_{D} des Fahrradschaltwerks R_{D} gezeigt, umfassend insbesondere eine Motor-Getriebeeinheit A_{G} sowie eine durch einen Rasthebel L_{L} gehaltene, wechselbare Batterieeinheit U_{B}, welche weiter unten ausführlicher beschrieben ist.

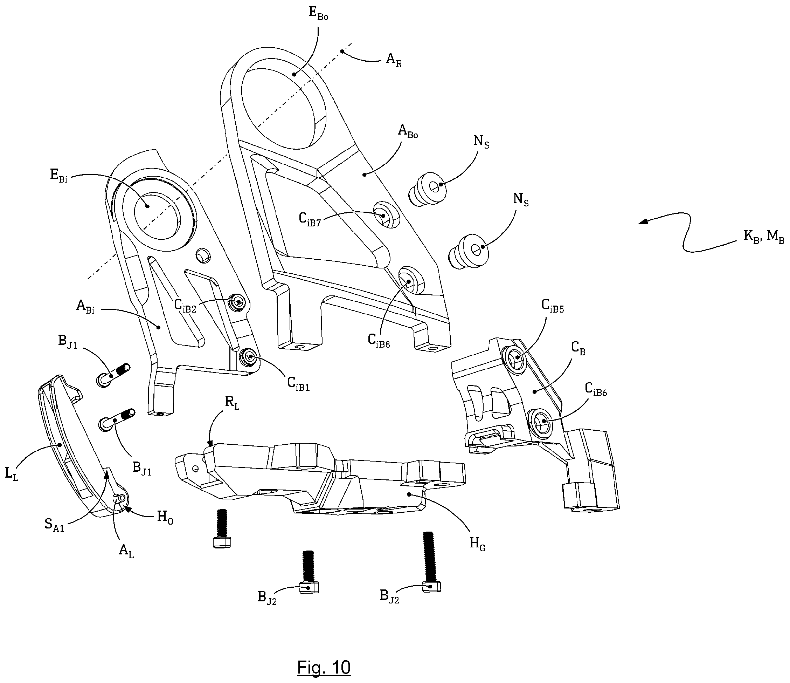

Fig. 10 zeigt das Basiselement bzw. B-Knuckle K_{B} des Schaltwerks R_{D} gemäß Fig. 2 und 3 in einer mit Fig. 9 übereinstimmenden Ansicht, jedoch in Explosionsdarstellung. Auch hier erkennt man die zweiarmige Gestaltung des Basiselements K_{B} mit Befestigungsarmen A_{Bi}, A_{Bo} und Schwenkaugen E_{Bi}, E_{Bo} zur in Bezug auf die Hinterradachse A_{R} koaxialen Befestigung des Schaltwerks R_{D} am Rahmenauge D_{F} des Hinterbaurahmens.

Wie in Fig. 10 erkennbar, zerfällt das Basiselement bzw. B-Knuckle K_{B} in die beiden Befestigungsarme A_{Bi}, A_{Bo}, weiterhin einen Getriebehalter H_{G}, ein Verbindungsstück C_{B} und einen Rasthebel L_{L} zur Befestigung der Batterie bzw. des Wechselakkus U_{B} (vgl. Fig. 8). Es wird erkennbar, dass zum einfachen Austausch beispielsweise des äußeren Befestigungsarms A_{Bo} lediglich die beiden Schraubenmuttern N_{S} der Verbindungsschrauben B_{J1} sowie die beiden weiteren Verbindungsschrauben B_{J2} zu lösen sind. Ähnliches gilt analog auch für den inneren Befestigungsarm A_{Bi}, für den Getriebehalter H_{G} mit daran schwenkbar befestigtem Batterie-Rasthebel L_{L} sowie für das Verbindungsstück C_{B}. Alle diese Teile des Basiselements K_{B} sind somit leicht austauschbar, was zu der gewünschten umfassenden Servicefähigkeit bzw. Reparierbarkeit des Fahrradschaltwerks R_{D} beiträgt.

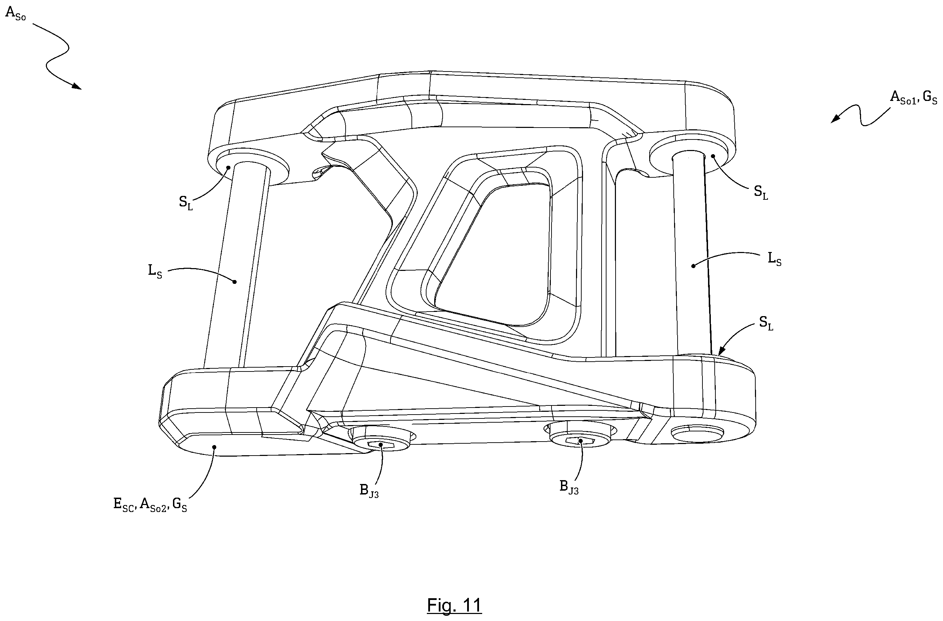

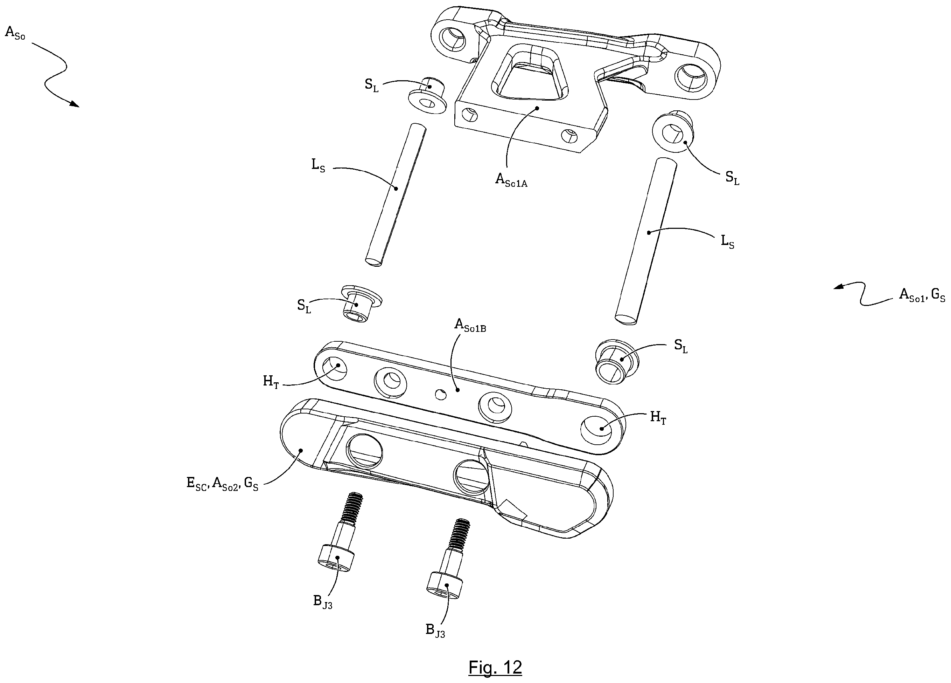

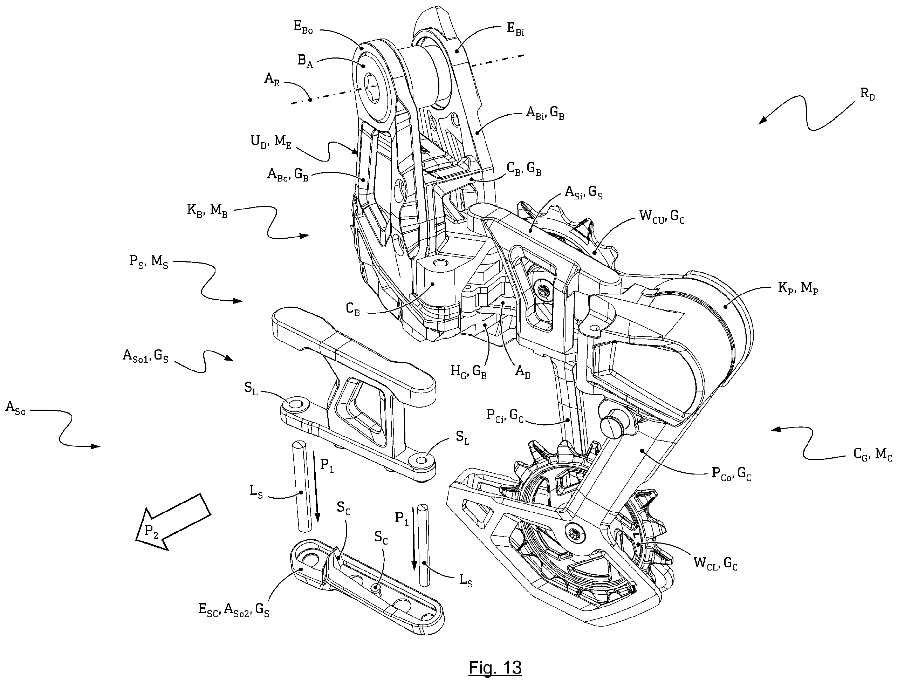

Fig. 11 bis 13 zeigen einen äußeren Parallelogrammarm bzw. Schwenkarm A_{So} des Schaltwerks R_{D} gemäß Fig. 2, 3, 6 und 13 jeweils mit Blickrichtung von outboard, wobei Fig. 12 und 13 den Parallelogrammarm bzw. Schwenkarm A_{So} gemäß Fig. 11 in zerlegter Darstellung zeigen. Man erkennt zunächst, dass der outboardseitige Schwenkarm A_{So} insbesondere die Schwenkarm-Baugruppen A_{So1} und A_{So2} sowie in Lagerbuchsen S_{L} aufgenommene Gelenkbolzen Ls umfasst. Dabei zerfällt die Schwenkarm-Baugruppe A_{So1} in weitere Einzelteile wie A_{So1A}, A_{So1B}, S_{L}, L_{S}, die mittels zweier Verbindungsschrauben B_{J3} miteinander verbunden bzw. verschraubt sind.

Die Schwenkarm-Baugruppe A_{So2} liegt hier in Form eines den Parallelogrammarm bzw. Schwenkarm A_{So} schützenden Verkleidungselements E_{SC} vor, welches mittels in Fig. 13 erkennbarer Hinterschneidungen oder Schnapp- bzw. Rastverbindungen S_{C} mit der Schwenkarm-Baugruppe A_{So1} verbindbar bzw. verbunden ist.

Bei dem in Fig. 11 bis 13 dargestellten Ausführungsbeispiel des modular mehrteiligen äußeren Schwenkarms A_{So} verwirklicht das Verkleidungselement E_{SC} eine zusätzliche Funktion.

Wie insbesondere Fig. 13 entnommen werden kann, besteht diese Zusatzfunktion der Schwenkarm-Baugruppe A_{So2} bzw. des Verkleidungselements E_{SC} darin, dass nach Entfernen lediglich des Verkleidungselements E_{SC}, ohne weitere Zerlegung des Schwenkarms A_{So}, insbesondere ohne Lösen der Verbindungsschrauben B_{J3}, unmittelbar die Gelenkbolzen L_{S} aus dem Schwenkarm A_{So} entlang der Pfeilrichtung P₁ nach unten entnommen werden können. Daraufhin bzw. auf diese Weise kann der komplette Schwenkarm A_{So} somit werkzeuglos aus dem Schaltwerk R_{D} entnommen werden, wie in Fig. 13 anhand des Blockpfeils P₂ gezeigt, und so beispielsweise leicht repariert oder ausgetauscht werden. Auch lediglich Einzelteile des Schwenkarms A_{So}, wie beispielsweise Achsen, Lagerbuchsen oder das Verkleidungselement E_{SC}, können auf diese Weise einfach ausgetauscht werden.

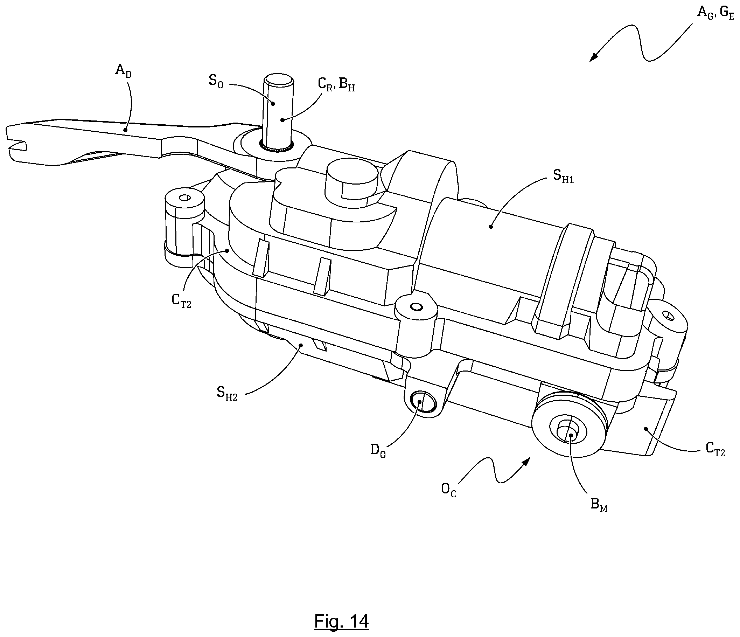

Figuren 14 bis 25 zeigen die weiter oben bereits in Bezug auf Fig. 6 bis 8 erwähnte Motor-Getriebeeinheit A_{G} des Schaltwerks R_{D} gemäß Fig. 2, 3 und 6 bis 8 in verschiedenen Ansichten und Schnittdarstellungen.

Fig. 14 zeigt die Motor-Getriebeeinheit A_{G} in einer schräg perspektivischen Untersicht von outboard. Aufgrund der Darstellung mit Blick auf die Unterseite der Motor-Getriebeeinheit A_{G} zeigt Fig. 14 die Motor-Getriebeeinheit A_{G} auf dem Kopf stehend, bezogen auf die Darstellung in den Fig. 2, 3 und 6 bis 8. Man erkennt in Fig. 14 insbesondere eine Abtriebswelle So, welche in der Darstellung von Fig. 6 mit dem dort gezeigten Gelenkbolzen L_{S1} zusammenfällt bzw. übereinstimmt.

Auf einen gerändelten Abschnitt der Abtriebswelle So aufgepresst ist ein Antriebsarm A_{D}, welcher zur Übertragung der Schaltkräfte von der Motor-Getriebeeinheit A_{G} auf das Schaltwerk R_{D} dient, siehe beispielsweise auch Fig. 6 und 13.

Weiter kennt man in Fig. 14 eine einen Taster B_{M} umfassende Betätigungseinrichtung O_{C}, die vorzugsweise zur Auswahl bestimmter Betriebs-Modi des elektrischen Schaltwerks R_{D} durch den Nutzer dient, sowie eine Betriebsanzeige in Form einer Leuchtdiode Do, durch welche dem Nutzer vorzugsweise bestimmte Betriebszustände des elektrischen Schaltwerks R_{D} signalisiert werden.

Außerdem ist in Fig. 14 erkennbar, dass die Motor-Getriebeeinheit A_{G} konstruktiv besonders platzsparend ausgebildet ist, indem die Gehäusehälften bzw. Gehäuseabschnitte S_{H1}, S_{H2} möglichst eng an den inneren Baugruppen der Motor-Getriebeeinheit A_{G} anliegend gestaltet sind, ersichtlich beispielsweise an der Formgebung der zeichnungsbezogen oberen Gehäusehälfte S_{H1}, welche im zeichnungsbezogen rechten Bereich die Form des darin enthaltenen Elektromotors E_{M} wiedergibt (vgl. Fig. 16, 20 und 22) und im zeichnungsbezogen linken Bereich eng an die Formen der in diesem Bereich enthaltenen Getriebeteile angelehnt ist (vgl. Fig. 16, 22 und 23).

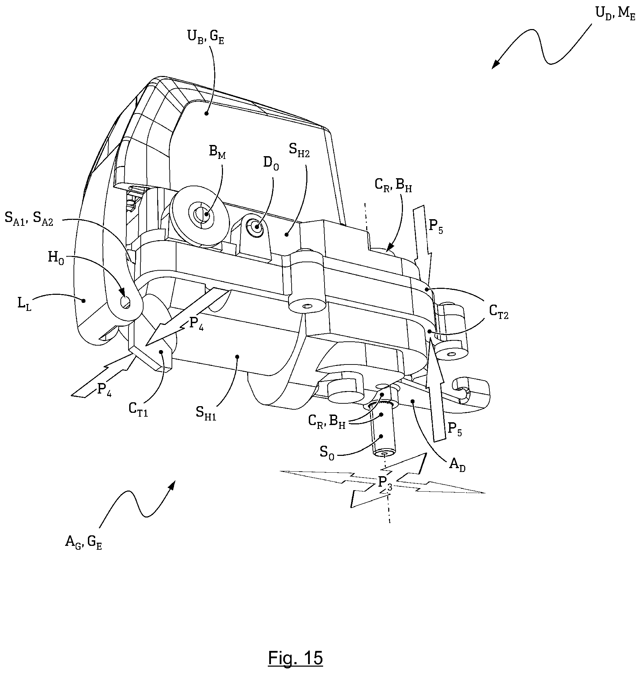

Fig. 15 zeigt eine Motor-Getriebeeinheit A_{G} ähnlich der in Fig. 14 gezeigten, mit eingelegtem Wechselakku U_{B} in einer schräg perspektivischen Untersicht von outboard. Die Motor-Getriebeeinheit A_{G} unterscheidet sich von der in Fig. 14 gezeigten Motor-Getriebeeinheit A_{G} lediglich durch einen konstruktiv anders ausgebildeten Antriebsarm A_{D}, welcher bei der Ausführungsform gemäß Fig. 15 als Stanzbiegeteil ausgebildet ist, während der Antriebsarm A_{D} bei der Ausführungsform gemäß Fig. 14 beispielsweise als Frästeil oder Spritzgussteil ausgebildet sein kann.

Mittels der Blockpfeil-Paare P₃, P₄ und P₅ ist in Fig. 15 angedeutet, auf welche Weise die Motor-Getriebeeinheit A_{G} im B-Knuckle bzw. Basiselement K_{B} bezüglich aller sechs räumlicher Bewegungsfreiheitsgrade fixiert und befestigt wird, ohne dass dabei eine geometrische Unter- bzw. Überbestimmung stattfindet. Dies erfolgt mittels einer in Fig. 15 durch das Blockpfeil-Paar P₃ visualisierten rotatorischen Achsverbindung C_{R}, die beispielsweise mittels zweier Gehäuseabsätze B_{H} realisiert werden kann, welche koaxial um die Abtriebswelle So angeordnet sind, und von denen einer oder beide bei der Montage der Motor-Getriebeeinheit A_{G} im Basiselement K_{B} z.B. in entsprechend formkorrespondierenden Ausnehmungen des Getriebehalters H_{G} und des Verbindungsstücks C_{B} des Basiselements K_{B} zur Anlage kommen (vgl. Fig. 6 und 8), sowie weiterhin mittels zweier translatorischer Anschlagsverbindungen C_{T1} und C_{T2}, deren Kraftübertragung bzw. translatorische Festlegung der Motor-Getriebeeinheit A_{G} in Fig. 15 durch die Blockpfeil-Paare P₄ und P₅ angedeutet sind.

Die rotatorische Achsverbindung der Motor-Getriebeeinheit A_{G} mit dem Basiselement K_{B} kann alternativ auch unmittelbar durch Eingriff der Abtriebswelle So mit einer formkorrespondierenden Ausnehmung im Basiselement K_{B} realisiert werden. Dies ist beispielsweise in Fig. 6 erkennbar, wo das zeichnungsbezogen untere Ende der Abtriebswelle So gleichzeitig den Gelenkbolzen L_{S1}zur schwenkbaren Führung des inneren Schwenkarms A_{Si}, und zudem die rotatorische Achsverbindung C_{R} zwischen der Motor-Getriebeeinheit A_{G} und dem Basiselement K_{B} bezüglich der in Fig. 15 mittels der Blockpfeile P₃ visualisierten Fixierung der Bewegungsfreiheitsgrade der Motor-Getriebeeinheit A_{G} bildet, indem gemäß Fig. 6 die Abtriebswelle So bei C_{CB2} mit dem Getriebehalter H_{G} und ggf. auch bei C_{B1} mit dem Verbindungsstück C_{B} (vgl. auch Fig. 8) in formschlüssigem Eingriff steht.

Die in Fig. 15 mittels der Blockpfeile P₄ visualisierte, horizontale translatorische Anschlagsverbindung C_{T1} kommt bei der Montage der Motor-Getriebeeinheit A_{G} im Basiselement K_{B} in einer formkorrespondierenden Ausnehmung R_{L} des Getriebehalters H_{G} (vgl. Fig. 10) formschlüssig zur Anlage und bildet so die Drehmomentabstützung zur Ableitung des Motor-Gegendrehmoments in das Basiselement K_{B}. Die weitere, in Fig. 15 mittels der Blockpfeile P₅ visualisierte, vertikale translatorische Anschlagsverbindung C_{T2} wird bei der Montage der Motor-Getriebeeinheit A_{G} im Basiselement K_{B} beispielsweise zwischen dem Getriebehalter H_{G} und dem Verbindungsstück C_{B} translatorisch in zeichnungsbezogen vertikaler Richtung formschlüssig eingeschlossen, und fixiert so die Motor-Getriebeeinheit A_{G} in vertikaler Richtung im Basiselement K_{B}. Die vertikale Fixierung der Getriebeeinheit A_{G} im Basiselement K_{B} kann auch durch andere, außen am Gehäuse der Motor-Getriebeeinheit A_{G} angeordnete Anschlagsflächen, die bei der Montage der Motor-Getriebeeinheit A_{G} im Basiselement K_{B} an entsprechenden Gegenanschlagsflächen des Basiselements K_{B} zur Anlage kommen, erzielt werden.

Fig. 16 zeigt eine Motor-Getriebeeinheit A_{G} gemäß Fig. 14 oder Fig. 15, zusammen mit Batterieeinrichtung bzw. Wechselakku U_{B} gemäß Fig. 2, 6, 7, 8 oder 15 im Längsschnitt. Neben einigen Teilen des Basiselements K_{B}, nämlich Getriebehalter H_{G} und Verbindungsstück C_{B}, erkennt man insbesondere die formschlüssige Festlegung des Wechselakkus U_{B}, welche zeichnungsbezogen linksseitig mittels eines am Gehäuse des Wechselakkus U_{B} angeformten Nasenvorsprungs N_{P1} erfolgt, der unter einen am Verbindungsstück C_{B} angeformten Haltekragen S_{R} greift. Zeichnungsbezogen rechtsseitig erfolgt die Festlegung des Wechselakkus U_{B} im Basiselement K_{B} mittels des Rasthebels L_{L}, welcher um eine am Getriebehalter H_{G} angeordnete Rasthebel-Schwenkachse A_{L} schwenkbar mit dem Getriebehalter H_{G} verbunden ist, und mittels eines angeformten Nasenvorsprungs N_{P2} formschlüssig sowie unter Erzeugung einer elastischen Spannkraft F_{E} über eine am Wechselakku U_{B} angeformte Rasterhebung P_{L} greift. Die Spannkraft F_{E} entsteht durch elastische Verformung sowohl des Rasthebels L_{L} als auch des Gehäuses des Wechselakkus U_{B} sowie der beiden Gehäusehälften S_{H1} und S_{H2} der Motor-Getriebeeinheit A_{G}.

Allerdings weist der Rasthebel L_{L} zur schwenkbaren Verbindung mit der Rasthebel-Schwenkachse A_{L}, welche ihrerseits wiederum fest mit dem Getriebehalter H_{G} verbunden ist (vgl. Fig. 10), ein zeichnungsbezogen vertikal verlaufendes Langloch Ho auf. Dies bedeutet, dass die formschlüssige elastische Verspannung F_{E} des Rasthebels L_{L} nicht über die Schwenkachse A_{L} zunächst in den Getriebehalter H_{G} eingeleitet und erst von diesem wieder auf die untere Gehäusehälfte S_{H1} der Motor-Getriebeeinheit A_{G}, von dort auf die obere Gehäusehälfte S_{H1}, und schließlich wieder auf das Gehäuse des Wechselackus U_{B} geleitet werden muss, wodurch eine lange Toleranzkette mit der Gefahr entweder zu fester oder zu loser Verspannung F_{E} des Wechselakkus U_{B}, bzw. unerwünscht große Veränderungen dieser Spannkraft F_{E} über der Zeit, entstehen würde.

Dank des Langlochs Ho kann sich der Rasthebel L_{L} jedoch in zeichnungsbezogen vertikaler Richtung auf und ab bewegen. Die elastische Spannkraft F_{E} entsteht damit erst kurz vor dem abschließenden Einrasten des Rasthebels L_{L} aufgrund direkter Anlage einer hierzu am Rasthebel L_{L} angeordneten, schrägen Anlagefläche S_{A1} an einer am Getriebehalter H_{G} formkorrespondierend angeordneten Gegendruckfläche S_{A2} (vgl. Fig. 6, 8, 9, 10 und 15). Auf diese Weise ergibt sich für die Befestigung des Wechselakkus U_{B} durch den Rasthebel L_{L} eine maximal verkürzte Toleranzkette auf den direkten Weg der Kraft F_{E} zwischen der Anlagefläche S_{A1} des Rasthebels L_{L} über untere und obere Gehäuseflansche F_{H1}, F_{H2} der Gehäusehälften S_{H1} und S_{H2} der Motor-Getriebeeinheit A_{G}, sowie über das Gehäuse des Wechselakkus U_{B} und dessen Nasenvorsprung N_{P2} zurück auf den Rasthebel L_{L}. Dies führt zu einer minimalen Aufaddition von Toleranzen und damit zu einer sicheren und dauerhaft reproduzierbaren Befestigung des Wechselakkus U_{B} auf der Motor-Getriebeeinheit A_{G}. bzw. im Basiselement K_{B}.

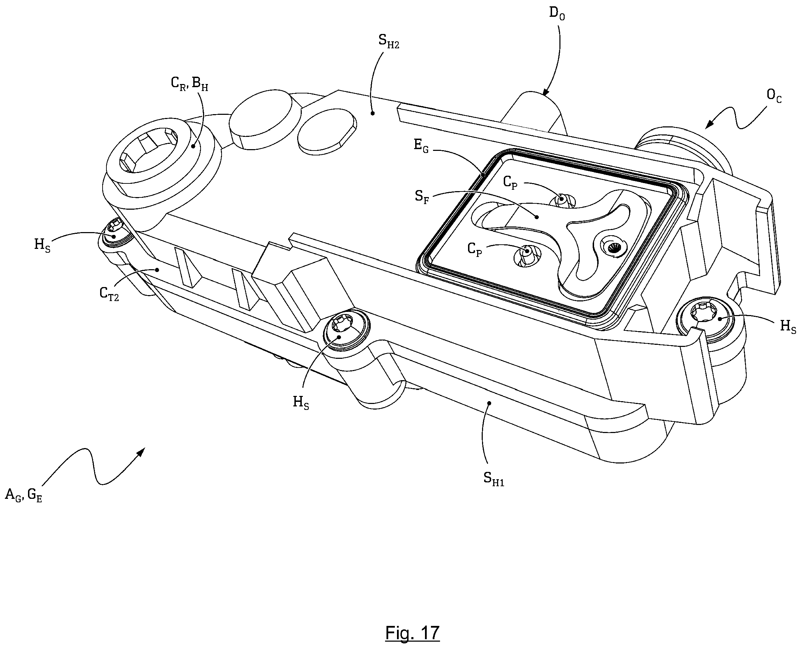

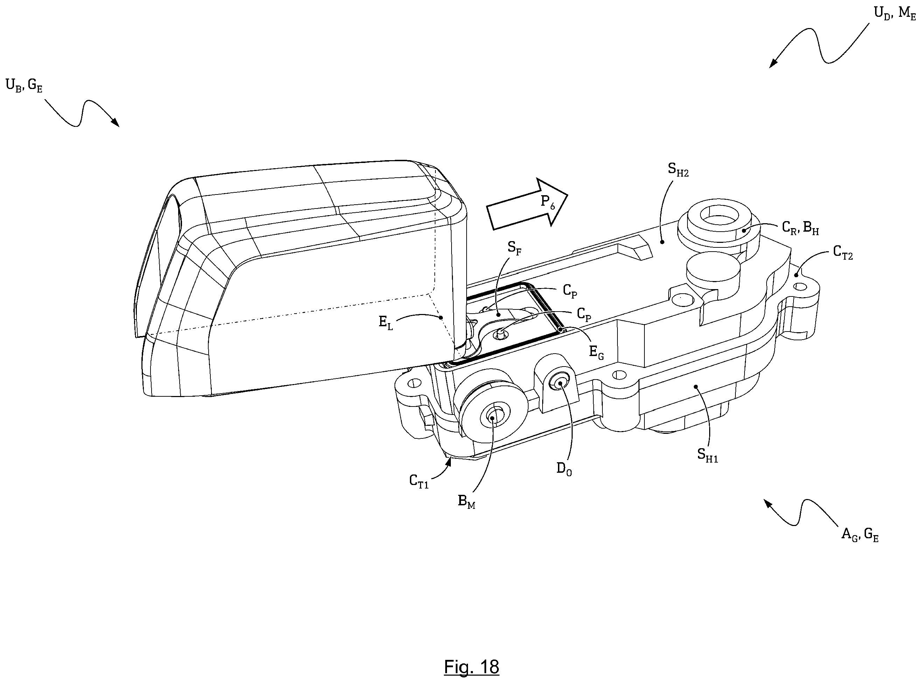

Fig. 17 und 18 zeigen die Motor-Getriebeeinheit gemäß Fig. 14 oder 15 bzw. gemäß Fig. 16 jeweils in schräg perspektivischen Draufsichten auf die elektrische Kontakteinrichtung der Motor-Getriebeeinheit, welche auf ihrer Oberseite Kontaktpins C_{P} zur elektrischen Kontaktierung zwischen dem Wechselakku U_{B} und der Motor-Getriebeeinheit A_{G} aufweist.

Außer den beiden Gehäusehälften S_{H1} und S_{H2} der Motor-Getriebeeinheit A_{G} und den an der oberen Gehäusehälfte S_{H2} angeordneten Kontaktpins C_{P} erkennt man eine umlaufende Elastomerdichtung E_{G}, die für einen sicheren Schutz sowohl der antriebsseitigen Kontaktpins C_{P} als auch der entsprechenden Gegen-Kontaktflächen am Wechselakku U_{B} sorgt. Die antriebsseitigen Kontaktpins C_{P} sind als federbelastete Metallstifte ausgebildet, deren Federbelastung eine sichere Stromübertragung gewährleistet.

Um beim Aufschieben der Batterie, was gemäß Fig. 18 in Longitudinalrichtung gemäß Blockpfeil P₆ erfolgt, in den Darstellungen von Fig. 15 bis 19 also zeichnungsbezogen im wesentlichen horizontal, eine Beschädigung bzw. ein Verbiegen der Kontaktpins C_{P} beispielsweise durch Kontakt mit der Vorderkante E_{L} des Wechselakkus U_{B} zu vermeiden (vgl. auch Fig. 16), sind die Kontaktpins C_{P} durch eine Biegefeder S_{F} geschützt, welche beim Aufschieben des Wechselakkus U_{B} dafür sorgt, dass dessen Vorderkante E_{L} leicht angehoben wird und somit ohne Gefahr des Verbiegens der Kontaktpins C_{P} über diese hinweggleiten kann.

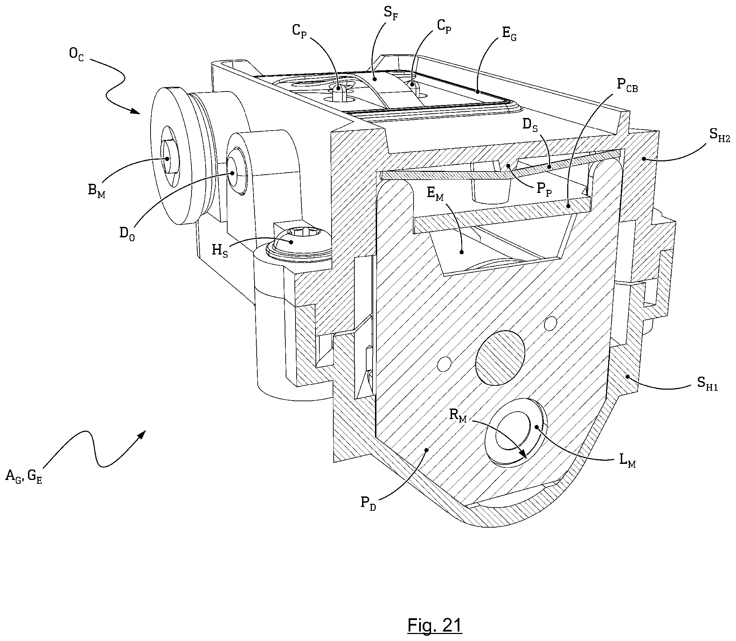

Bei der abschließenden Verriegelung des Wechselakkus U_{B} mittels des Rasthebels L_{L} (vgl. Fig. 18) wird die Biegefeder S_{F} entsprechend heruntergedrückt, und die Kontaktpins C_{P} können entsprechende Gegenkontaktflächen auf der Unterseite des Wechselakkus U_{B} problemlos kontaktieren. Der Schutz durch die Biegefeder S_{F} für die Kontaktpins C_{P} gegen Verbiegen beim Aufschieben des Wechselakkus U_{B} ist besonders gut auch in Fig. 21 zu erkennen.

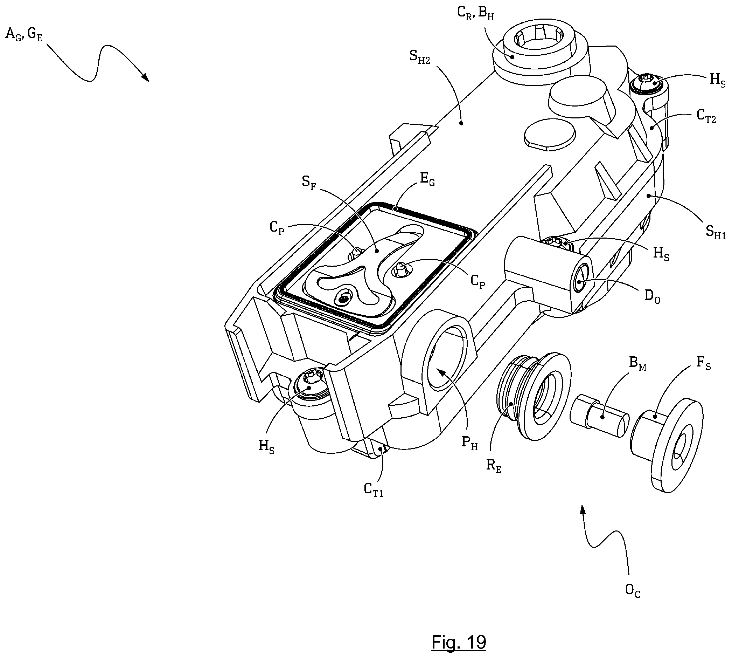

Fig. 19 zeigt die Motor-Getriebeeinheit gemäß Fig. 14 oder Fig. 15 bis 18 in einer schräg perspektivischen Ansicht von oben/outboard, mit einer Explosionsdarstellung der Betätigungseinrichtung O_{C}. Man erkennt, dass sich die Betätigungseinrichtung O_{C} durch die geringe Anzahl von lediglich drei Einzelteilen, nämlich durch den Betätigungstaster B_{M}, ferner eine starre Abdeckmuffe Fs sowie eine Elastomeraufnahme R_{E} auszeichnet. Neben der dadurch kostengünstigen Produktion und Montage sind die Einzelteile B_{M}, F_{S} und R_{E} der Betätigungseinrichtung O_{C} so ausgebildet, dass diese sowohl den beweglichen, unverlierbaren Einschluss des Betätigungstasters B_{M} in der Abdeckmuffe F_{S} sowie eine dauerhaft dichte mechanische Anbindung der Betätigungseinrichtung O_{C} am Gehäuse S_{H2} der Motor-Getriebeeinheit A_{G} gewährleistet. Hierdurch werden Kosten bei Produktion und Montage eingespart, und es wird eine dauerhaft zuverlässige Funktion der Betätigungseinrichtung O_{C} gewährleistet.

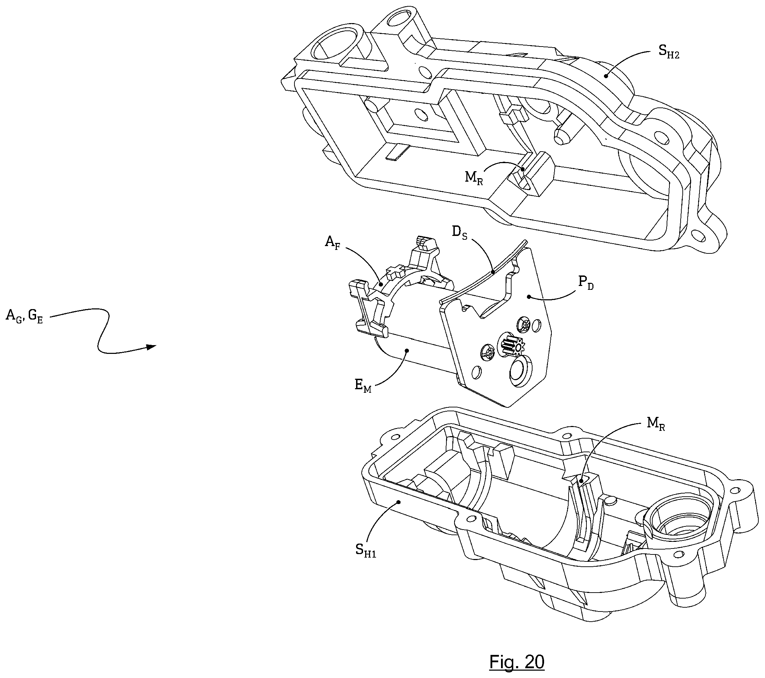

In Fig. 20 ist die Motor-Getriebeeinheit A_{G} gemäß Fig. 14 oder Fig. 15 bis 19 in einer schräg perspektivischen Ansicht in einem teilweise zerlegten Zustand dargestellt. Klarheitshalber sind in der Darstellung von Fig. 20 diverse Teile bzw. Baugruppen weggelassen, insbesondere Verbindungselemente zwischen den beiden Gehäusehälften S_{H1} und S_{H2} der Motor-Getriebeeinheit A_{G} sowie die meisten der in der Motor-Getriebeeinheit A_{G} enthaltenen Elektronik- und Getriebebauteile.

Man erkennt, dass der Elektromotor E_{M} mittels einer Trägerblecheinrichtung P_{D} im Gehäuse S_{H1}, S_{H2} der Motor-Getriebeeinheit A_{G} montiert wird (vgl. Fig. 21), wobei zur Montage des Elektromotors E_{M} dieser zunächst mit der Trägerblecheinrichtung P_{D} verschraubt, und sodann die Einheit aus Elektromotor E_{M} und Trägerblecheinrichtung P_{D} in entsprechende, im wesentlichen prismatisch ausgeformte Steckaufnahmen M_{R}, welche in den beiden Gehäusehälften S_{H1}, S_{H2} der Motor-Getriebeeinheit A_{G} eingeformt sind, lediglich noch eingesteckt wird. Dabei wird durch eine Federeinrichtung D_{S} gewährleistet, dass eine maßlich definierte sowie dauerhaft spielfreie Fixierung der Einheit aus Elektromotor E_{M} und Trägerblecheinrichtung P_{D} im Gehäuse S_{H1}, S_{H2} der Motor-Getriebeeinheit A_{G} gewährleistet ist.

Letzteres ist besonders deutlich in der Darstellung von Fig. 21 erkennbar, welche die Motor-Getriebeeinheit A_{G} gemäß Fig. 14 oder Fig. 15 bis 20 im montierten Zustand in einer perspektivischen Schnittdarstellung zeigt, wobei u.a. die Trägerblecheinrichtung P_{D} sowie die Federeinrichtung D_{S} geschnitten dargestellt sind. Man erkennt, dass ein im Inneren der oberen Gehäusehälfte S_{H2} angeordneter Druckvorsprung P_{P} die Federeinrichtung Ds beim Verschließen des Gehäuses S_{H1}, S_{H2} durch die Gehäuseschrauben Hs zeichnungsbezogen nach unten vorspannt, wodurch die Trägerblecheinrichtung P_{D} sowie der mit der Trägerblecheinrichtung P_{D} verschraubte Elektromotor E_{M} bezüglich ihrer Position im Getriebegehäuse S_{H1}, S_{H2} maßlich exakt definiert sowie spielfrei fixiert ist. Eine weitere Fixierung des Elektromotors E_{M} in dessen hinterem Bereich ist durch die Zusatzhalterung A_{F} gebildet.

Fig. 21 zeigt ferner die Position der Elektronikplatine P_{CB}, auf welcher die (nichtdargestellten) Komponenten der elektronischen Steuerung des Fahrradschaltwerks R_{D} angeordnet sind.

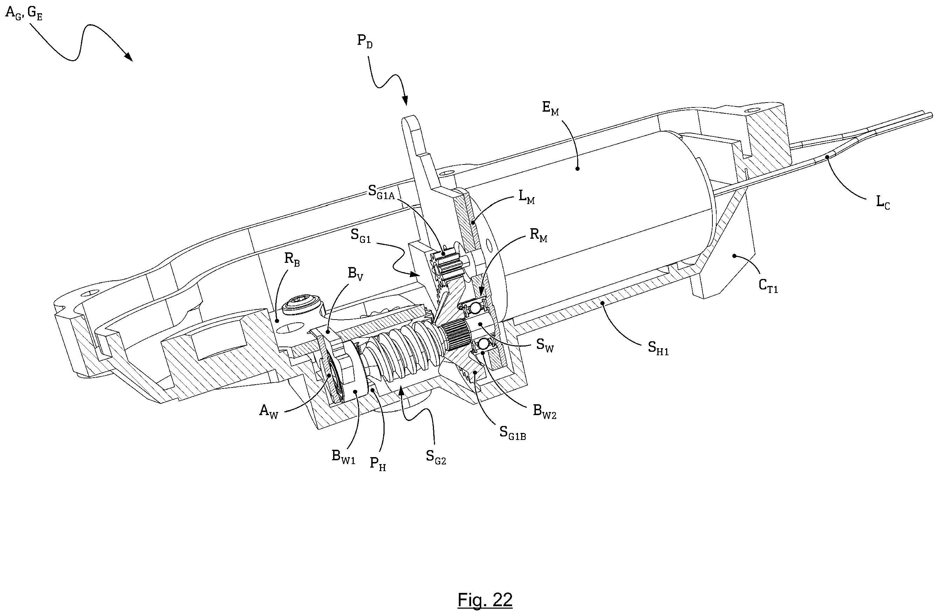

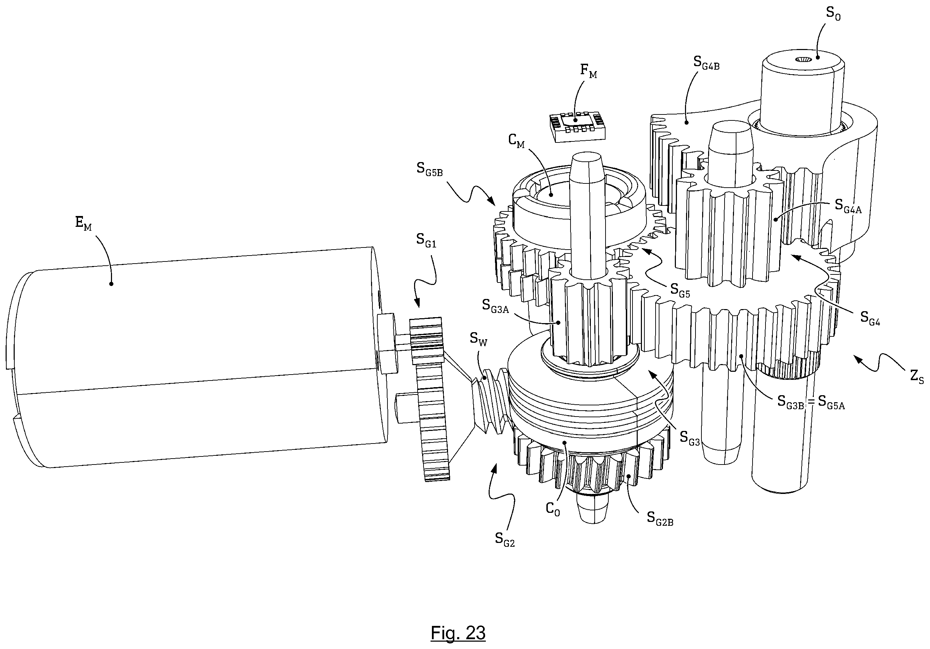

In Fig. 22 ist die Motor-Getriebeeinheit A_{G} gemäß Fig. 14 oder Fig. 15 bis 21 im teilweise montierten Zustand in einer perspektivischen Längsschnittdarstellung gezeigt. Hierbei ist u.a. die obere Gehäusehälfte S_{H2} sowie der Großteil der Getriebebauteile (vgl. Fig. 23 bis 25) klarheitshalber weggelassen. Die in Fig. 22 sichtbare elektrische Anschlussleitung L_{C} des Elektromotors E_{M} ist in Bezug auf die in den Figuren dargestellten Ausführungsformen lediglich symbolisch zu verstehen, da bei diesen Ausführungsformen die Steuerelektronik P_{CB} des Schaltwerks R_{D} (vgl. Fig. 21), und damit auch die elektrische Anschlussleitung Lc, wie der Elektromotor E_{M} selbst, vollständig im Gehäuse der Motor-Getriebeeinheit A_{G} angeordnet ist.

Man erkennt in Fig. 22 wieder die Motorbefestigung im Getriebegehäuse S_{H1}, S_{H2} mittels der Trägerblecheinrichtung P_{D}, sowie außerdem die Gestaltung der ersten beiden Getriebestufen S_{G1}, S_{G2} der Motor-Getriebeeinheit A_{G}, insbesondere die Lagerung der Schneckenwelle Sw. Diese umfasst zwei Wellenlager Bw, die bei der dargestellten Ausführungsform als Kugellager ausgebildet sind, jedoch auch in Form von Gleitlagern, insbesondere Sinterlagern vorliegen können.

Die dargestellte Lagerung mittels zweier Kugellager B_{W1}, B_{W2} ist in Axialrichtung der Schneckenwelle Sw als Fest-/Loslagerung ausgebildet. Das zeichnungsbezogen linke Kugellager B_{W1} ist mittels einer mit der unteren Gehäusehälfte S_{H1} verschraubten, hier plattenförmigen Lagersitzhalterung R_{B}, dabei in Axialrichtung mittels eines hier ebenfalls plattenförmigen, zeichnungsbezogen oben von der Lagersitzhalterung R_{B} und zeichnungsbezogen unten in einer Aufnahmeausnehmung der unteren Gehäusehälfte S_{H1} gehaltenen Axialanschlags Aw sowie mittels eines Gehäusevorsprungs P_{H} der unteren Gehäusehälfte S_{H1} fixiert. In radialer Richtung ist das linke Kugellager B_{W1} mittels einer Vertikalhalterung Bv zwischen der Lagersitzhalterung R_{B} und der unteren Gehäusehälfte S_{H1} eingespannt. Damit ist das linke Kugellager B_{W1} sowohl in Axialrichtung als auch in Radialrichtung, bezogen auf die Schneckenwelle Sw, spielfrei in der unteren Gehäusehälfte S_{H1} festgelegt.

Das zeichnungsbezogen linke Kugellager B_{W1} kann beispielsweise eine Loslagerung der Schneckenwelle Sw dadurch bilden, dass für die Aufnahme des zeichnungsbezogen linksseitigen Lagerzapfens der Schneckenwelle Sw im Lagerinnenring des linken Kugellagers B_{W1} beispielsweise eine Übergangspassung gewählt wird, so dass sich der linke Lagerzapfen der Schneckenwelle Sw in Axialrichtung gegenüber dem linken Kugellager B_{W1} bewegen und so beispielsweise durch Toleranzen oder Temperaturänderungen auftretende Axialspannungen ausgleichen kann.

Das zeichnungsbezogen rechte Kugellager B_{W2} ist in Radialrichtung in eine Aufnahmeausnehmung R_{M} der Motor-Trägerblecheinrichtung P_{D} spielfrei eingepresst (vgl. Fig. 3), und seine Position in Axialrichtung zeichnungsbezogen nach rechts ist bei der dargestellten Ausführungsform durch eine den Bereich des Kugellagers rückwärtig überdeckende, zweite Materiallage L_{M} der Motor-Trägerblecheinrichtung P_{D} festgelegt (vgl. ebenfalls Fig. 21). Der zeichnungsbezogen rechtsseitige Lagerzapfen der Schneckenwelle Sw ist dabei beispielsweise, im Sinne einer Festlagerung der Schneckenwelle Sw in Axialrichtung, fest in den Lagerinnenring des zugeordneten Kugellagers B_{W2} eingepresst.

Auf diese Weise ergibt sich eine maßlich exakt definierte Fixierung der Schneckenwelle Sw gegenüber dem Getriebegehäuse S_{H1} sowie insbesondere gegenüber den jeweils angrenzenden Getriebebauteilen der beiden Getriebestufen S_{G1}, S_{G2}. Die beim Betrieb des Schaltwerks R_{D} im Getriebe auftretenden Maximalkräfte wirken aufgrund der Schaltlogik des Schaltwerks R_{D} im Getriebe gemäß Darstellung von Fig. 22 zeichnungsbezogen nach rechts auf die Schneckenwelle Sw, und können somit über die Bauteilkette "rechtes Ende der Schneckenwelle Sw" -> "zweites Zahnrad S_{G1B} der ersten Getriebestufe S_{G1}" -> "Kugellager B_{W2}" -> "Trägerblecheinrichtung P_{D}" sicher und mit minimalem Getriebespiel in das Getriebegehäuse S_{H1}, S_{H2} eingeleitet werden. Alternativ oder zusätzlich können derartige auf bzw. in der Schneckenwelle Sw nach rechts wirkenden Reaktionskräfte auch durch ein rechtsseitiges balliges Ende der Schneckenwelle Sw direkt in die zweite Materiallage L_{M} der Motor-Trägerblecheinrichtung P_{D} eingeleitet werden.

Einfachere, kostengünstigere en des Getriebes können anstelle der Kugellager B_{W1}, B_{W2} beispielsweise auch Sintergleitlager verwenden. Insbesondere in diesem Fall kann die Schneckenwelle Sw axial auch beidseitig in einer Loslagerung und somit axial fliegend gelagert sein, wobei die beispielsweise beidseitig balligen Enden der Schneckenwelle Sw je nach Kraftwirkung entweder rechtsseitig an der Motor-Trägerblecheinrichtung P_{D} oder linksseitig an dem Axialanschlag Aw der Lagersitzhalterung R_{B} anschlagen.

Bei der Betrachtung des Getriebes des Fahrradschaltwerk R_{D} ist auch zu berücksichtigen, dass die Darstellungen gemäß Figuren 14 bis 25 sämtlich vergrößert sind, teilweise stark vergrößert. Bei der dargestellten Ausführungsform des Getriebes weisen beispielsweise die Lagerzapfen der Schneckenwelle Sw einen Durchmesser von lediglich 2 mm auf, womit das in Rede stehende Fahrradschaltwerk R_{D} für den Fachmann klar ersichtlich in das Gebiet der Feinwerktechnik fällt.

Fig. 23 zeigt nochmals den Elektromotor sowie zudem das vollständige Getriebe der Motor-Getriebeeinheit A_{G} gemäß Fig. 14 oder Fig. 15 bis 22 in einer perspektivischen Darstellung ohne Gehäuse. Man erkennt wieder die bereits oben mit Bezug auf Fig. 22 beschriebene erste Getriebestufe S_{G1} sowie die Schneckenwelle Sw der zweiten Getriebestufe S_{G2}. Die Schneckenwelle Sw wirkt in der zweiten Getriebestufe S_{G2} auf ein schrägverzahntes Stirnrad S_{G2B}, welches über eine hier schematisch angedeutete Überlast-Rastkupplung Co auf ein geradverzahntes Stirnrad S_{G3A} der dritten Getriebestufe S_{G3} wirkt. Von dort wird das Antriebsdrehmoment über eine ein Stufenzahnrad Z_{S} mit Verzahnungen S_{G3B}=S_{G5A} und S_{G4A} umfassende vierte Getriebestufe S_{G4} auf ein Segmentzahnrad S_{G4B} geleitet, welches auf die Abtriebswelle So aufgepresst ist. Die Abtriebswelle So treibt, wie weiter oben beschrieben und insbesondere in Fig. 6 und 13 bis 15 erkennbar, mittels direkter Verbindung den Antriebsarm A_{D}, damit das Schaltwerksparallelogramm P_{S} und somit die translatorische Schwenkbewegung des Schaltungselements bzw. P-Knuckles K_{P} an.

Fig. 23 zeigt weiterhin eine auf einer fünften (nichtdargestellten) Getriebewelle angeordnete fünfte Getriebestufe S_{G5} mit einem Doppel-Stirnzahnrad S_{G5B}. Die fünfte Getriebestufe S_{G5} dient der spielfreien Übertragung der Drehwinkelposition des Segmentzahnrads S_{G4B}, damit der Winkelposition des Antriebsarms A_{D}, und hiermit wiederum des Schaltwerksparallelogramms P_{S}, schlussendlich also einer exakten Übertragung der horizontalen Schaltposition von Schaltungselement K_{P} und Kettenkäfig C_{G} relativ zur Ritzelkassette Cs des Fahrrads (vgl. Fig. 1 und 3) auf eine jeweils entsprechende Drehwinkelposition des Doppel-Stirnzahnrads S_{G5B}.

In dem Doppel-Stirnzahnrad S_{G5B} ist hierzu ein Magnetelement C_{M} aufgenommen, beispielsweise eingepresst, welches seine Rotationsposition über (nicht eingezeichnete) Magnetfeldlinien einem elektronischen Magnetfeldsensor F_{M} mitteilt, welcher relativ zum Gehäuse S_{H1}, S_{H2} der Motor-Getriebeeinheit A_{G} fixiert ist, beispielsweise auf der Elektronikplatine P_{CB} angeordnet, welche im Getriebegehäuse S_{H1}, S_{H2} aufgenommen ist, vgl. die in Fig. 21 geschnitten gezeigte Elektronikplatine P_{CB}. Getriebegehäuse S_{H1}, S_{H2} sowie Elektronikplatine P_{CB} sind in der Darstellung von Fig. 23 klarheitshalber weggelassen.

Da die Getriebestufen S_{G4}, S_{G3} und S_{G2} aufgrund der permanenten Federwirkung der Schwenkarmfeder S_{AS} (vgl. Fig. 6) grundsätzlich unter einer sich aus dieser Federwirkung ergebenden Kraftvorspannung in der sich aus der Federkraft der Schwenkarmfeder S_{AS} ergebenden Drehrichtung stehen, ist bereits jegliches Zahnspiel dieser Getriebestufen S_{G4} bis S_{G2} bis hin zum entsprechenden Anschlag der Zahnflanken des schrägverzahnten Getriebezahnrads S_{G2B} an den entsprechenden Gegen-Zahnflanken der Schneckenwelle Sw sowohl im Stillstand als auch im Normalbetrieb des Schaltwerks R_{D} eliminiert.

Die zum rotatorischen Antrieb des Magnetelements C_{M} dienende fünfte Getriebestufe S_{G5} mit dem Doppel-Stirnzahnrad S_{G5B} hat somit lediglich noch ihr eigenes Zahnspiel gegenüber dem Stufenzahnrad Z_{S} zu eliminieren, um mit hoher Genauigkeit spielfrei die Schwenk- bzw. Horizontalposition L_{P} des Kettenkäfigs C_{G} (vgl. Fig. 3) auf eine entsprechende Drehwinkelposition des Magnetelements C_{M} abzubilden.

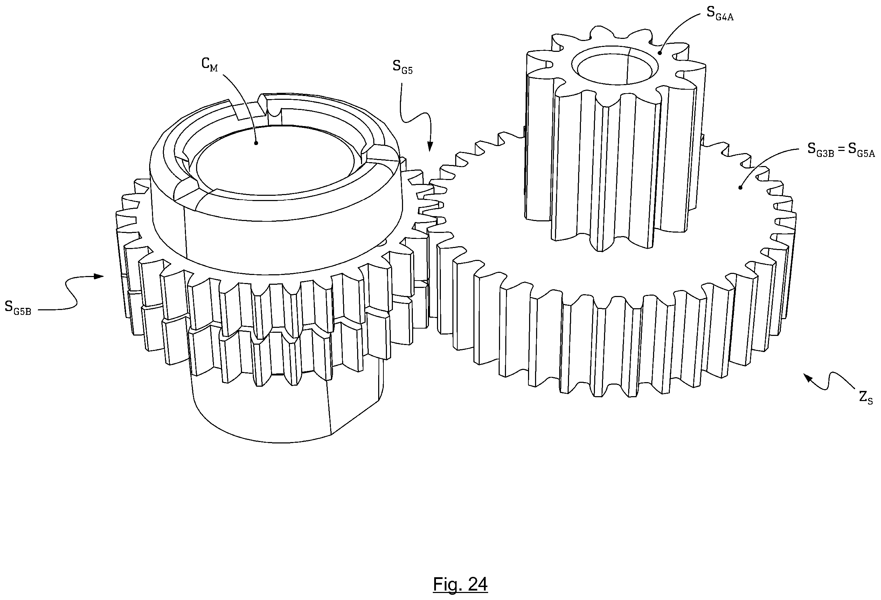

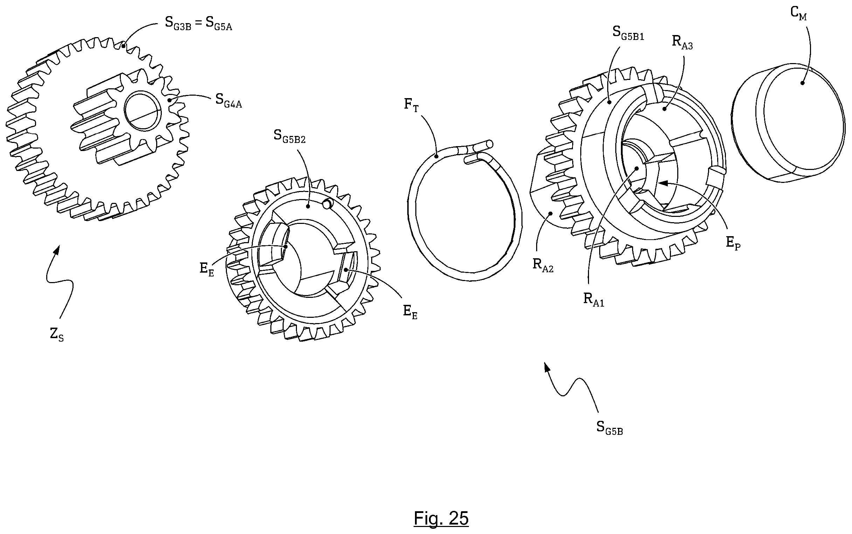

Fig. 24 und 25 zeigen das Doppel-Stirnzahnrad S_{G5B} nochmals in weiter vergrößerter Darstellung, wobei zusätzlich jeweils nochmals das Stufenzahnrad Z_{S} abgebildet ist, mit dessen Verzahnung S_{G3B}=S_{G5A} das Doppel-Stirnzahnrad S_{G5B} spielfrei kämmt.

In Fig. 25 erkennt man die aus lediglich exakt drei Einzelteilen S_{G5B1}, S_{G5B2} und F_{T} bestehende Konfiguration des Doppel-Stirnzahnrads S_{G5B}, welches ein Hauptzahnrad S_{G5B1}, ein Hilfszahnrad S_{G5B2} und eine Spannfeder F_{T} umfasst.

Dabei stellt das Hauptzahnrad S_{G5B1} sowohl eine innenzylindrische Aufnahmefläche R_{A1} zur rotatorischen Lagerung des Doppel-Stirnzahnrads S_{G5B} auf einer zugehörigen (nicht dargestellten) fünften Getriebewelle bereit, als auch eine außenzylindrische Lagerfläche R_{A2} zur rotierbaren Lagerung des Hilfszahnrads S_{G5B2} auf dem Hauptzahnrad S_{G5B1}, und zudem eine innenzylindrische Aufnahmefläche R_{A3}, in der das Magnetelement C_{M} durch Einpressen aufgenommen wird, vgl. Fig. 24.

Hauptzahnrad S_{G5B1} und Hilfszahnrad S_{G5B2} des Doppel-Stirnzahnrads S_{G5B} werden bezüglich ihrer in Fig. 24 ersichtlichen axialen Relativposition durch eine Rastverbindung E_{E}, E_{P} mittels zweier am Hilfszahnrad S_{G5B2} angeordneter, nach radial innen weisender elastischer Rastelemente E_{E} miteinander verrastet, indem die elastischen Rastelemente E_{E} beim axialen Zusammenfügen von Hauptzahnrad S_{G5B1} und Hilfszahnrad S_{G5B2} in formkorrespondierende, nach radial außen weisende Rastvorsprünge E_{P} des Hauptzahnrads S_{G5B1} einrasten. Die elastischen Rastelemente E_{E} und die formkorrespondierenden Rastvorsprünge E_{P} sind dabei so geformt und in ihrer Ausdehnung in Umfangsrichtung von Hauptzahnrad S_{G5B1} bzw. Hilfszahnrad S_{G5B2} so gewählt, dass Hauptzahnrad S_{G5B1} bzw. Hilfszahnrad S_{G5B2} sich auch im verrasteten Zustand noch um einige Winkelgrade gegeneinander verdrehen können.

Beim Zusammenfügen von Hauptzahnrad S_{G5B1} und Hilfszahnrad S_{G5B2} wird zudem die Spannfeder F_{T} in einem durch Hauptzahnrad S_{G5B1} und Hilfszahnrad S_{G5B2} gebildeten Hohlraum aufgenommen, wobei die beiden Federenden der Spannfeder F_{T} jeweils in entsprechenden Ausnehmungen von Hauptzahnrad S_{G5B1} bzw. Hilfszahnrad S_{G5B2} so aufgenommen werden, dass die Spannfeder F_{T} unter einer gewissen Vorspannung steht, welche Hauptzahnrad S_{G5B1} und Hilfszahnrad S_{G5B2} gegeneinander zu verdrehen sucht.

Diese Vorspannung bzw. federbelastete Relativverdrehung von Hauptzahnrad S_{G5B1} bzw. Hilfszahnrad S_{G5B2} sorgt dafür, dass bei der Zahnradpaarung S_{G5} zwischen dem Doppel-Stirnzahnrad S_{G5B} und dem damit kämmenden Stufenzahnrad Z_{S} nicht lediglich jeweils eine der beiden Zahnflanken der Zahnradpaarung S_{G5} an der entsprechenden Gegenflanke des jeweils anderen Zahnrads anliegt, sondern dass grundsätzlich beide Zahnflanken dieser Zahnradpaarung S_{G5}, unter Eliminierung des Zahnspiels, aneinander anliegen. Auf diese Weise wird somit eine exakte und spielfreie Abbildung der Horizontalposition L_{P} des Kettenkäfigs C_{G} des Fahrradschaltwerks R_{D} (vgl. Fig. 3) auf eine entsprechende Drehwinkelposition des Doppel-Stirnzahnrads S_{G5B} und damit des Magnetelements C_{M} gewährleistet.

Wie demzufolge insbesondere anhand der Darstellung von Fig. 23 deutlich wird, ist der elektronischen Steuerung des Schaltwerks, welche sich vorzugsweise auf der Elektronikplatine P_{CB} im Getriebegehäuse S_{H1}, S_{H2} befindet (vgl. Fig. 21), jederzeit die exakte Horizontal- bzw. Schwenkposition L_{P} des Kettenkäfigs C_{G} bekannt (vgl. Fig. 3). Da die Überlastkupplung Co des Getriebes gemäß Fig. 23 zwischen dem Stufenzahnrad Z_{S} und der Schnecken-Getriebestufe S_{G2} angeordnet ist, gilt dies grundsätzlich auch dann, wenn sich die Schaltposition L_{P} des Schaltwerks R_{D} durch starke externe Kräfte, beispielsweise bei einem Sturz oder durch Anstoß an ein Hindernis, verstellen sollte.

In einem solchen Fall kann die elektronische Steuerung P_{CB} des Schaltwerks R_{D} nach einer kurzen Pause, oder ausgelöst durch den Nutzer, wieder exakt in die zuvor eingenommene Schaltposition L_{P}, bzw. auch in jeden anderen gewünschten Gang bzw. Schaltposition verfahren werden, ohne dass mit der zuvor aufgetretenen, Verstellung des Schaltwerks R_{D} durch massive externe Kräfte ein Verlust an Schaltpräzision verbunden wäre.

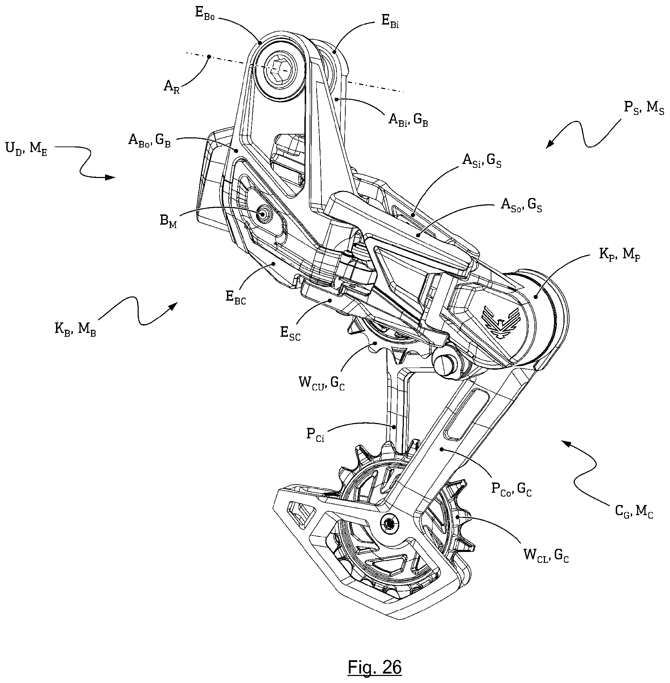

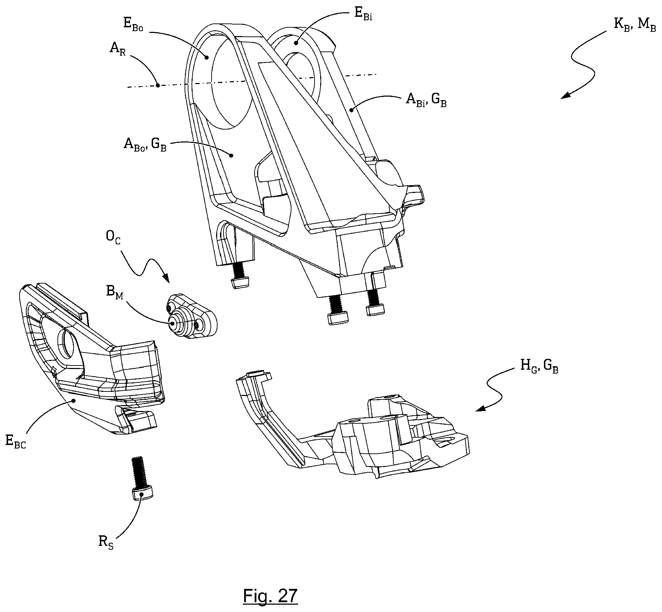

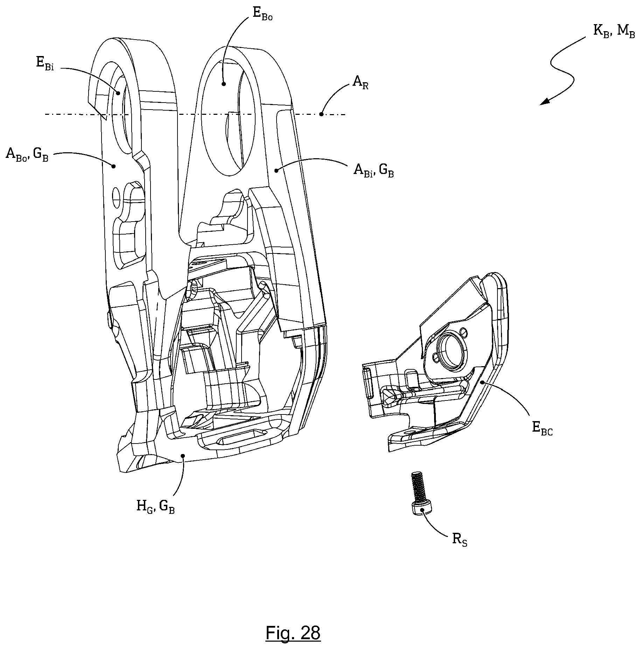

Figuren 26 bis 30 zeigen eine weitere Ausführungsform eines Fahrradschaltwerks R_{D} nach der vorliegenden Offenbarung. Wie aus Fig. 26 bis 28 hervorgeht, weist dieses Schaltwerk R_{D} ein auch vom Nutzer leicht austauschbares, vorzugsweise aus einem Polymerwerkstoff bestehendes Verkleidungselement E_{BC} auf. Das Verkleidungselement E_{BC} wird bei der dargestellten Ausführungsform von dem Taster B_{M} der Betätigungseinrichtung O_{C} durchdrungen, die zur Auswahl bestimmter Betriebs-Modi des elektrischen Schaltwerks R_{D} durch den Nutzer dient. Bei der dargestellten Ausführungsform ist das Verkleidungselement E_{BC} mittels insbesondere in Fig. 28 erkennbarer, durch elastische Hintergriffe gebildete Rastelemente mit der Struktur des Basiselements K_{B} verbunden, und zusätzlich mittels einer Sicherungsschraube R_{S} gesichert, welche bei der gezeigten Ausführungsform in ein unteres Bauteil des Basiselements K_{B} einschraubbar ist.

Das Verkleidungselement E_{BC} ist dabei so geformt und angeordnet, dass es die typischen Beschädigungen, die an Fahrradschaltwerken R_{D} im Betrieb häufig vorkommen, beispielsweise aufgrund von Stürzen, durch Umfallen des Fahrrads oder durch Kontakt mit Hindernissen wie beispielsweise Baumästen, Wurzeln oder Steinen beim sportlichen Einsatz, aufnehmen und somit die sonstigen Teile des Schaltwerks R_{D}, insbesondere metallische Teile, lackierte oder polierte Teile oder hochwertige Kunststoffteile, beispielsweise aus Faserverbundwerkstoffen, etwa Carbonwerkstoffen, vor solchen Beschädigungen schützen kann. Auf diese Weise kann eine einwandfreie Funktion und ein hochwertiges Erscheinungsbild des Fahrradschaltwerks R_{D} länger bzw. dauerhaft bewahrt werden, und im Fall einer Beschädigung kann das Verkleidungselement E_{BC}, insbesondere durch den Endbenutzer selbst, leicht ausgetauscht werden.

Ebenfalls ist es möglich und vorgesehen, Verkleidungselemente E_{BC} aus verschiedenen Werkstoffen, mit verschiedener Formgebung, mit unterschiedlicher Oberflächengestaltung oder mit Zusatzfunktionen wie beispielsweise Werkzeugaufnahmen etc. bereitzustellen. Auf diese Weise kann der Nutzer das Fahrradschaltwerk R_{D} auch nach längerer Zeit wieder aufwerten oder, ähnlich wie beim Austausch anderer in der vorliegenden Offenbarung beschriebener Module oder Baugruppen, ein Upgrade auf eine höherwertige Version des Schaltwerks R_{D} durchführen.

Auf diese Weise lassen sich somit wieder Ressourcen einsparen, die Lebensdauer des Fahrradschaltwerks R_{D} lässt sich erhöhen und die Reparierbarkeit durch den Endkunden selbst oder durch Fachwerkstätten wird erleichtert und verbessert.

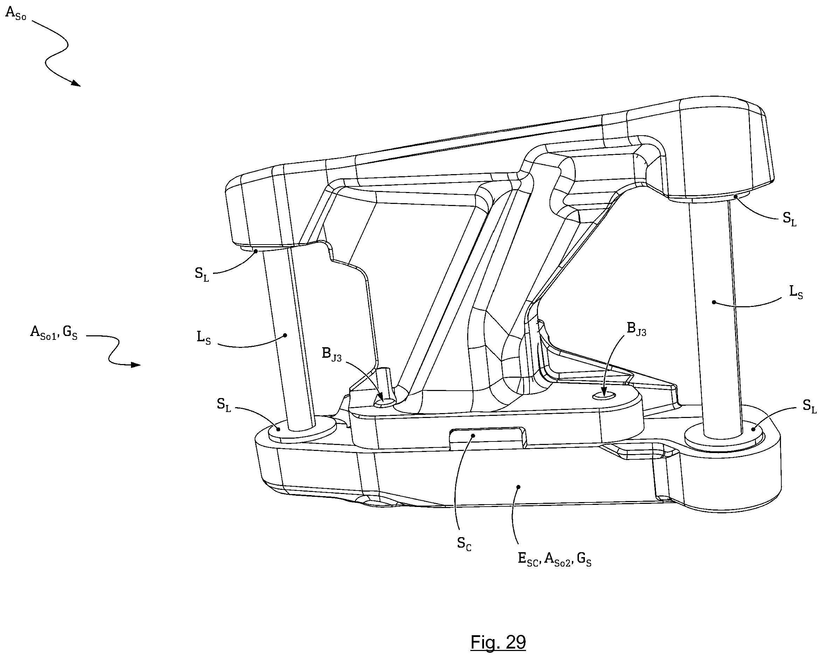

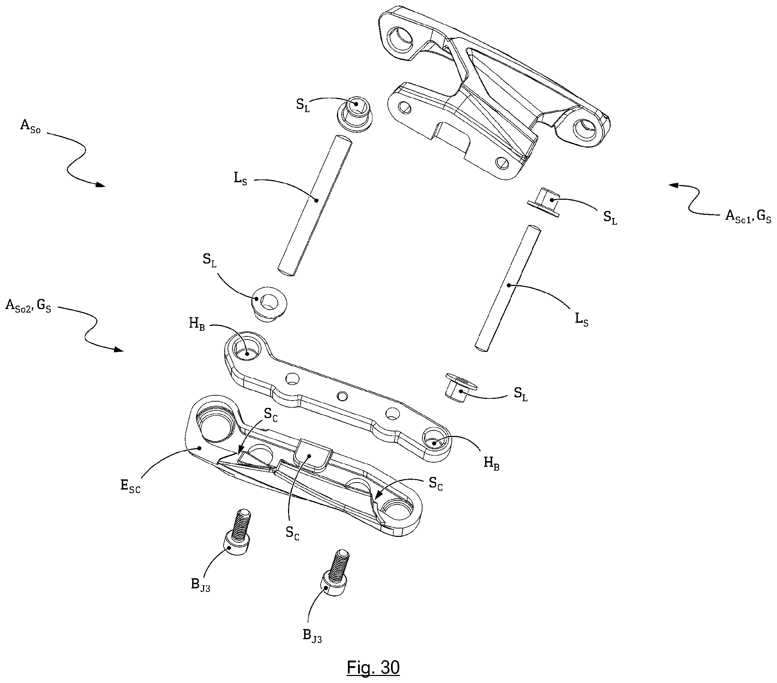

Fig. 29 zeigt einen äußeren Schwenkarm bzw. Parallelogrammarm A_{So} des Schaltwerks R_{D} gemäß Fig. 26 bis 28 in perspektivischer Darstellung mit Blickrichtung von inboard, während der Parallelogrammarm A_{So} in Fig. 30 in einer zerlegten Explosionsdarstellung wiedergegeben ist.

Der in Fig. 29 und 30 gezeigte Parallelogrammarm A_{So} des Schaltwerks R_{D} gemäß Fig. 26 bis 28 ist zunächst ähnlich aufgebaut wie der weiter oben mit Bezug auf Fig. 12 beschriebene Parallelogrammarm A_{So}. Der Parallelogrammarm A_{So} gemäß Fig. 29 und 30 ist ebenfalls im Wesentlichen zweiteilig aus Schwenkarm-Baugruppen A_{So1} und A_{So2} zusammengesetzt, und umfasst weiterhin in Lagerbuchsen S_{L} aufgenommene Gelenkbolzen L_{S}.

Dabei sind die Schwenkarm-Baugruppen A_{So1} und A_{So2} mittels zweier Verbindungsschrauben B_{J3} miteinander verbunden bzw. verschraubt. Die untere Schwenkarm-Baugruppe A_{So2} weist wieder ein den Parallelogrammarm bzw. Schwenkarm A_{So}schützendes Verkleidungselement E_{SC} auf, welches mittels Hinterschneidungen und/oder Schnapp- bzw. Rastverbindungen Sc, ähnlich wie in Fig. 13, mit der unteren Schwenkarm-Baugruppe A_{So2} verbindbar bzw. verbunden ist. Das Verkleidungselement E_{SC} schützt die anderen, vorzugsweise metallischen Bestandteile des Parallelogrammarms A_{So} vor Beschädigungen, und lässt sich bei Beschädigung oder Abnutzung auf einfache Weise tauschen, insbesondere auch durch den Endverbraucher.

Im Unterschied zu dem in Fig. 11 bis 13 dargestellten Parallelogrammarm A_{So}, welcher gemäß Fig. 13 werkzeuglos aus dem Schaltwerk R_{D} entnommen werden kann, sind bei dem Parallelogrammarm A_{So} gemäß Fig. 29 und 30 zur Entfernung aus dem Schaltwerk R_{D} zunächst die Verbindungsschrauben B_{J3} zu lösen und die Schwenkarm-Baugruppen A_{So1} und A_{So2} voneinander zu separieren, da der Parallelogrammarm A_{So} gemäß Fig. 26 und 30 in seiner unteren Schwenkarm-Baugruppe A_{So2} nicht - wie der Parallelogrammarm A_{So} gemäß Fig. 11 bis 13 - Durchgangsbohrungen H_{T} für die Gelenkbolzen Ls aufweist, sondern an dieser Stelle mit Sacklochbohrungen H_{B} versehen ist.

Fig. 31 zeigt ein Schaltungselement bzw. P-Knuckle K_{P} eines Schaltwerks R_{D} gemäß Fig. 2 oder gemäß Fig. 26, wobei gemäß Fig. 31 die Feder-/Dämpfereinrichtung D_{P} des Schaltwerks R_{D} aus dem Aufnahmegehäuse R_{H} des Schaltungselements K_{P} entfernt ist.

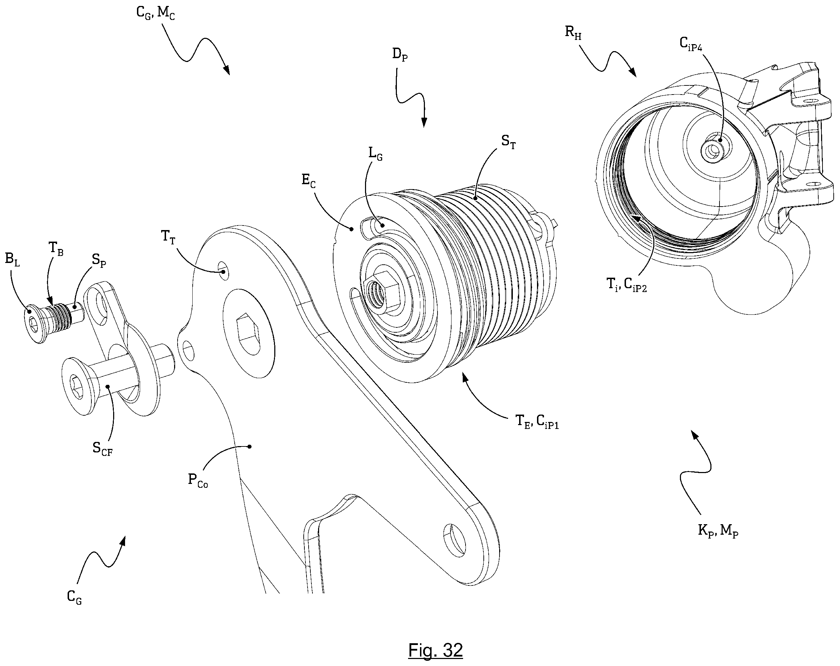

Bei den Schaltwerken entsprechend der vorliegenden Offenbarung liegt die Feder-/Dämpfereinrichtung D_{P}, wie in Fig. 31 dargestellt, vorzugsweise als einstückig handhabbares bzw. entnehmbares Modul vor, was beispielsweise auch aus Fig. 7 und 32 hervorgeht. Besonders bevorzugt ist die Feder-/Dämpfereinrichtung D_{P} dabei zusammen mit der Kettenkäfigeinrichtung C_{G} als einstückig handhabbare Baugruppe ausgebildet, was der strichliert gezeichneten und mit eingeklammerten Bezugszeichen versehenen Feder-/Dämpfereinrichtung D_{P} in Fig. 7 entspricht.

Hierdurch wird das Herausschrauben der Feder-/Dämpfereinrichtung D_{P} aus dem Aufnahmegehäuse R_{H} des Basiselements K_{B} aufgrund des großen Hebelarms, welcher durch die Kettenkäfigeinrichtung C_{G} gebildet wird, erheblich erleichtert. Unter anderem zu diesem Zweck weist die Kettenkäfigeinrichtung C_{G} einen in Inboardrichtung bzw. in Richtung der Feder-/Dämpfereinrichtung herausragenden Anschlagbolzen B_{L} auf (vgl. Fig. 7 und Fig. 33), welcher in eine in Fig. 6, 7 und 33 sichtbare Anschlagnut L_{G} eingreift, und somit Drehmomentübertragung von der Kettenkäfigeinrichtung C_{G} auf die Feder-/Dämpfereinrichtung D_{P}, zum Zweck des Herausschraubens der Feder-/Dämpfereinrichtung D_{P} aus dem Aufnahmegehäuse R_{H} erlaubt.

Dies bedeutet, dass auch die Feder-/Dämpfereinrichtung D_{P} werkzeuglos aus dem Aufnahmegehäuse R_{H} des Basiselements K_{B} entfernt werden kann, beispielsweise um die Feder-/Dämpfereinrichtung D_{P} im Fall einer Beschädigung reparieren oder austauschen zu können. Ferner ist es auch in Bezug auf die Feder-/Dämpfereinrichtung D_{P} möglich und vorgesehen, Feder-/Dämpfereinrichtungen D_{P} mit unterschiedlichen Funktionseigenschaften bereitzustellen, die vom Kunden wahlweise bzw. als Ersatz
teil erworben und - beispielsweise im Sinne eines Upgrade seines Fahrradschaltwerks R_{D} - gegeneinander bzw. gegen eine jeweils vorhandene Feder-/Dämpfereinrichtung D_{P} ausgetauscht werden können. Hierbei ist insbesondere an Feder-/Dämpfereinrichtungen D_{P} z.B. mit mechanischem Reibungsdämpfer einerseits, und mit einem höherwertigen Hydraulikdämpfer andererseits zu denken, oder an mechanische Reibungsdämpfer von unterschiedlicher Bauart, Masse und Qualität

Die Drehmomentübertragung von der Kettenkäfigeinrichtung C_{G} auf die Feder-/Dämpfereinrichtung D_{P} zum Zweck des Herausschraubens der Feder-/Dämpfereinrichtung D_{P}, zusammen mit der Kettenkäfigeinrichtung C_{G}, aus dem Basiselement-Gehäuse R_{H} unter Verwendung der Kettenkäfigeinrichtung C_{G} als drehmomenterzeugender Handgriff geht nochmals aus Fig. 32 hervor. Man erkennt den Anschlagbolzen B_{L}, welcher mittels seines Bolzengewindes T_{B} in ein entsprechendes Durchgangsgewinde T_{T} der äußeren Kettenkäfig-Leitblecheinrichtung P_{Co} eingeschraubt wird dergestalt, dass das als Anschlagstift S_{P} ausgebildete Ende des Anschlagbolzens B_{L} in die Anschlagnut L_{G} eingreift, wenn das äußere Kettenkäfig-Leitblech P_{Co} mittels der Käfig-Befestigungsschraube S_{CF} mit dem Dämpfermodul D_{P} verbunden ist.

Somit kann durch Rotation der Kettenkäfigeinrichtung C_{G} mit der Hand im Gegenuhrzeigersinn, über das als Anschlagstift S_{P} ausgebildete Ende des Anschlagbolzens B_{L} und über das in Fig. 32 zeichnungsbezogen obere Ende der Anschlagnut L_{G}, ein genügend hohes Drehmoment auf das Deckelelement Ec aufgebracht werden, um dieses mittels des Gewindes T_{E} aus dem Basiselement-Gehäuse R_{H} herausschrauben zu können. Das Hineinschrauben erfolgt analog, wobei die Drehmomentübertragung in diesem Fall über das als Anschlagstift S_{P} ausgebildete Ende des Anschlagbolzens B_{L} und über das in Fig. 32 zeichnungsbezogen untere Ende der Anschlagnut L_{G} erfolgt.

Nach dem Herausschrauben liegt das Kettenführungseinrichtungs-Modul Mc einschließlich der Feder-/Dämpfereinrichtung D_{P} als einstückig handhabbares Modul vor, was in Fig. 33 dargestellt ist. Aufgrund des speziellen Aufbaus der der Feder-/Dämpfereinrichtung D_{P} bleibt dabei auch die Käfigfeder S_{T} unverändert gespannt und justiert, ebenso die radial innerhalb der Käfigfeder S_{T} angeordnete und in den Figuren nicht sichtbare Dämpfereinrichtung. Aufbau und Funktion der Feder-/Dämpfereinrichtung D_{P} sind nicht Gegenstand der vorliegenden Offenbarung, sondern können weiteren Schutzrechtsanmeldungen der Anmelderin entnommen werden, beispielsweise der deutschen Patentanmeldung DE102020209370A1.

Wie in Fig. 31 bis 34 erkennbar, wird die Feder-/Dämpfereinrichtung D_{P} mit dem Aufnahmegehäuse R_{H} des Basiselements K_{B} mittels eines mehrgängigen Gewindes T_{E}, Tᵢ verbunden. Beim dargestellten Ausführungsbeispiel handelt es sich um ein dreigängiges Gewinde T_{E}, Tᵢ, was insbesondere aus der Darstellung von Fig. 34 hervorgeht, die einen Blick in das Innere des Aufnahmegehäuses R_{H} des Basiselements K_{B}, bei entfernter Feder-/Dämpfereinrichtung, zeigt.

Mittels Zusammenschau von Fig. 31, 33 und 34 wird eine besondere Eigenschaft des dreigängigen Gewindes T_{E}, Tᵢ der dargestellten Ausführungsform deutlich. Bei dem dreigängigen Gewinde T_{E}, Tᵢ wurde in dem Gewindebereich To sowohl beim Außengewinde T_{E} als auch beim Innengewinde Tᵢ jeweils einer der Gewindegänge weggelassen. Dies bedeutet mit anderen Worten, dass die verbleibenden beiden Gewindegänge T_{S1} und T_{S2} der hier eigentlich dreigängigen Gewindepaarung T_{E}, Tᵢ sowohl in Axialrichtung gemäß Fig. 31 als auch in Umfangsrichtung gemäß Fig. 32, jeweils bezogen auf die Schwenkachse A_{P} der Kettenkäfigeinrichtung C_{G} (vgl. Fig. 2, 3 oder 6) nicht gleichmäßig voneinander beabstandet angeordnet sind.

Dies führt vorteilhafterweise dazu, dass die Gewindepaarung T_{E}, Tᵢ nicht in in den für ein dreigängiges Gewinde üblichen drei verschiedenen, um 120 Winkelgrad voneinander entfernten rotatorischen Relativpositionen ineinander einschraubbar ist, sondern nur in einer rotatorischen Relativposition, bei der es sich um die konstruktiv vorgesehene, korrekte rotatorische Relativposition von Feder-/Dämpfereinrichtung D_{P} und Aufnahmegehäuse R_{H} des Basiselements K_{B} handelt. Auf diese Weise lassen sich Fehlmontagen des Kettenführungseinrichtungs-Moduls Mc mit der daran angeordneten Feder-/Dämpfereinrichtung D_{P} zuverlässig vermeiden.

Fig. 35 zeigt drei verschieden aufgebaute Feder/Dämpfereinrichtungen D_{P1}, D_{P2}, D_{P3} für ein modulares Schaltwerk R_{D} ähnlich Fig. 2 oder Fig. 26. Die in Fig. 35 gezeigten Komponenten sind dabei zumindest teilweise schematisch und nicht maßstabsgetreu dargestellt.

Die Feder/Dämpfereinrichtungen D_{P1}, D_{P2}, D_{P3} sind in der Darstellung von Fig. 35 in drei ebenfalls verschieden aufgebaute bzw. geformte Aufnahmegehäuse R_{H1}, R_{H2}, R_{H3} eingebaut. Bei den unterschiedlichen Feder/Dämpfereinrichtungen D_{P1-3} kann es sich um verschiedenste Dämpfermodule wie beispielsweise Dämpfer mit Tellerfederpaket W_{B} und Rollenfreilauf R_{F} (Fig. 35 Mitte), Dämpfer mit drehrichtungsgebunden dämpfenden Schlingfedern W_{S} (Fig. 35 links und rechts) oder hydraulische Dämpfer (nicht abgebildet) handeln.

In Übereinstimmung mit dem hierarchisch zumindest zweistufig modularen Baukastensystem M_{CS} nach der vorliegenden Offenbarung liegen die drei unterschiedlichen Feder/Dämpfereinrichtungen D_{P1}, D_{P2}, D_{P3} in Form von modular austauschbaren und einstückig handhabbaren (vgl. Fig. 31 und 32) Baugruppen G vor, in diesem Fall von drei (P1-P3) ersten (G1) Baugruppen G1_{P1}, G1_{P2}, G1_{P3}, die (P) dem Schaltungselement-Modul M_{P} zugeordnet sind, vgl. die Übersichtsdarstellung des Baukastensystems M_{CS} in Fig. 7 mit dem Schaltungselement-Modul M_{P} links oben, welche ebenfalls eine Feder/Dämpfereinrichtung D_{P1} als erste Baugruppe G1_{P} des Schaltungselement-Moduls M_{P} zeigt.

Wie in Fig. 7 gezeigt, enthält das Schaltungselement-Modul M_{P} bei der dort dargestellten Ausführungsform des Baukastensystems M_{CS} eine Feder/Dämpfereinrichtung D_{P} und ein Aufnahmegehäuse R_{H} als Baugruppen G_{P} des Moduls M_{P}. Sowohl die Feder/Dämpfereinrichtung D_{P} als auch das Aufnahmegehäuse R_{H} sind dabei einstückig handhabbar, vgl. Fig. 31 und 32.

Gemäß Fig. 35 bilden ferner sowohl die drei Feder/Dämpfereinrichtungen D_{P1}, D_{P2} und D_{P3}, als auch die drei Aufnahmegehäuse R_{H1}, R_{H2}, und R_{H3} jeweils Baugruppenfamilien S_{C1}, S_{C2} des Schaltungselement-Moduls M_{P}, vgl. analog die gemäß Fig. 7 zwei Familienmitglieder S_{B1}, S_{B2} umfassende Familie S_{B} aus ersten Baugruppen G1_{B1}, G1_{B2} des Basiselement-Moduls M_{B}.

In Fig. 35 sind die beiden Baugruppenfamilien S_{C1}, S_{C2} des Schaltungselement-Moduls M_{P}, welches dem P-Knuckle bzw. Schaltungselement K_{P} des Schaltwerks R_{D} entspricht, in Übereinstimmung mit der Darstellung der Baugruppenfamilie S_{B} in Fig. 7, mit punktierten Linien umrahmt (S_{C1}) bzw. darstellungshalber markiert (S_{C2}).

Nach Fig. 7 zeigt Fig. 35 damit ein weiteres Beispiel für das hierarchisch zumindest zweistufig modulare Baukastensystem M_{CS} gemäß der vorliegenden Offenbarung. Bei dem Ausführungsbeispiel gemäß Fig. 35 liegt dabei die erste Stufe der hierarchisch zumindest zweistufigen Modularität in den einstückig handhabbaren und gegeneinander austauschbaren Modulen M_{P1}, M_{P2} und M_{P3}, welche drei verschiedene B-Knuckles bzw. Schaltungselemente K_{P1}, K_{P2} und K_{P3} mit modulübergreifend identischen Schnittstellen C_{CP} zu Nachbarmodulen (vgl. Fig. 7), und damit eine Modulfamilie F_{P} bilden (hinsichtlich der Einstückigkeit bzw. einteiligen Handhabbarkeit der Schaltungselemente K_{P} bzw. Schaltungselement-Module M_{P} vgl. Fig. 7, Fig. 31 und 32). Der Umfang der Modulfamilie F_{P}, hier umfassend die einstückig handhabbaren und gegeneinander austauschbaren P-Knuckle- bzw. Schaltelement-Module M_{P1}, M_{P2} und M_{P3}, ist in Fig. 35 durch die dickere strichlierte Linie F_{P} visualisiert.

Die zweite Stufe der hierarchisch zumindest zweistufigen Modularität des Baukastensystem M_{CS} wird mit den ebenfalls einstückig handhabbaren und modular gegeneinander austauschbaren drei (P1-P3) ersten (G1) Schaltungselement-(P)-Baugruppen G1_{P1}, G1_{P2} und G1_{P3}, bzw. mit den drei (P1-P3) zweiten (G2) Schaltungselement-(P)-Baugruppen G2_{P1}, G2_{P2} und G3_{P3} verwirklicht, welche jeweils Feder-/Dämpfereinrichtungen D_{P} bzw. Aufnahmegehäuse R_{H} eines Schaltungselement-Moduls M_{P} bilden (hinsichtlich der Einstückigkeit bzw. einteiligen Handhabbarkeit auch der Feder-/Dämpfereinrichtungen D_{P} sowie der Aufnahmegehäuse R_{H} vgl. wieder Fig. 7, Fig. 31 und 32).

Mit den baugruppenübergreifend identischen Schnittstellen C_{iP1}, C_{iP2} C_{iP3}, C_{iP4} (vgl. Fig. 31 bis 34) zu den jeweiligen Nachbar-Baugruppen G_{P} desselben Moduls M_{P} (vgl. Fig. 7 und Fig. 31 bis 34) und mit ebenfalls baugruppenübergreifend identischen Schnittstellen C_{CP1}, C_{CP2} (vgl. Fig. 7) und C_{CP3} zu den Nachbarmodulen M_{S} und Mc bilden die Baugruppen G1_{P1-3} und G2_{P1-3} zwei Baugruppenfamilien S_{C1} und S_{C2} innerhalb des Schaltungselement-Moduls M_{P}.

Somit stehen bei der Ausführungsform gemäß Fig. 35 drei verschiedene Feder-/Dämpfereinrichtungen D_{P1}, D_{P2}, D_{P3} und drei verschiedene Basiselement-Aufnahmegehäuse R_{H1}, R_{H2}, R_{H3} zur Verfügung, die innerhalb des Schaltungselement-Moduls M_{P} beliebig austauschbar bzw. modular miteinander kombinierbar sind, was bereits zu neun verschiedenen möglichen Kombinationen und damit unterschiedlichen Ausführungen des Schaltungselement-Moduls M_{P} führt. Ähnliches gilt jeweils für die anderen Module Basiselement-Modul M_{B}, Schwenkanordnungs-Modul M_{S}, Kettenführungseinrichtungs-Modul Mc und Elektrik-Modul M_{E} (vgl. Fig. 7).

Damit wird erkennbar, dass dank der hierarchisch zumindest zweistufigen Modularität des Schaltwerks R_{D} bzw. des Baukastensystem M_{CS} gemäß der vorliegenden Offenbarung eine Vielzahl an Varianten des Schaltwerks R_{D} gebildet werden kann, wodurch sich auf einfache Weise Schaltwerke mit unterschiedlichsten Produkteigenschaften und -fähigkeiten sowie mit verschiedensten Material- und Oberflächenqualitäten darstellen lassen. Hiermit lässt sich das Schaltwerk R_{D} modular weitestgehend frei an die Anforderungen unterschiedlichster Marktsegmente und Kundengruppen anpassen.

Ebenso wird auf diese Weise die angestrebte einfache Reparierbarkeit des Schaltwerk R_{D} realisiert. Es muss nicht mehr das gesamte Schaltwerk ausgetauscht werden, wenn ein Modul oder eine Baugruppe beschädigt oder defekt ist, sondern das entsprechende Modul oder die entsprechende Baugruppe kann von verschiedensten Anwendergruppen bis hin zum Endkunden sehr einfach repariert bzw. ausgetauscht werden. Ebenfalls kann der Kunde bzw. ein Besitzer eines derartigen Schaltwerks R_{D} sein Schaltwerk je nach Bedarf mit Zusatzfunktionen oder höherwertigen Baugruppen G bzw. Modulen M ausstatten, ohne das gesamte Schaltwerk austauschen zu müssen. Dies führt insgesamt zu einem erheblich geringeren Material- und Ressourcenverbrauch während des auf diese Weise zudem fast beliebig verlängerbaren Lebenszyklus des Schaltwerks R_{D}.

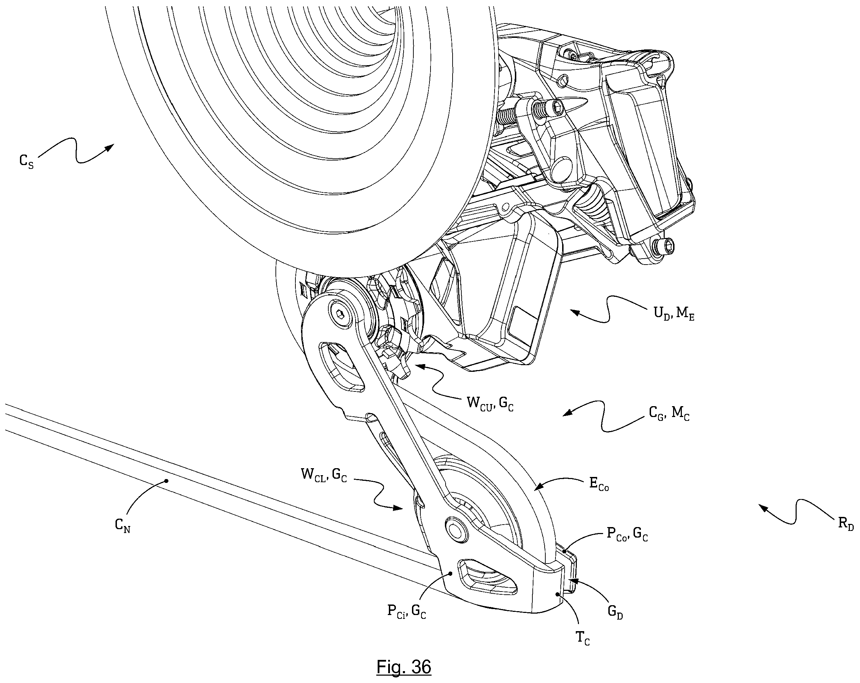

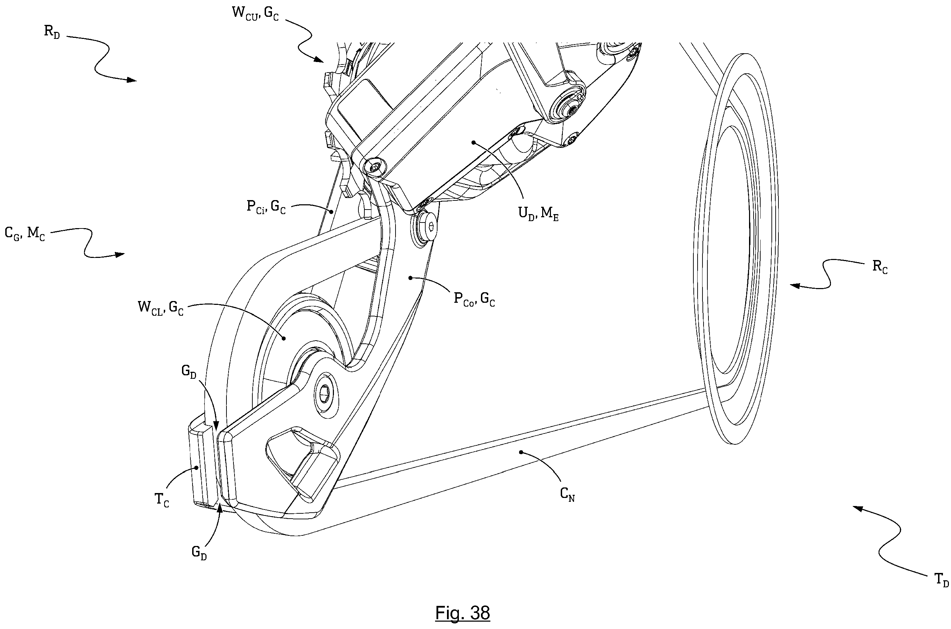

Fig. 36, 38 und 39 zeigen eine weitere Ausführungsform eines elektrischen Fahrradschaltwerks R_{D}. Dieses Fahrradschaltwerk R_{D} ist mit einer unteren Kettenspannrolle W_{CL} versehen, welche keine Verzahnung aufweist.

Aufgrund der bei der Kettenspannrolle W_{CL} weggelassenen Verzahnung kann es nicht mehr vorkommen, dass die Kette C_{N} auf den Zähnen der Kettenspannrolle W_{CL} aufreitet, wie dies beim Stand der Technik (vgl. Fig. 36) der Fall ist. Aus diesem Grund muss die Kettenführungseinrichtung C_{G} beim Stand der Technik zwischen der unteren Kettenspannrolle W_{CL} und einem den Kettenkäfig verschließenden Kettenkäfig-Tab Tc einen genügend großen Tab-Abstand D_{T} von den Zähnen der Kettenspannrolle W_{CL} bzw. von der Außen-Hüllfläche Eco der Kette C_{N} aufweisen. Der Tab-Abstand D_{T} muss so groß sein, dass die Kette C_{N} auch dann noch zwischen dem Kettenkäfig-Tab Tc und der unteren Kettenspannrolle W_{CL} passieren kann, falls die Kette C_{N} auf den Zahnspitzen der Kettenspannrolle W_{CL} aufreitet, da ein Verklemmen der Kette im Kettenkäfig leicht zu einem Schaltwerksabriss führen kann.

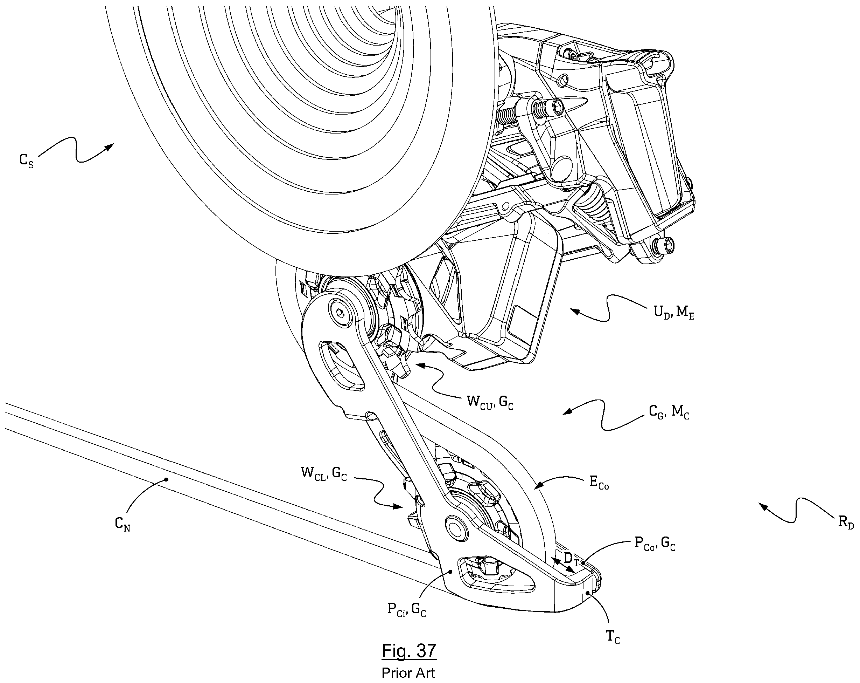

Bei dem Fahrradschaltwerk R_{D} gemäß Fig. 35, 37 und 38, welches eine glatte, nicht verzahnte untere Kettenspannrolle W_{CL} aufweist, weist die Kette C_{N} eine stets konstante radiale Abstandsposition von der Kettenspannrolle W_{CL} auf. Daher kann der Kettenkäfig-Tab Tc deutlich näher bzw. unmittelbar an der Außen-Hüllfläche Eco der Kette C_{N} positioniert werden, was außer aus Fig. 35 besonders deutlich auch aus Fig. 37 hervorgeht. Hierdurch ergibt sich in allen Fahrbedingungen eine verbesserte und sicherere Führung des Leertrums der Kette C_{N} beim Einlauf in das Schaltwerk R_{D}.

Vorzugsweise wird der Kettenkäfig-Tab Tc bei dieser Ausführungsform so ausgebildet, dass ein erheblicher Spalt G_{D} zwischen dem Kettenkäfig-Tab Tc und der gegenüberliegenden Kettenkäfig-Leitblecheinrichtung P_{Co} verbleibt, was ebenfalls aus Fig. 35 und 37 entnommen werden kann. Dieser Spalt ermöglicht es, dass an der Kette anhaftende Verschmutzungen oder beispielsweise mitgeführte Pflanzenteile wie kleine Äste etc. wieder leicht aus dem Kettenkäfig ausgestoßen werden können, ohne diesen zu verstopfen, was andernfalls zu einem Schaltwerksabriss führen könnte.

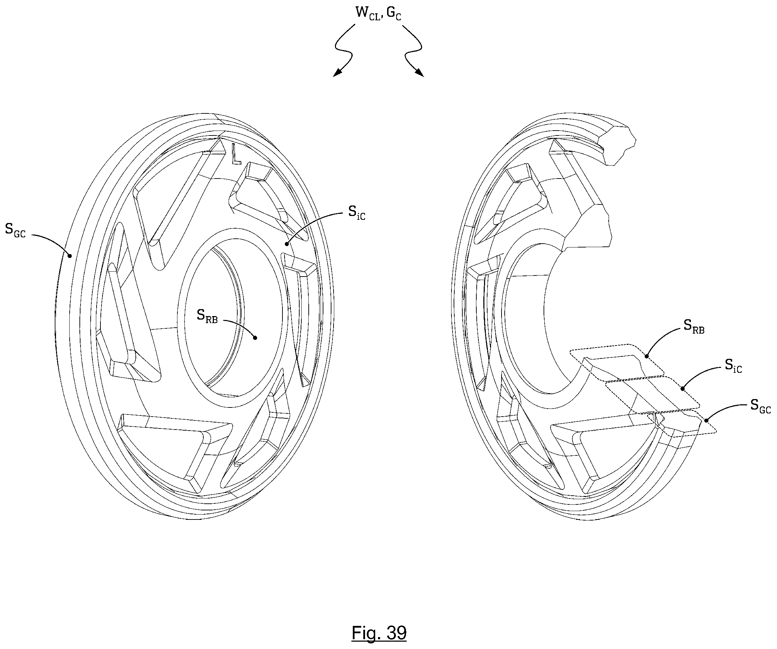

Fig. 39 zeigt die untere Kettenspannrolle W_{CL} der Schaltwerks-Ausführungsform gemäß Fig. 35, 37 und 38 nochmals separat. Man erkennt einen radial innen angeordneten Lageraufnahmebereich S_{RB} zur Anordnung eines Gleit- oder Kugellagers, einen nicht verzahnten, glatten Kettenführungsbereich S_{GC} sowie einen Verbindungsstruktur-Bereich S_{IC}, welcher Lageraufnahmebereich S_{RB} und Kettenführungsbereich S_{GC} miteinander verbindet.

Da die untere Kettenspannrolle W_{CL} lediglich der Vorspannung der Kette C_{N} dient und nicht, wie die obere Kettenspannrolle Wcu, spezifische seitliche Kettenführungsaufgaben insbesondere beim Schaltvorgang erfüllen muss, ist das Weglassen der Verzahnung bei der unteren Kettenspannrolle W_{CL} mit keinen Nachteilen verbunden.

## Patentansprüche

1. Motor-Getriebeeinheit (AG) für ein Fahrrad-Schaltwerk (RD) mit einem Basiselement (KB), die Motor-Getriebeeinheit (AG) umfassend ein Gehäuse (SH1, SH2), das einen Elektromotor (EM) und eine Getriebeanordnung (SGx) umschließt, **dadurch gekennzeichnet,**
**dass** das Gehäuse (SH1, SH2) zur Verbindung mit dem Basiselement (KB) durch genau eine rotatorische Achsverbindung (CR) und genau zwei translatorische Anschlagsverbindungen (CT1, CT2) konfiguriert ist dergestalt, dass bei der Verbindung eine Festlegung aller sechs Bewegungsfreiheitsgrade der Motor-Getriebeeinheit (AG) relativ zum Basiselement (KB) im dreidimensionalen Raum erfolgt, ohne dass die Festlegung statisch unter- oder überbestimmt ist.

2. Motor-Getriebeeinheit (AG) nach Anspruch 1,
**dadurch gekennzeichnet,**
**dass** die rotatorische Achsverbindung (CR) zylindrische Gehäuseabsätze (BH) an dem Gehäuse (SH1, SH2) umfasst, wobei die translatorischen Anschlagsverbindungen (CT1, CT2) jeweils ein Paar einander gegenüberliegender Anlageflächen (CT1, CT2) an dem Gehäuse (SH1, SH2) umfassen.

3. Motor-Getriebeeinheit (AG für ein Fahrrad-Schaltwerk (RD) mit einem Basiselement (KB), die Motor-Getriebeeinheit (AG) umfassend ein Gehäuse (SH1, SH2), das einen Elektromotor (EM) und eine Getriebeanordnung (SGx) umschließt, sowie eine Verrastungsanordnung zur Befestigung eines Wechselakkus (UB) an einem Gehäuse (SH1, SH2) der Motor-Getriebeeinheit (AG), die Verrastungsanordnung umfassend einen Rasthebel (LL), der konfiguriert ist, unter longitudinalem Spiel (AL, HO) schwenkbar an dem Basiselement (KB) gehalten zu werden, der Rasthebel (LL) aufweisend eine Anlagefläche (SA1), die zur Anlage an einer Gegendruckfläche (SA2) an dem Gehäuse (SH1, SH2) konfiguriert ist, sowie einen Nasenvorsprung (NP2), der zum Eingriff mit einer Rasterhebung (PL) an dem Wechselakku (UB) konfiguriert ist,
**dadurch gekennzeichnet,**
**dass** der Rasthebel (LL) konfiguriert ist, in einem Verriegelungszustand einen das Basiselement (KB) nicht enthaltenden, geschlossenen Kraftübertragungspfad (SA1, SA2, SH1, SH2, UB, PL, NP2, LL) über Anlagefläche (SA1), Gegendruckfläche (SA2), Gehäuse (SH1, SH2), Wechselakku (UB), Rasterhebung (PL) und Nasenvorsprung (NP2) zu bilden dergestalt, dass eine Spannkraft (FE) unmittelbar zwischen dem Wechselakku (UB) und dem Gehäuse (SH1, SH2) erzeugbar ist.

4. Motor-Getriebeeinheit (AG) nach Anspruch 3,
**dadurch gekennzeichnet,**
**dass** der Rasthebel (LL) konfiguriert ist, an dem Basiselement (KB) über ein Langloch (HO) gehalten zu werden, das eine geführte Verschiebung des Rasthebels (LL) entlang der Längsachse des Rasthebels (LL) ermöglicht dergestalt, dass Maßtoleranzen zwischen Basiselement (KB), Gehäuse (SH1, SH2) und Rasthebel (LL) kompensierbar sind.

5. Motor-Getriebeeinheit (AG) nach Anspruch 3 oder 4,
**dadurch gekennzeichnet,**
**dass** die Anlagefläche (SA1) des Rasthebels (LL) und die formkorrespondierende Gegendruckfläche (SA2) des Gehäuses (SH1, SH2) schräg zur Längsachse des Rasthebels (LL) orientiert sind dergestalt, dass bei einem Abschluss der Verriegelungsbewegung des Rasthebels (LL) eine definierte Spannkraft entlang der Längsachse des Rasthebels (LL) erzeugbar ist.

6. Motor-Getriebeeinheit (AG) nach einem der Ansprüche 1-5, wobei das Gehäuse (SH1, SH2) zumindest zwei Gehäuseteile (SH1, SH2) umfasst, die zur Umschließung von Elektromotor (EM) und Getriebeanordnung (SGx) eingerichtet sind, und wobei der Elektromotor (EM) konfiguriert ist, bei einem Montagevorgang in dem Gehäuse (SH1, SH2) mittels einer Trägerblecheinrichtung (PD) befestigt zu werden, die zusammen mit dem Motor (EM) eine Vormontageeinheit (EM, PD) bildet,
**dadurch gekennzeichnet,**
**dass** zumindest eines der Gehäuseteile (SH1, SH2) prismatisch ausgeformte Steckaufnahmen (MR) aufweist, die konfiguriert sind, die Trägerblecheinrichtung (PD) aufzunehmen und die Vormontageeinheit (EM, PD) bei dem Montagevorgang in eine Montage-Endposition zu führen dergestalt, dass eine selbsttätige Endausrichtung und Fixierung der Vormontageeinheit (EM, PD) in dem Gehäuse (SH1, SH2) ohne zusätzliche Justierung erfolgt.

7. Motor-Getriebeeinheit (AG) nach Anspruch 6,
**gekennzeichnet durch**
eine Federeinrichtung (DS), die konfiguriert ist, bei einer Zusammenfügung der Gehäuseteile (SH1, SH2) eine definierte Vorspannkraft auf die Trägerblecheinrichtung (PD) auszuüben dergestalt, dass die Vormontageeinheit (EM, PD) nach der Zusammenfügung spielfrei in dem Gehäuse (SH1, SH2) fixiert ist.

8. Motor-Getriebeeinheit (AG) nach Anspruch 6 oder 7,
**gekennzeichnet durch**
eine in einem getriebeabgewandten Bereich des Elektromotors (EM) anordenbare Zusatzhalterung (AF), die konfiguriert ist, den Elektromotor (EM) zusammen mit der Trägerblecheinrichtung (PD) zu fixieren dergestalt, dass eine ungewollte Bewegung des Elektromotors (EM) in dem Gehäuse (SH1, SH2) unterbunden ist.

9. Motor-Getriebeeinheit (AG) nach einem der Ansprüche 1-8, ferner umfassend eine Getriebeeinrichtung mit einem federbelasteten Doppel-Stirnzahnrad (SG5B) zur spielfreien Drehmomentübertragung sowie eine magnetische Codiereinrichtung mit einem Magnetelement (CM) zur Ermittlung der Drehwinkelposition des Doppel-Stirnzahnrads (SG5B),
**dadurch gekennzeichnet,**
**dass** das Magnetelement (CM) in das Doppel-Stirnzahnrad (SG5B) eingebettet ist.

10. Motor-Getriebeeinheit (AG) nach Anspruch 9,
**dadurch gekennzeichnet,**
**dass** das Magnetelement (CM) in eine innenzylindrische Aufnahmefläche (RA3) des Doppel-Stirnzahnrads (SG5B) eingebettet ist dergestalt, dass eine starre Drehpositionsbeziehung zwischen Magnetelement und Doppel-Stirnzahnrad (SG5B) gebildet ist.

11. Motor-Getriebeeinheit (AG) nach Anspruch 9 oder 10,
**dadurch gekennzeichnet,**
**dass** das Doppel-Stirnzahnrad (SG5B) eine Spannfeder (FT) und zwei axial geteilte Zahnradhälften (SG5B1, SG5B2) umfasst, die zur Zusammenfügung mittels einer Rastverbindung (EE, EP) konfiguriert sind dergestalt, dass sie nach der Zusammenfügung eine vormontierte Einheit (SG5B) bilden, wobei die Zahnradhälften (SG5B1, SG5B2) zur Eliminierung von Zahnspiel durch die vorgespannte Spannfeder (FT) rotatorisch gegeneinander verspannt sind.

12. Motor-Getriebeeinheit (AG) nach Anspruch 11
**dadurch gekennzeichnet,**
**dass** die Spannfeder (FT) zwischen den Zahnradhälften (SG5B1, SG5B2) eingebettet ist, um eine kompakte, vormontierte Einheit (SG5B) zu bilden, die Handhabung, Platzeffizienz und Getriebebaugruppenmontage erleichtert.

13. Motor-Getriebeeinheit (AG) nach einem der Ansprüche 1-12,
**gekennzeichnet durch**
eine Schutzvorrichtung, die als Biegefeder (SF) konfiguriert ist, um Kontaktpins (CP) der Motor-Getriebeeinheit (AG) vor seitlichen Stößen während der Wechselakku-Installation abzuschirmen.

14. Motor-Getriebeeinheit (AG) nach einem der Ansprüche 1-13, ferner umfassend eine Betätigungseinrichtungsbaugruppe (OC), umfassend einen Betätigungstaster (BM) für eine Benutzerinteraktion, eine starre Abdeckmuffe (FS) und eine Elastomeraufnahme (RE),
**dadurch gekennzeichnet,**
**dass** der Betätigungstaster (BM) axial beweglich zwischen Abdeckmuffe (FS) und Elastomeraufnahme (RE) eingeschlossen ist, wobei die Betätigungseinrichtungsbaugruppe (OC) konfiguriert ist, ohne zusätzliche Befestigungskomponenten in einen Gehäusedurchbruch (PH) des Gehäuses (SH1, SH2) eingepresst zu werden und dabei durch radiale Presspassung zwischen Abdeckmuffe (FS), Elastomeraufnahme (RE) und Gehäusedurchbruch (PH) zusammengehalten zu werden.
